# EUROPEAN PATENT APPLICATION

(11) **EP 4 436 307 A1**
(43) Date of publication of application: **25.09.2024**
(21) Application number: 23737414.5
(22) Date of filing: 05.01.2023
(51) Int. Cl.: H04W 76/27, H04W 76/15, H04W 72/23, H04L 5/00

(54) **METHOD AND DEVICE FOR EFFECTIVELY PROCESSING CONTROL INFORMATION FOR SUPPORTING CELL GROUP ACTIVATION OR DEACTIVATION IN NEXT GENERATION MOBILE COMMUNICATION SYSTEM**

(30) Priority: 05.01.2022 KR 20220001703
(71) Applicant: Samsung Electronics Co., Ltd., Suwon-si, Gyeonggi-do 16677 (KR)
(72) Inventor: KIM, Donggun, Suwon-si, Gyeonggi-do 16677 (KR)
(74) Representative: Gulde & Partner
(86) International application number: PCT/KR2023/000245
(87) International publication number: WO 2023/132666

(57) **Abstract**

The disclosure relates to a 5G or 6G communication system for supporting a higher data transmission rate.

According to an embodiment of the present disclosure, proposed is a method for reducing processing latency which may occur when CA or DC configured for a terminal is activated or deactivated.

## Description

### [Technical Field]

The disclosure relates to a method and a device capable of quickly activating a cell in a next-generation mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, there has been a need for a method for preventing processing delay which may occur when carrier aggregation (CA) or dual connectivity (DC) is configured for a UE which is configured network connection and then activated, or when the CA or DC is used and then deactivated.

### [Disclosure of Invention]

### [Technical Problem]

In a next-generation mobile communication system, carrier aggregation (CA) or dual connectivity (DC) may be used to provide UEs with a service having a high data transmission rate and a low level of transmission delay. However, there is a need for a method for preventing processing delay which may occur when CA or DC is configured for a UE which is configured network connection and then activated, or when the CA or DC is used and then deactivated. For example, if a UE maintains multiple cells activated in order to use the CA or DC, the UE needs to perform PDCCH monitoring regarding each cell, and the UE's battery consumption may thus become severe. On the other hand, if the multiple cells are maintained deactivated in order to reduce the UE's battery consumption, data transmission/reception may be delayed due to the delay occurring when the multiple cells are activated by using the CA or DC. In the above description, or in the disclosure, a cell may refer to a PCell or an SCell (for example, an SCell configured in a master cell group (MCG)) or a PSCell (for example, a PCell of a secondary cell group (SCG)) or an SCell (for example, an SCell configured in a secondary cell group (SCG)). Accordingly, an aspect of the disclosure is to propose a scheme for preventing processing delay which may occur when CA or DC configured for a UE is activated or deactivated.

### [Solution to Problem]

In order to solve the above-mentioned problems, a method of a UE in a wireless communication system according to an embodiment of the disclosure may include receiving, from a base station, a MAC CE for indicating activation or deactivation of at least one secondary cell (SCell), a first SCell being configured a TRS for a fast activation, identifying that an activation of the first SCell if indicated, based on the MAC CE, and activating the first SCell without using the TRS in case that the first SCell is in a deactivated state before receiving the MAC CE.

A method of a base station in a wireless communication system according to another embodiment of the disclosure may include receiving, from a UE, capability information indicating whether a fast activation is supported with regard to a specific SCell, transmitting, based on the capability information, configuration information of a TRS for a fast activation with regard to a first SCell to the UE, and transmitting a MAC CE for indicating activation or deactivation of at least one secondary cell (SCell) to the UE, wherein the first SCell is activated without using the TRS in case of identifying that an activation of the first SCell is indicated, based on the MAC CE, by the UE, and in case that the first SCell is in a deactivated state before receiving the MAC CE.

A UE in a wireless communication system according to another embodiment of the disclosure may include a transceiver and a controller configured to receive a MAC CE for indicating activation or deactivation of at least one secondary cell (SCell) from a base station through the transceiver, a first SCell being configured a TRS for a fast activation, identify that an activation of the first SCell is indicated, based on the MAC CE, , and control the first SCell to be activated without using the TRS in case that the first SCell is in a deactivated state before receiving the MAC CE.

A base station in a wireless communication system according to another embodiment of the disclosure may include a transceiver and a controller configured to receive capability information indicating whether a fast activation is supported with regard to a specific SCell from a UE through the transceiver, transmit, based on the capability information, configuration information of a TRS for a fast activation with regard to a first SCell to the UE, and control a MAC CE for indicating activation or deactivation of at least one secondary cell (SCell) to be transmitted to the UE, wherein the first SCell is activated without using the TRS in case of identifying that an activation of the first SCell is indicated, based on the MAC CE, by the UE, and in case that the first SCell is in a deactivated state before receiving the MAC CE.

### [Advantageous Effects of Invention]

The disclosure proposes a new dormant mode or suspension mode or deactivated mode such that an RRC connected mode UE having configured connection to a network in a next-generation mobile communication system can quickly activate or deactivate carrier aggregation or dual connectivity. The disclosure proposes a method in which a new hibernation or dormancy or suspension mode can be operated at a bandwidth part level or at a cell level or at a cell group level (for example, with regard to a secondary cell group) such that carrier aggregation or dual connectivity can be quickly activated, and the UE's battery can be saved. In addition, when the base station instructs the UE to activate a cell (PCell or PSCell or SCell), a large amount of transmission resources is temporarily configured or allocated or sent such that the UE can perform channel measurement, and the UE quickly reports the channel measurement result to the base station such that, or based on the channel measurement, the cell can be quickly activated.

### [Brief Description of Drawings]

FIG. 1 illustrates a structure of an LTE system to which the disclosure is applicable.
FIG. 2 illustrates a radio protocol structure in an LTE system to which the disclosure is applicable.
FIG. 3 illustrates a structure of a next-generation mobile communication system to which the disclosure is applicable.
FIG. 4 illustrates a radio protocol structure of a next-generation mobile communication system to which the disclosure is applicable.
FIG. 5 illustrates a procedure of providing a service to a UE by efficiently using a substantially wide frequency bandwidth in a next-generation mobile communication system of the disclosure.
FIG. 6 illustrates a procedure in which a UE switches from an RRC idle mode to an RRC connected mode in a next-generation mobile communication system of the disclosure, and in which bearer configuration information for connection or cell group or cell configuration information or channel measurement configuration information is configured for the UE.
FIG. 7 illustrates a bandwidth part-specific state transition or bandwidth part switching procedure proposed in the disclosure.
FIG. 8 illustrates a method for configuring DRX or operating DRX such that a UE's battery can be saved, proposed in the disclosure.
FIG. 9 illustrates the concept of a method for operating a dormant bandwidth part in an activated SCell or PSCell, proposed in the disclosure.
FIG. 10 illustrates a first MAC CE proposed in the disclosure to indicate activation or deactivation of each SCell to a UE which is configured multiple SCells in the disclosure (SCell activation/deactivation MAC CE). The UE may indicate, based on first channel measurement configuration information (for example, information including a temporary reference signal or a tracking reference signal (TRS)), a UE which does not support quick SCell activation (for example, a Release 15 (or 16) UE or a UE implemented based on Release 15 (or 16) specifications), by using UE capability.

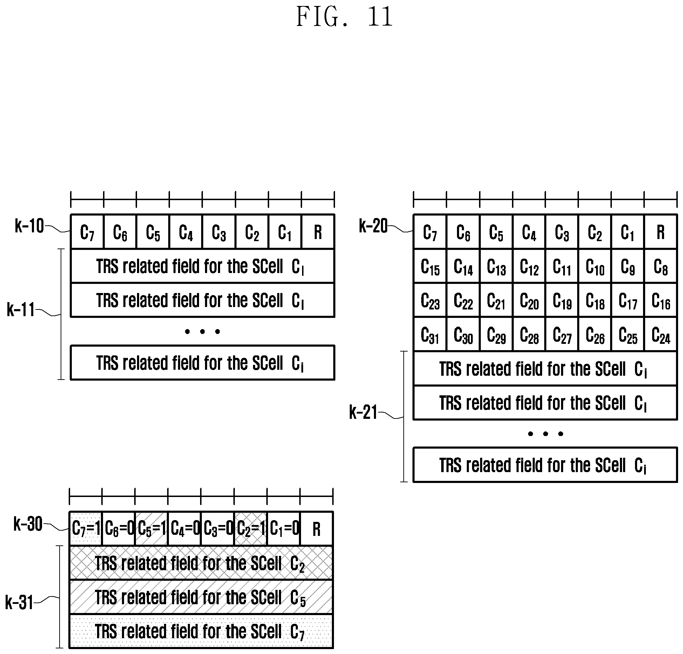

FIG. 11 illustrates a second embodiment of a second MAC CE for indicating activation or deactivation of an SCell or activation or deactivation of the SCell based on first channel measurement configuration information to a UE which is configured first channel measurement configuration information (for example, information including a tracking reference signal or a temporary reference signal (TRS)) according to an embodiment of the disclosure, or which is configured multiple SCells (SCell activation/deactivation with TRS activation MAC CE). The UE may indicate, based on first channel measurement configuration information (for example, information including a temporary reference signal (TRS)), a UE which supports quick SCell activation (for example, a Release 17 or beyond Release 17 UE or a UE implemented based on Release 17 specifications or beyond Release 17 specifications), by using UE capability.

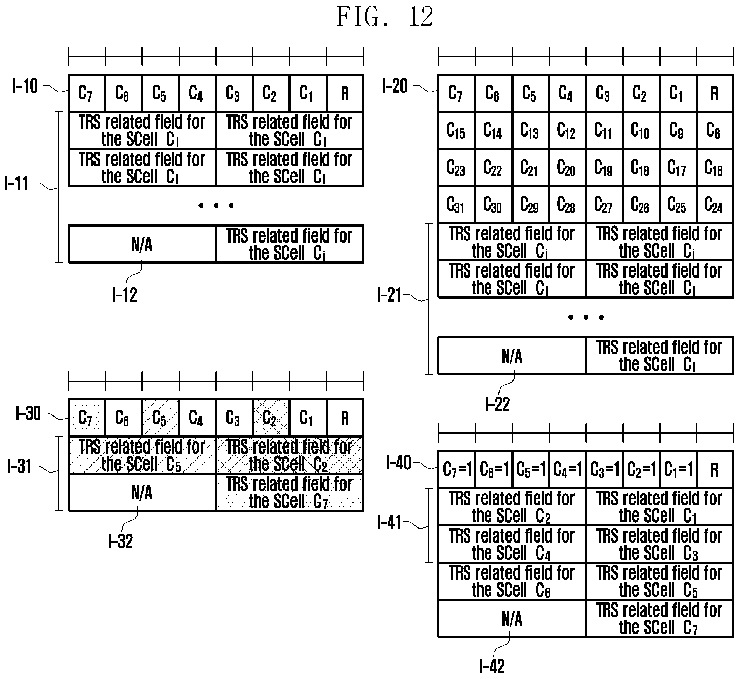

FIG. 12 illustrates a third embodiment of a second MAC CE for indicating activation or deactivation of an SCell or activation or deactivation of the SCell based on first channel measurement configuration information to a UE which is configured first channel measurement configuration information (for example, information including a tracking reference signal or a temporary reference signal (TRS)), or which is configured multiple SCells (SCell activation/deactivation with TRS activation MAC CE) according to an embodiment of the disclosure. The UE may indicate, based on first channel measurement configuration information (for example, information including a temporary reference signal (TRS)), a UE which supports quick SCell activation (for example, a Release 17 or beyond Release 17 UE or a UE implemented based on Release 17 specifications or beyond Release 17 specifications), by using UE capability.
FIG. 13 illustrates a ninth embodiment in which embodiments proposed in the disclosure are expanded and applied to an RRC deactivated mode UE.
FIG. 14 illustrates operations of a UE proposed in the disclosure.
FIG. 15 illustrates a signaling procedure in which DC is configured or released in a next-generation mobile communication system of the disclosure, or in which a secondary cell group configured by DC is activated or resumed or suspended or deactivated.
FIG. 16 illustrates a second signaling procedure in which DC is configured or released, or in which a secondary cell group configured by DC is configured or released or activated or resumed or suspended or deactivated.
FIG. 17 illustrates a third signaling procedure in which DC is configured or released, or in which a secondary cell group configured by DC is configured or released or activated or resumed or suspended or deactivated.
FIG. 18 illustrates operations of a UE proposed in the disclosure.
FIG. 19 illustrates the structure of a UE to which an embodiment of the disclosure is applicable.
FIG. 20 illustrates the structure of a base station (for example, TRP) in a wireless communication system to which an embodiment of the disclosure is applicable.

### [Mode for the Invention]

Hereinafter, the operation principle of the disclosure will be described in detail with reference to the accompanying drawings. In describing the disclosure below, detailed descriptions of relevant known functions or configurations will be omitted when it is determined that the descriptions may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Moreover, the "unit" in the embodiments may include one or more processors.

In the following description of the disclosure, detailed descriptions of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description of the disclosure, terms and names defined in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may indicate "gNB".

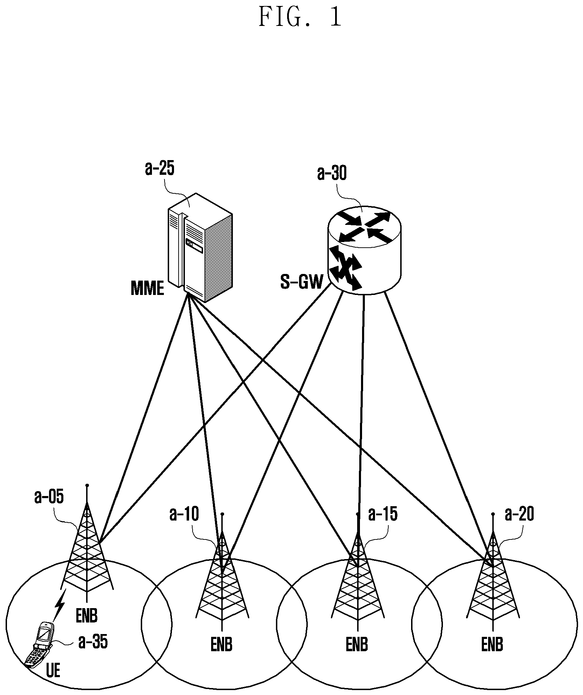

FIG. 1 illustrates a structure of an LTE system to which the disclosure is applicable.

Referring to FIG. 1, as illustrated therein, a radio access network of an LTE system includes next-generation base stations (evolved node Bs, hereinafter ENBs, node Bs, or base stations) a-05, a-10, a-15, and a-20, a mobility management entity (MME) a-25, and a serving gateway (S-GW) a-30. A user equipment (hereinafter UE or terminal) a-35 accesses an external network through the ENBs a-05, a-10, a-15, and a-20 and the S-GW a-30.

In FIG. 1, the ENBs a-05 to a-20 each correspond to a conventional node B in a UMTS system. The ENBs are connected to the UE a-35 through a radio channel, and perform more complicated roles than the conventional node Bs. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the ENBs a-05 to a-20 serve as the device. In general, one ENB controls multiple cells. For example, in order to implement a transfer rate of 100 Mbps, the LTE system uses orthogonal frequency division multiplexing (hereinafter referred to as OFDM) as a radio access technology in a bandwidth of, for example, 20 MHz. Furthermore, the next-generation mobile communication system employs an adaptive modulation & coding (hereinafter referred to as AMC) scheme for determining a modulation scheme and a channel coding rate according to a channel state of a UE. The S-GW a-30 is a device that provides a data bearer, and generates or remove a data bearer under the control of the MME a-25. The MME a-25 is responsible for various control functions as well as a mobility management function for a UE, and is connected to multiple base stations.

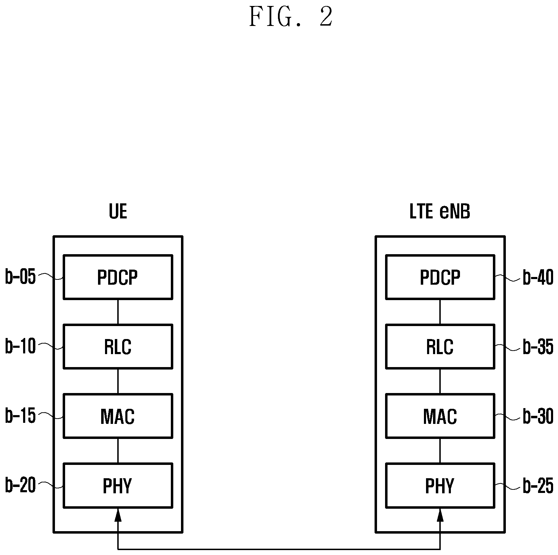

FIG. 2 illustrates a radio protocol structure in an LTE system to which the disclosure is applicable.

Referring to FIG. 2, a radio protocol of an LTE system includes a packet data convergence protocol (PDCP) b-05 or b-40, a radio link control (RLC) b-10 or b-35, and a medium access control (MAC) b-15 or b-30 in each of a UE and an ENB. The packet data convergence protocol (PDCP) b-05 or b-40 is responsible for operations such as IP header compression/reconstruction. The main functions of the PDCP are summarized as follows.
- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (hereinafter referred to as RLC) b-10 or b-35 reconfigures a PDCP protocol data unit (PDU) or an RLC service data unit (SDU) into an appropriate size to perform an ARQ operation and the like. The main functions of the RLC are summarized as follows.
- Transfer of upper layer PDUs
- Error Correction through ARQ (only for AM data transfer)
- Concatenation, segmentation and reassembly (Concatenation, segmentation and reassembly of RLC SDUs (only for UM and AM data transfer)
- Re-segmentation (Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC b-15 or b-30 is connected to several RLC layer devices configured in a single terminal, and multiplexes RLC PDUs into a MAC PDU and demultiplexes a MAC PDU into RLC PDUs. The main functions of the MAC are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer b-20 or b-25 performs channel coding and modulation of higher layer data to make the data into OFDM symbols and transmit the OFDM symbols through a wireless channel, or performs demodulation and channel decoding of OFDM symbols received through a wireless channel, and then transfers the OFDM symbols to an upper layer.

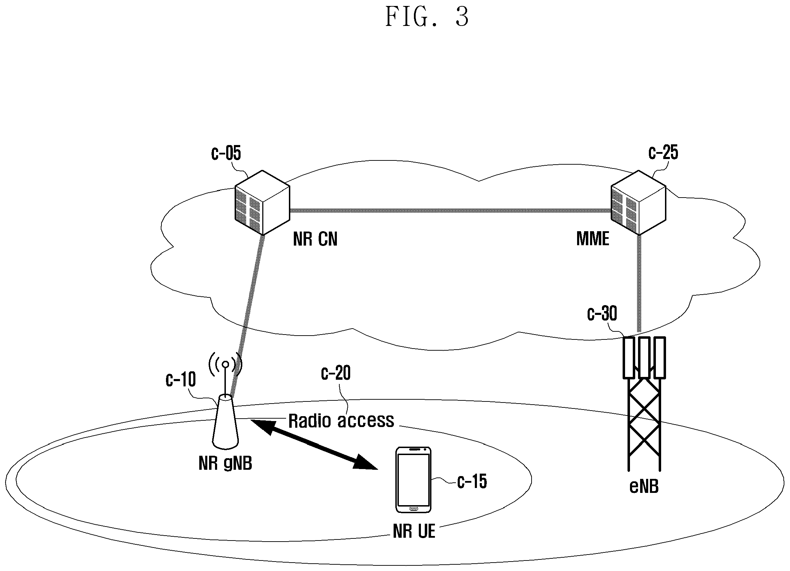

FIG. 3 illustrates a next-generation mobile communication system to which the disclosure is applicable.

Referring to FIG. 3, a radio access network of a next-generation mobile communication system (hereinafter NR or 5G) includes a next- generation base station (new radio node B, hereinafter NR gNB or NR base station) c-10, and a new radio core network (NR CN) c-05. A user terminal (new radio user equipment, hereinafter NR UE or NR terminal) c-15 accesses an external network via the NR gNB c-10 and the NR CN c-05.

In FIG. 3, the NR gNB c-10 corresponds to an evolved node B (eNB) of a conventional LTE system. The NR gNB c-10 is connected to the NR UE c-15 through a radio channel and may provide outstanding services as compared to a conventional node B. In the next-generation mobile communication system, since all user traffic is serviced through a shared channel, a device that collects state information, such as buffer statuses, available transmit power states, and channel states of UEs, and performs scheduling accordingly is required, and the NR NB c-10 serves as the device. In general, one NR gNB controls multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE. The NR CN c-05 performs functions such as mobility support, bearer configuration, and QoS configuration. The NR CN is a device responsible for various control functions as well as a mobility management function for a UE, and is connected to multiple base stations. In addition, the next-generation mobile communication system may interwork with the existing LTE system, and the NR CN is connected to an MME c-25 via a network interface. The MME is connected to an eNB c-30 that is an existing base station.

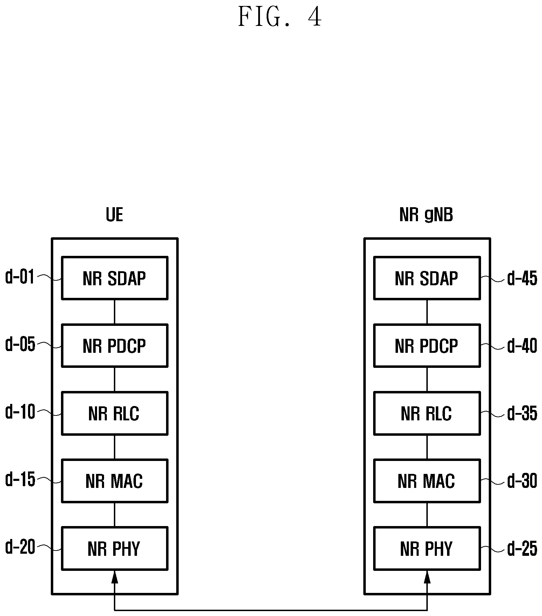

FIG. 4 illustrates a radio protocol structure of a next-generation mobile communication system to which the disclosure is applicable.

Referring to FIG. 4, a radio protocol of a next-generation mobile communication system includes an NR SDAP d-01 or d-45, an NR PDCP d-05 or d-40, an NR RLC d-10 or d-35, and an NR MAC d-15 or d-30 in each of a UE and an NR base station.

The main functions of the NR SDAP d-01 or d-45 may include some of functions below.
- Transfer of user plane data
- Mapping between a QoS flow and a DRB for both DL and UL
- Marking QoS flow ID in both DL and UL packets
- Reflective QoS flow to DRB mapping for UL SDAP PDUs

With regard to the SDAP layer device, the UE may be configured, through an RRC message, whether to use the header of the SDAP layer device with regard to each PDCP layer device or with regard to each bearer or with regard to each logical channel, or whether to use functions of the SDAP layer device. If an SDAP header is configured, the NAS QoS reflection configuration 1-bit indicator (NAS reflective QoS) of the SDAP header and the AS QoS reflection configuration 1-bit indicator (AS reflective QoS) thereof may be indicated such that the UE can update or reconfigure mapping information regarding the QoS flow and data bearer of the uplink and downlink. The SDAP header may include QoS flow ID information indicating the QoS. The QoS information may be used as data processing priority for providing efficient services, scheduling information, or the like.

The main functions of the NR SDAP d-01 or d-45 may include some of functions below.
- Header compression and decompression: ROHC only
- Transfer of user data
- In-order delivery of upper layer PDUs
- Out-of-order delivery of upper layer PDUs
- PDCP PDU reordering for reception
- Duplicate detection of lower layer SDUs
- Retransmission of PDCP SDUs
- Ciphering and deciphering
- Integrity protection and integrity verification)
- Timer-based SDU discard in uplink

The reordering of the NR PDCP device refers to a function of reordering PDCP PDU received from a lower layer in an order based on PDCP sequence numbers (SNs), and may include a function of transferring data to a higher layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR SDAP d-01 or d-45 may include some of functions below.
- Transfer of upper layer PDUs
- In-order delivery of upper layer PDUs
- Out-of-order delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above, the in-order delivery of the NR RLC device refers to a function of transferring RLC SDUs received from a lower layer to a higher layer in sequence, and may include a function of, if one original RLC SDU is divided into several RLC SDUs and then the RLC SDUs are received, reassembling the several RLC SDUs and transferring the reassembled RLC SDUs, may include a function of rearranging received RLC PDUs with reference to RLC sequence numbers (SNs) or PDCP sequence numbers (SNs), may include a function of rearranging order to record lost RLC PDUs, may include a function of reporting the state of lost RLC PDUs to a transmission side, may include a function of requesting retransmission of lost RLC PDUs, may include a function of, if there is a lost RLC SDU, sequentially transferring only RLC SDUs before the lost RLC SDU to an upper layer, may include a function of, although there is a lost RLC SDU, if a predetermined timer has expired, sequentially transferring, to an upper layer, all the RLC SDUs received before the timer is started, or may include a function of, although there is a lost RLC SDU, if a predetermined timer has expired, sequentially transferring all the RLC SDUs received up to the current, to an upper layer. In addition, the RLC PDUs may be processed in the received order (regardless of the sequence number order, in the order of arrival) and delivered to the PDCP device regardless of the order (out-of-sequence delivery). In the case of segments, segments which are stored in a buffer, or which are to be received later, may be received, reconfigured into one complete RLC PDU, processed, and delivered to the PDCP device. The NR RLC layer may include no concatenation function, which may be performed in the NR MAC layer or replaced with a multiplexing function of the NR MAC layer. Whether to perform in-order delivery or out-of-order delivery may be configured by an RRC message.

The out-of-sequence delivery function of the NR RLC device refers to a function of instantly delivering RLC SDUs received from the lower layer to the upper layer regardless of the order, may include a function of reassembling and delivering multiple RLC SDUs received, into which one original RLC SDU has been segmented, and may include a function of storing the RLC SN or PDCP SN of received RLC PDUs, and recording RLC PDUs lost as a result of reordering.

The NR MAC d-15 or d-30 may be connected to several NR RLC layer devices configured in a single UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHYl layer d-20 or d-25 may perform channel coding and modulation of higher layer data to make the data into OFDM symbols and transmit the OFDM symbols through a wireless channel, or may perform demodulation and channel decoding of OFDM symbols received through a wireless channel, and then transfer the OFDM symbols to an upper layer.

A next-generation mobile communication system may use a substantially high band of frequencies, and the frequency bandwidth may also be substantially wide accordingly. However, supporting a substantially wide bandwidth entirely requires a high degree of complexity in connection with UE implementation, thereby incurring high costs. Therefore, the concept of a bandwidth part (BWP) may be introduced in a next-generation mobile communication system such that multiple BWPs are configured in one cell (Spcell or Scell), and data is transmitted/received in one BWP or in multiple BWPs as instructed by the base station.

The disclosure is characterized by proposing a state transition method or a BWP switching method, which considers the state of the Scell and multiple BWPs configured in the Scell when introducing a dormant BWP proposed in the disclosure, and detailed operations thereof. In addition, the disclosure proposes a method for managing a hibernation mode at a BWP level and transitioning the state, or a BWP switching method, respectively, and proposes detailed operations of BWPs according to the state of each SCell or the state of each BWP or the mode thereof (activated or deactivated or dormant). In addition, in order to ensure that a cell (SCell) or BWP can be quickly activated, first channel measurement configuration information is configured with regard to the cell or BWP by using an RRC message or a MAC CE, and the UE is instructed to be able to apply and use (activate) the first channel measurement configuration information through the RRC message or MAC CE such that the UE can quickly measure a channel signal (for example, a reference signal) regarding the cell or BWP and quickly report the measurement result to the base station, thereby quickly activating the cell or BWP. The description that a cell or BWP is activated may denote procedures in which the UE monitors the PDCCH in the cell or BWP, or the base station transmits the PDCCH to the UE, or the base station transmits downlink data (PDSCH) to the UE, or the UE transmits uplink data (PUSCH), or the UE transmits a measurement result or a HARQ ACK or NACK by using the PUCCH, or the UE transmits a sounding reference signal (SRS), or the UE measures a channel measurement signal (synchronization signal block (SSB) or channel state information reference signal (CSI-RS) or reference signal (RS)) transmitted by the base station, or the UE measures the channel measurement signal transmitted by the base station and reports the result. The first channel measurement configuration information may include configuration information regarding a channel measurement signal for a specific UE (or UEs) in the cell or BWP, to be used by the base station. For example, the first channel measurement configuration information may include the cycle of the channel measurement signal or the number of transmitted signals or an offset regarding the period of time during which signals are transmitted or the time at which signals are transmitted or the time length between transmitted signals or a list of multiple channel measurement signals which can be transmitted or a time transmission resource (or frequency transmission resource) indicating the location of a transmitted signal or a transmission resource (time transmission resource or frequency transmission resource) to report a measurement result or a measurement result reporting cycle or the like. In addition, the first channel measurement configuration information configured by an RRC message may include multiple pieces of channel measurement signal information. The base station may indicate one piece of channel measurement signal information among the multiple pieces of configured channel measurement signal information, or beam configuration information, by using an RRC message or a MAC CE or DCI. The base station may instruct the UE to perform channel measurement by applying or using the indicated channel measurement signal information or beam configuration information, or to perform channel measurement reporting. As another method, the base station may configure or indicate channel measurement signal information by using the RRC message or MAC CE such that the UE performs channel measurement by applying or using the configured (or indicated) channel measurement signal information, or performs channel measurement reporting. In addition, the first channel measurement configuration information may be configured differently for each cell or each BWP with regard to multiple cells or BWPs configured by the RRC message. The base station may configure beam-related configuration information (transmission configuration indication (TCI) state or quasi co-location (QCL)) such as a beam direction or a beam number or a beam location together, in order to support the UE to be able to easily measure a transmission resource for channel measurement. In addition, the first channel measurement configuration information may include a timing advance (TA) value (or offset value) for synchronizing the base station's downlink signal or the base station's uplink signal, or a time alignment timer (TAT) indicating the validity of the TA value, or a TAT value such that correct channel measurement or channel measurement reporting can be performed.

The first channel measurement configuration information proposed in the disclosure may be characterized in that the same can be configured with regard to only downlink BWP configuration information of each cell. The first channel measurement configuration information proposed in the disclosure may not be configured with regard to uplink BWP configuration information of each cell. This is because the UE needs to measure the downlink channel first such that the UE then can report the measurement result regarding the channel or cell, correctly receive the PDCCH, and follow the base station's instruction.

The first channel measurement configuration information proposed in the disclosure may be characterized in that the same is initially deactivated when configured by an RRC message or after a handover, and may be activated later by a MAC control element or DCI information of a PDCCH or an RRC message proposed in the disclosure. When configured by an RRC message as described above, the initial state needs to be a deactivated state such that the base station can easily manage the UE's cell state or the channel measurement performing procedure, and the UE can be accurately timed regarding when and how channel measurement is to be performed, without the processing delay problem of the RRC message.

In addition, the disclosure is characterized in that multiple BWPs may be configured for a single cell (Spcell or Pcell or Pscell or Scell) with regard to each downlink or uplink, and an active DL or UL BWP, or a dormant BWP or dormant DL BWP, or an inactive or deactivated DL/UL BWP may be configured and operated through BWP switching. The base station may transition the downlink or uplink BWP to an activated state with regard to the single cell, thereby increasing the data transmission rate in a method similar to carrier aggregation. In addition, the base station may transition or switch the downlink BWP to a dormant BWP such that the UE does not perform PDCCH monitoring with regard to the cell, thereby saving the battery, and may instruct the UE to perform channel measurement and to report the channel measurement result with regard to the downlink BWP, thereby supporting quick cell or BWP activation later. In addition, the base station may transition the downlink (or uplink) BWP to a deactivated state in the single cell, thereby saving the UE's battery. The instruction for BWP-specific state transition regarding each cell or the BWP switching instruction may be configured and indicated by using an RRC message or a MAC CE or downlink control information (DCI) of the PDCCH. The dormant BWP may be expanded and applied to dual connectivity as well, and may also be applied to the PSCell of the secondary cell group, for example. As another method, the same may be expanded to the concept of cell group suspension or cell group deactivation such that a single cell group (for example, secondary cell group) of a UE which is configured dual connectivity is instructed to suspend or deactivate the cell group such that the cell group suspends data transmission or reception as instructed, or suspends PDCCH monitoring, or perform sporadic PDCCH monitoring, based on a substantially long cycle, thereby reducing the UE's power consumption. In addition, if instructed to suspend or deactivate the cell group, the UE may perform a channel measurement procedure in the cell group to be suspended or deactivated and may report the channel measurement result to the network (for example, to the master cell group or to the secondary cell group), thereby supporting quick activation of the dual connectivity. The UE may perform the procedure with regard to the cell group which is to be suspended or deactivated as instructed, or the cell group configuration information may not be discarded or released but maintained and stored, or the cell group configuration information may be used or applied or restored according to an instruction to activate or resume the cell group of the network. For example, configuration information of the cell group configured for the UE (for example, configuration information of each PDCP or RLC or MAC layer device) or bearer configuration information or cell-specific configuration information may be stored or maintained with no change. If the UE receives an instruction to resume or activate the cell group which has been suspended or deactivated as instructed, the UE may resume or restore or again apply the cell group's configuration information, the UE may resume the bearer or may restart data transmission or reception or may restart PDCCH monitoring or may perform channel measurement reporting or may reactivate configured transmission resources periodically.

In the cell group configuration information or cell (SPCell (Pcell or PSCell) or SCell) configuration information, or in previously configured cell group configuration information or cell (SPCell (Pcell or PSCell) or SCell) configuration information, or in a message (for example, RRC message or RRCReconfiguration or MAC control element or downlink control information (DCI) of PDCCH) that instructs cell group or cell (SPCell (Pcell or PSCell) or SCell) activation or resumption, first channel measurement configuration information may be configured to be included therein for quick cell group or cell (SPCell (Pcell or PSCell) or SCell) activation. In order to quickly activate the cell group, the first channel measurement configuration information may include configuration information, such as the cycle regarding a frequent channel measurement signal (for example, radio resource or temporary reference signal (TRS) or synchronization signal block (SSB) or channel state information reference signal (CSI-RS) or reference signal (RS)) such that the base station can temporarily transmit a channel measurement signal a lot or often such that channel measurement can be quickly performed in the cell in configuration information of a cell (for example, Pcell or PSCell or SCell) of the cell group, or transmitted transmission resource information (frequency or time transmission resource used to transmit the frequent channel measurement signal) or an interval or the number of times (the number of times the frequent channel measurement signal is transmitted) or a timer value (the time during which the frequent channel measurement signal is transmitted) or a time interval (interval in which the frequent channel measurement signal is transmitted (for example, offset of time unit (slot or subframe or symbol or the like))) or a transmission resource or cycle or interval or timing or offset by which the UE needs to report the measurement result. The first channel measurement configuration information may configure a short reporting cycle (or transmission resource) at which the UE can report the channel measurement result, or may configure a transmission resource for channel measurement such that the base station can transmit many channel measurement signals (or transmission resources or (for example, radio resources or temporary reference signals (TRS))) a lot or frequently in order for the base station to support the UE's quick channel measurement or many signal measurements. The first channel measurement configuration information may include configuration information regarding a channel measurement signal for a specific UE (or UEs) in the cell or BWP, to be used by the base station. For example, the first channel measurement configuration information may include the cycle of the channel measurement signal or the number of transmitted signals or an offset regarding the period of time during which signals are transmitted or the time at which signals are transmitted or the time length between transmitted signals or a list of multiple transmittable channel measurement signals or time transmission resources (or frequency transmission resources) indicating the location of transmitted signals or transmission resources (time transmission resources or frequency transmission resources) to be used to report measurement results or the measurement result reporting cycle or the like. In addition, the first channel measurement configuration information may be configured differently for each cell or each BWP with regard to multiple cells or BWPs configured in the RRC message, and beam-related configuration information (transmission configuration indication (TCI) state or quasi co-location (QCL)) such as the beam direction or beam number or beam location may be configured together such that the UE can easily measure transmission resources for channel measurement. In addition, the first channel measurement configuration information may be used to configure a timing advance (TA) value (or offset value) for synchronizing the base station's downlink signal or the base station's uplink signal, or a time alignment timer (TAT) indicating the validity of the TA value, or a TAT value such that correct channel measurement or channel measurement reporting can be performed. In addition, the first channel measurement configuration information configured by an RRC message may include multiple pieces of channel measurement signal information, and the RRC message or MAC CE or DCI may be used to indicate a specific piece of channel measurement signal information among the configured multiple pieces of channel measurement signal information, or beam configuration information, such that the UE can perform channel measurement or perform channel measurement reporting by applying or using the indicated channel measurement signal information or beam configuration information. According to the method of indication, mapping between a bitmap or an index or an identifier and each piece of channel measurement signal information configured above may be defined, and an indication may be made based thereon. As another method, the RRC message or MAC CE may be used to configure or indicate channel measurement signal information such that the UE can perform channel measurement or perform channel measurement reporting by applying or using the configured (or indicated) channel measurement signal information.

The first channel measurement configuration information proposed in the disclosure may be characterized in that the same is initially deactivated when configured by an RRC message or after a handover, and may be activated later by a MAC control element or DCI information of a PDCCH or an RRC message proposed in the disclosure. When configured by an RRC message as described above, the initial state needs to be a deactivated state such that the base station can easily manage the UE's cell state or the channel measurement performing procedure, and the UE can be accurately timed regarding when and how channel measurement is to be performed, without the processing delay problem of the RRC message.

The first channel measurement configuration information proposed in the disclosure may be characterized in that the same can be configured with regard to only downlink BWP configuration information of each cell. The first channel measurement configuration information proposed in the disclosure may not be configured with regard to uplink BWP configuration information of each cell. This is because the UE needs to measure the downlink channel first such that the UE then can report the measurement result regarding the channel or cell, correctly receive the PDCCH, and follow the base station's instruction.

In addition, the message (for example, RRC message or RRCReconfiguration or MAC control element or downlink control information (DCI) of PDCCH) that instructs activation or resumption of the cell group or cell (SPCell (Pcell or PSCell) or SCell) may include second channel measurement signal information for measuring signals of the cell (PSCell or PCell or SCell) of the cell group. The second channel measurement signal information may include normal channel measurement configuration information such as the transmission resource or cycle or time interval or number of channel measurement signals, or the transmission resource or cycle or time interval for channel measurement reporting.

In the disclosure, the UE's first channel measurement configuration information or second channel measurement configuration information may be applied according to the following conditions so as to measure channels, and the measurement result may be reported to the base station.
1> If the UE received a message (for example, PDCCH indicator or MAC control element or RRC message) instructing the UE to activate (or resume) the cell (PCell or PSCell or SCell) or cell group
   ▪ 2> If the UE is configured first channel measurement configuration information
      ◆ 3> According to the first channel measurement configuration information of the UE, it may be identified that the base station will transmit many channel measurement signals frequently, and many or frequent channel measurement signals may be measured according to the first channel measurement configuration information temporarily (for example, until a time interval (for example, subframe or slot or symbol) configured in the first channel measurement signal information, or during a time interval promised (or predetermined) in consideration of an offset or during a time (for example, while a timer is driven)), or until a first condition is satisfied. In addition, the measured channel measurement result may be reported according to the cycle or transmission resource configured in the first channel measurement configuration information until the time interval (for example, subframe or slot or symbol) configured in the first channel measurement configuration information, or during a time interval promised (or predetermined) in consideration of an offset, or during a time (for example, while a timer is driven), or until a first condition is satisfied. Therefore, as the UE becomes able to quickly measure frequent channel measurement signals and quickly report the measurement result, the cell (PCell or SCell or PSCell) or cell group can be quickly activated (or resumed), or scheduling information can be quickly indicated. If second channel measurement configuration information is configured for the UE after the time interval (for example, subframe or slot or symbol) configured in the first channel measurement configuration information, or after the promised (or predetermined) time interval, or after the time (for example, if the timer expires), or after the first condition is satisfied, application of the first channel measurement configuration information may be suspended or released, and channel measurement signals may be measured according to the second channel measurement configuration information. For example, a fallback from the first channel measurement configuration information to the second channel measurement configuration information may occur, or second channel information may be applied instead of the first channel measurement configuration information. In addition, measured channel measurement results may be reported according to the cycle or transmission resource configured in the second channel measurement configuration information. If the second channel measurement configuration information has not been configured, no channel measurement may be performed.
   ▪ 2> Otherwise (if the UE is not configured first channel measurement configuration information)
      ◆ 3> If the UE is configured second channel measurement configuration information, channel measurement signals may be measured according to the second channel measurement configuration information. In addition, measured channel measurement results may be reported according to the cycle or transmission resource configured in the second channel measurement configuration information. If the second channel measurement configuration information has not been configured, no channel measurement may be performed.

The first condition of the disclosure may be one of the following conditions. The disclosure proposes, as the first condition, following efficient conditions configured such that the base station does not need to transmit unnecessarily many transmission resources or frequent transmission resources when the first condition is used to activate a cell or activate a cell group or resume the same or when an RRC inactive mode UE resumes connection in an RRC connection resumption procedure. For example, until one of the following conditions is satisfied, first channel measurement configuration information may be applied, and a channel measurement procedure or a channel measurement reporting procedure may be performed.
- It may be determined that the first condition is satisfied when the UE has successfully completed a random access procedure in the cell (for example, PCell or SCell or PSCell) or in a cell (for example, PSCell or SCell) of a cell group, or when the first uplink transmission resource is allocated after successfully completing the random access procedure, or when an uplink transmission resource is initially indicated to the UE.
   ▪ For example, more specifically, if the UE performs a contention-free random access (CFRA) procedure (for example, if a predesignated preamble or UE cell identifier (for example, C-RNTI) has been allocated)
      ◆ It may be determined that the first condition is satisfied because the random access procedure may be deemed to be successfully completed when the UE transmits a predesignated preamble to the cell and then receives a random access response (RAR) message, or when a PDCCH indication is received in response to the RAR. As another method, it may be determined that the first condition is satisfied when an uplink transmission resource is initially received after the RAR is received.
   ▪ If the UE performs a contention-based random access (CBRA) procedure (for example, if no predesignated preamble or UE cell identifier (for example, C-RNTI) has been allocated)
      ◆ It may be determined that the first condition is satisfied because the UE may be deemed to have successfully completed the procedure of random access to a target base station if the UE transmits a preamble (for example, an arbitrary preamble) to the cell and then receives a random access response (RAR) message, if message 3 (for example, handover completion message) is transmitted by using an uplink transmission resource allocated or included or indicated in the RAR message, and if a MAC CE indicating that contention has been resolved (contention resolution MAC CE) is received from the target base station through message 4, or if an uplink transmission resource is received through a PDCCH corresponding to the UE's C-RNTI. As another method, if the uplink transmission resource allocated in the RAR message has a sufficient size such that, after transmitting message 3, the UE can additionally transmit uplink data, it may be determined that an uplink transmission resource has been initially received, and it may be determined that the first condition is satisfied. It may be determined that an uplink transmission resource is initially received when the RAR is received, and it may be determined that the first condition is satisfied.
- 1> If the UE performs a two-step random access procedure configured or indicated therefor
- 1> Or if no two-step random access procedure is configured or indicated in the message, but if the UE supports the two-step random access procedure by UE capability, and if the cell's system information supports the two-step random access procedure, and if the system information broadcasts information for the two-step random access procedure (for example, a random access resource, or a threshold for determining whether or not to perform the two-step random access, or the like), or if the UE receives the system information and performs the two-step random access procedure with regard to the cell because the signal strength is better or larger than the threshold broadcast in the system information,
   ▪ 2> The UE may determine that the first condition is satisfied when the two-step random access procedure is successfully completed.
   ▪ 2> The two-step random access procedure may be specifically performed by one of a contention-based random access (CBRA) method or a contention-free random access (CFRA) method.
      ◆ 3> If the UE performed the CBRA-based two-step random access procedure,
         • 4> The UE may transmit a preamble in a transmission resource for two-step random access (for example, a PRACH occasion or a transmission resource configured by the base station through an RRC message or a transmission resource broadcast in system information), and may transmit data (for example, MsgA MAC PDU) in a transmission resource (for example, PUSCH occasion) for data transmission. The data may include a MAC control element (C-RNTI MAC CE) including a UE identifier (C-RNTI) or an RRC message (RRCReconfigurationComplete or handover completion message).
         • 4> The UE may monitor a PDCCH scrambled by a UE identifier (C-RNTI) or a first identifier (MsgB-RNTI) derived by the time or frequency at which the preamble is transmitted.
         • 4> If the UE receives the PDCCH scrambled by the UE identifier or if a downlink transmission resource is allocated in the PDCCH or if a MAC control element (timing advance command MAC CE) for timing adjustment is received in the downlink transmission resource
            • 5> The UE may determine that the two-step random access procedure is successfully completed, and may determine that the first condition is satisfied.
         • 4> If the UE receives a PDCCH scrambled by the first identifier (MsgB-RNTI), or if the PDCCH allocates a downlink transmission resource, or if a fallback random access response regarding a preamble transmitted by the UE in the downlink transmission resource is received (for example, if the base station received the preamble but received no MsgA, the fallback RAR instructs the MsgA to be transmitted through another transmission resource)
            • 5> The UE may transmit data (MsgA MAC PDU) by using the transmission resource indicated in the fallback RAR.
            • 5> The UE may monitor the PDCCH scrambled by the UE identifier (C-RNTI).
            • 5> If the UE receives the PDCCH scrambled by the UE identifier, or if an uplink transmission resource is allocated in the PDCCH, the UE may determine that the two-step random access procedure is successfully completed, and may determine that the first condition is satisfied.
      ◆ 3> If the UE performed the CFRA-based two-step random access procedure,
         • 4> The UE may transmit a preamble in a transmission resource for two-step random access (for example, a PRACH occasion or a transmission resource configured by the base station through an RRC message), and may transmit data (for example, MsgA MAC PDU) in a transmission resource (for example, PUSCH occasion) for data transmission. The data may include a MAC control element (C-RNTI MAC CE) including a UE identifier (C-RNTI) or an RRC message (RRCReconfigurationComplete or handover completion message).
         • 4> The UE may monitor a PDCCH scrambled by a UE identifier (C-RNTI) or a first identifier (MsgB-RNTI) derived by the time or frequency at which the preamble is transmitted.
         • 4> If the UE receives the PDCCH scrambled by the UE identifier or if a downlink transmission resource is allocated in the PDCCH or if a MAC control element (timing advance command MAC CE) for timing adjustment is received in the downlink transmission resource
            • 5> The UE may determine that the two-step random access procedure is successfully completed, and may determine that the first condition is satisfied.
         • 4> If the UE receives a PDCCH scrambled by the first identifier (MsgB-RNTI), or if a downlink transmission resource is allocated in the PDCCH, or if a fallback random access response regarding a preamble transmitted by the UE in the downlink transmission resource is received (that is, if the base station received the preamble but received no MsgA, the fallback RAR instructs the MsgA to be transmitted through another transmission resource)
            • 5> The UE may determine that the two-step random access procedure is successfully completed, and may determine that the first condition is satisfied.
            • 5> The UE may transmit data (MsgA MAC PDU) by using the transmission resource indicated in the fallback RAR.
- 1> It may be determined that the first condition is satisfied when the random access procedure is started, or when a preamble for the random access procedure is transmitted.
- 1> As another method, if the message configures or instructs a two-step random access procedure for the UE, the UE may determine that the first condition is satisfied. For example, in the above case, the UE may determine that the first condition is satisfied before the two-step random access procedure is started.
- 1> As another method, if the message configures or instructs a two-step random access procedure for the UE, and if the transmission resource (PUSCH) configured for data transmission in the two-step random access procedure is larger than a first threshold, or if the RRC message includes a configuration value (timing advance value) for timing adjustment, the UE may determine that the first condition is satisfied. The first threshold may be configured by the base station through an RRC message (for example, RRCReconfiguration), or may be broadcast in system information, or may be configured by the size of data held by the UE to be transmitted. For example, in the above case, the UE may determine that the first condition is satisfied before the two-step random access procedure is started. As another method, if the RRC message includes a configuration value (timing advance value) for timing adjustment, or if a two-step random access procedure is configured therein, the UE may instantly transmit data in a configured transmission resource (for example, a transmission resource configured by the RRC message or a transmission resource indicated by the PDCCH of the target base station after the PDCCH is monitored by the UE) without transmitting a preamble. Therefore, in the above case, the UE may determine that the first condition is satisfied before the two-step random access procedure is started, or when or before the data is transmitted. As another method, if the RRC message includes a configuration value (timing advance value) for timing adjustment, or if a two-step random access procedure is configured therein, the UE may instantly transmit data in a configured transmission resource (PUSCH) (for example, a transmission resource configured by the RRC message or a transmission resource indicated by the PDCCH of the target base station after the PDCCH is monitored by the UE) without transmitting a preamble. In the above case, if a configured transmission resource (PUSCH) (for example, a transmission resource configured by the RRC message or a transmission resource indicated by the PDCCH of the target base station after the PDCCH is monitored by the UE) is larger than a first threshold, or if the RRC message includes a configuration value (timing advance value) for timing adjustment, the UE may determine that the first condition is satisfied before the two-step random access procedure is started, or when or before the data is transmitted.
- 1> It may be considered that the first condition is satisfied if an RRC inactive mode UE transmits an RRCResumeRequest and then receives an RRCResume message (or RRCSetup message) in response thereto.
- 1> In the case of expiration of a timer which indicates a period of time for channel measurement when a UE performs channel measurement, based on first channel measurement configuration information configured in the RRC message,
- 1> In the case of elapse (or expiration) of a time interval which indicates a period of time for channel measurement when a UE performs channel measurement, based on first channel measurement configuration information configured in the RRC message, or if the time interval is all used (or applied),
- 1> If signals for channel measurement when a UE performs channel measurement, based on first channel measurement configuration information configured in the RRC message, are all measured (or completed) a configured number of times, or if signals are received the configured number of times
- 1> If channel measurement is completed (if channel measurement expires), based on the configuration information, when a UE performs channel measurement, based on first channel measurement configuration information configured in the RRC message, or if channel measurement reporting is completed (or if channel measurement reporting expires)

If the first condition is satisfied, the upper layer device (for example, RRC layer device) may indicate to the lower layer device (for example, PDCP layer device or RLC layer device or MAC layer device or PHY layer device) through an indicator, or the lower layer device (for example, PDCP layer device or RLC layer device or MAC layer device or PHY layer device) may indicate to the upper layer device (for example, RRC layer device).

The methods for configuring or applying first channel measurement configuration information proposed in the disclosure may be expanded and configured and used when a cell group (for example, PSCell) is activated or resumed, or when an SCell is activated, or when RRC connection is resumed in an RRC inactive mode (for example, when an RRCResume message is used), or when a handover procedure is performed (for example, when an RRCReconfiguration message is used).

In the disclosure, the term "BWP" may be used without distinguishing an uplink and a downlink, and may refer to an uplink BWP and a downlink BWP, depending on the context, respectively.

In the disclosure, the term "link" may be used without distinguishing the uplink and the downlink, and may refer to an uplink and a downlink, depending on the context, respectively.

In the disclosure, a cell may refer to a PCell or an SCell (for example, an SCell configured in a master cell group (MCG)) or a PSCell (for example, a PCell of a secondary cell group (SCG)) or an SCell (for example, an SCell configured in a secondary cell group (SCG)). In the disclosure, a dormant BWP is configured or introduced with regard to the Scell or PSCell of a UE which performs carrier aggregation or dual connectivity, the PDCCH is not monitored in the dormant BWP, thereby reducing the UE's battery consumption, and channel measurement is performed in the dormant BWP and is reported (for example, channel state information (CSI) or channel quality information (CQI) measurement or reporting), or beam measurement or beam tracking or beam operation is performed such that, if data transmission is necessary, a normal BWP is switched to or activated such that data transmission can quickly start in the normal BWP. The dormant BWP may not be configured or applied with regard to an SpCell (PCell of MCG or PCell (or PSCell) of SCG) which requires that signals be monitored continuously, or feedback be sent or received, or synchronization be identified and maintained, or an SCell which is configured a PUCCH.

If the UE is instructed to switch to or activate the dormant BWP with regard to the SCell of the MCG through the PCell, the UE may perform a channel measurement procedure with regard to the dormant BWP of the SCell and may report the measured channel measurement result in a transmission resource of the PCell of the MCG (for example, through the physical uplink control channel (PUCCH) transmission resource of the PCell) or in a transmission resource of the SCell (for example, through the physical uplink control channel (PUCCH) transmission resource) for which the PUCCH of the MCG is configured. An RRC message may be used to configure, for the UE, a channel measurement result regarding what cell or what cell's BWP is to be reported by what transmission resource (for example, PUCCH or PUSCH) of what cell, with regard to each cell or each BWP.

If the UE is instructed to switch to or activate the dormant BWP with regard to the SCell of the SCG through the PSCell, the UE may perform a channel measurement procedure with regard to the dormant BWP of the SCell and may report the measured channel measurement result in a transmission resource of the PSCell of the SCG (for example, through the physical uplink control channel (PUCCH) transmission resource of the PSCell) or in a transmission resource of the SCell (for example, through the physical uplink control channel (PUCCH) transmission resource) for which the PUCCH of the SCG is configured. An RRC message may be used to configure, for the UE, a channel measurement result regarding what cell or what cell's BWP is to be reported by what transmission resource (for example, PUCCH or PUSCH) of what cell, with regard to each cell or each BWP.

If the UE is instructed to switch to or activate the dormant BWP with regard to the PSCell or SCell of the SCG through the PCell, or if the UE receives a SCG suspension or cell group suspension instruction with regard to the SCG (or PSCell), the UE may perform a channel measurement procedure with regard to the BWP of the PSCell or SCell (the BWP configured by the RRC message or the BWP activated last) or with regard to the dormant BWP, and may report the measured channel measurement result in a transmission resource of the PCell of the MCG (for example, through the physical uplink control channel (PUCCH) transmission resource of the PCell), or in a transmission resource of the SCell (for example, through the physical uplink control channel (PUCCH) transmission resource) for which the PUCCH of the MCG is configured, or in a transmission resource of the PSCell of the SCG (for example, through the physical uplink control channel (PUCCH) transmission resource of the PSCell). An RRC message may be used to configure, for the UE, a channel measurement result regarding what cell or what cell's BWP is to be reported by what transmission resource (for example, PUCCH or PUSCH) of what cell, with regard to each cell or each BWP.

The disclosure proposes multiple embodiments operating based on DCI of a PDCCH, or based on a MAC CE, or based on an RRC message, in order to operate the dormant BWP or cell group suspension state proposed above, with regard to the UE's SCell (the SCell of the MCG when carrier aggregation is configured, or the SCell of the SCG when dual connectivity is configured) or PSCell (PCell of the SCG when dual connectivity is configured).

The network or base station may configure an SPcell (PCell and PScell) and multiple SCells for the UE. The Spcell may indicate the Pcell when the UE communicates with one base station. When the UE communicates with two base stations (master and secondary base stations), the base stations may indicate the master base station's Pcell or the secondary base station's PScell. The Pcell or Pscell refers to the major cell used in each MAC layer device when the UE and the base station communicate, and denotes a cell which performs random access at the correct timing such that synchronization is performed, which sends HARQ ACK/NACK feedback by using a PUCCH transmission resource, and which exchanges most control signals. The technology in which the base station operates multiple Scells together with the Spcell so as to increase transmission resources and to raise uplink or downlink data transmission resources is referred to as carrier aggregation or dual connectivity.

If an Spcell and multiple SCells are configured for a UE through an RRC message, the state or mode regarding each cell (PCell or PSCell or SCell) or each Scell or each SCell's BWP, or regarding a cell group, may be configured by using the RRC message or a MAC CE or DCI of the PDCCH. The cell's state or mode may be configured as an active mode or an activated state, and as a deactivated mode or a deactivated state. The description that the cell is in the active mode or activated state may mean that, in the active mode or activated cell, the UE may exchange uplink or downlink data with the base station in the activated BWP of the cell, or in an activated normal BWP, or in a BWP other than the activated dormant BWP, the UE may monitor the PDCCH to identify the base station's instruction, may perform channel measurement regarding the downlink of the cell in the active mode or activated state (or the activated BWP of the cell, or an activated normal BWP, or a BWP other than the activated dormant BWP), the UE may periodically report measurement information to the base station, and the UE may periodically transmit a pilot signal (for example, sounding reference signal (SRS)) to the base station such that the base station can perform uplink channel measurement. Alternatively, the UE may activate or switch the BWP to a dormant BWP with regard to the activated cell according to the base station's instruction (for example, PDCCH or MAC CE or RRC message) and, if the dormant BWP has been activated in the activated cell, the UE may not perform PDCCH monitoring in the cell, and may perform a procedure of performing channel measurement reporting and reporting the channel measurement result.

As another method, if the cell having an activated dormant BWP is an SCell, the UE may not monitor the PDCCH or may not receive downlink data or may perform channel measurement or measurement result reporting or may suspend a configured periodic transmission resource (for example, configured uplink grant type 1) or may clear or reset a configured periodic transmission resource (for example, configured uplink grant type 2) or may transmit no sounding reference signal (SRS) or may transmit no uplink data or may transmit no PUCCH (for example, preamble for random access or scheduling request (SR)). However, if the cell, the dormant BWP of which is activated, or for which cell group suspension is indicated, is a PSCell, the UE may not monitor the PDCCH or may perform PDCCH monitoring at a substantially long cycle or may receive no downlink data or may perform channel measurement or measurement result reporting or may suspend a configured periodic transmission resource (for example, configured uplink grant type 1) or may clear or reset a configured periodic transmission resource (for example, configured uplink grant type 2) or may transmit a sounding reference signal (SRS) or may transmit no uplink data or may transmit a PUCCH (for example, preamble for random access or scheduling request (SR)) or may perform a random access procedure.

If the cell having an activated BWP which is not a dormant BWP is an SCell, the UE may monitor the PDCCH or may receive downlink data or may perform channel measurement or measurement result reporting or may resume a configured periodic transmission resource (for example, configured uplink grant type 1) or may configure or activate a configured periodic transmission resource (for example, configured uplink grant type 2) or may transmit a sounding reference signal (SRS) or may transmit uplink data or may transmit a PUCCH (for example, preamble for random access or scheduling request (SR)) or may perform a random access procedure.

If the cell which has an activated BWP other than the dormant BWP, or for which SCG resumption is indicated, is a PSCell, the UE may monitor the PDCCH or may receive downlink data or may perform channel measurement or measurement result reporting or may resume a configured periodic transmission resource (for example, configured uplink grant type 1) or may configure or activate a configured periodic transmission resource (for example, configured uplink grant type 2) or may transmit a sounding reference signal (SRS) or may transmit uplink data or may transmit a PUCCH (for example, preamble for random access or scheduling request (SR)) or may perform a random access procedure.

However, the description that a cell is in a deactivated mode or deactivated state may mean that BWPs configured in the cell are deactivated, or configured BWPs are not activated, or there is no activated BWP among the configured BWPs, and the UE thus cannot exchange data with the base station, the UE does not monitor the PUCCH for identifying the base station's instruction, the UE performs no channel measurement, the UE performs no measurement reporting, and the UE transmits no pilot signal.

Therefore, in order to activate cells in the deactivated mode, the base station first configures frequency measurement configuration information for the UE by using an RRC message, and the UE performs cell or frequency measurement, based on the frequency measurement configuration information. The base station may activate the deactivated cells, based on frequency/channel measurement information, after receiving the UE's cell or frequency measurement report. This causes a high degree of delay until the base station causes the UE to activate carrier aggregation or dual connectivity and then starts data transmission or reception.

The disclosure proposes a dormant BWP or a dormant state with regard to the BWP of each activated cell (for example, activated Scell or activated PSCell) such that, the UE's battery can be saved, and data transmission or reception can be quickly started, or proposes that a dormant bandwidth part (BWP) be configured or introduced with regard to each activated cell. Alternatively, the disclosure proposes that, when dual connectivity is configured for the UE, an activated state or a dormant state or a suspended state or deactivated state or a resumed state is configured or introduced with regard to the state of each cell group, and proposes a method for indicating cell group suspension or SCG suspension or cell group resumption or SCG resumption such that the cell group state transition is indicated, and UE operations according thereto.

The UE cannot exchange data with the base station in the dormant-mode BWP or dormant BWP in activated SCell, or when the dormant BWP is activated, or the UE does not monitor the PDCCH for identifying the base station's instruction, or the UE transmits no pilot signal but performs channel measurement, and the UE report the measurement result regarding the measured frequency/cell/channel periodically or when an event occurs, according to the base station configuration. Therefore, the UE does not monitor the PDCCH in the dormant BWP of the activated cell and transmits no pilot signal, and thus can save the battery compared with the normal BWP (or a BWP other than the dormant BWP) of the activated cell, or compared with the case in which the normal BWP (or a BWP other than the dormant BWP) of the activated cell is activated. The UE performs channel measurement reporting, unlike the time when the cell is deactivated, and the base station thus quickly activates the normal BWP of the activated cell, based on the measurement report, or based on the report of measurement of the dormant BWP of the activated cell, such that carrier aggregation can be quickly used, thereby reducing transmission delay.

Therefore, in the disclosure, the description that a cell is in an active mode or activated state may mean that the UE may exchange uplink or downlink data with the base station in the activated BWP of the cell in the active mode or activated cell, or in an activated normal BWP, or in a BWP other than the activated dormant BWP, the UE may monitor the PDCCH to identify the base station's instruction, the UE may perform channel measurement regarding the downlink of the cell in the active mode or activated state (or the activated BWP of the cell or an activated normal BWP or a BWP other than the activated dormant BWP) and may periodically report measurement information to the base station, and the UE may periodically transmit a pilot signal (sounding reference signal (SRS)) to the base station such that the base station can perform uplink channel measurement. In addition, in the disclosure, the description that a cell is in an active mode or activated state may mean that the UE cannot exchange uplink or downlink data with the base station in the activated dormant BWP of the cell in the active mode or activated cell, or that the UE may does not monitor the PDCCH to identify the base station's instruction, but may perform channel measurement regarding the downlink of the activated dormant BWP of the cell in the active mode or activated state, and may periodically report measurement information to the base station.

If the cell which has an activated dormant BWP, or for which cell group suspension is indicated, is a PSCell, the UE may not monitor the PDCCH or may perform PDCCH monitoring at a substantially long cycle or may not receive downlink data or may perform channel measurement or measurement result reporting or may suspend a configured periodic transmission resource (for example, configured uplink grant type 1) or may clear or reset a configured periodic transmission resource (for example, configured uplink grant type 2) or may transmit a sounding reference signal (SRS) or may transmit no uplink data or may transmit a PUCCH (for example, preamble for random access or scheduling request (SR)) or may perform a random access procedure.

In addition, in the disclosure, a dormant BWP may indicate the state of the BWP, or the dormant BWP may be used, in a logical concept, to refer to a specific BWP. Therefore, the dormant BWP may be activated or deactivated or switched. For example, an instruction to switch a second BWP activated in a first cell to a dormant BWP or an instruction to transition the first cell to a hibernation or dormant mode or an instruction to activate the dormant BWP of the first cell may all be interpreted in the same sense.

In addition, in the disclosure, a normal BWP may refer to BWPs other than a dormant BWP, among BWPs configured for each cell of a UE by using an RRC message. In the normal BWP, the UE may exchange uplink or downlink data with the base station, may monitor the PDCCH to identify the base station's instruction, may perform channel measurement regarding the downlink and periodically report measurement information to the base station, and may periodically transmit a pilot signal (sounding reference signal ((SRS)) to the base station such that the base station can perform uplink channel measurement. In addition, the normal BWP may refer to an initially activated BWP or a default BWP or an initially activated BWP activated from hibernation or an initial BWP.

In addition, only one dormant BWP may be configured among BWPs configured for each cell of the UE, and may be configured with regard to the downlink. As another method, one dormant BWP may be configured, among BWPs configured for each cell of the UE, with regard to the uplink or downlink.

In addition, in the disclosure, the state of a cell group may be configured as an activated state or a suspended state or a deactivated state. The state of a cell group may be indicated by an indicator or a bitmap of DCI of a PDCCH or by a MAC control element or by an indicator of an RRC message. If the state of a cell group is configured as an activated state, configuration information of the cell group configured or indicated by an RRC message (for example, RRCReconfiguration message or RRCSetup message or RRCResume message) may be stored and may be applied in the UE or may be restored or may be resumed. According to the configuration of the RRC message configured in the cell group's PCell or PSCell or configured SCell, the PDCCH may be monitored, or downlink data may be received, or channel measurement or measurement result reporting may be performed, or a configured periodic transmission resource (for example, configured uplink grant type 1) may be resumed, or a configured periodic transmission resource (for example, configured uplink grant type 2) may be configured or activated, or a sounding reference signal (SRS) may be transmitted, or uplink data may be transmitted, or a PUCCH (for example, preamble for random access or scheduling request (SR)) may be transmitted, or a random access procedure may be performed.

In addition, if the state of the cell group is indicated as a suspended state or deactivated state, configuration information of a cell group configured or indicated by an RRC message (for example, RRCReconfiguration message or RRCSetup message or RRCResume message) may be stored in the UE, or application thereof may be suspended without discarding the same. According to the configuration of the RRC message configured in the cell group's PCell or PSCell or configured SCell, the PDCCH may not be monitored, or PDCCH monitoring may be performed at a substantially long cycle, or no downlink data may be received, or channel measurement or measurement result reporting may be performed, or a configured periodic transmission resource (for example, configured uplink grant type 1) may be suspended, or a configured periodic transmission resource (for example, configured uplink grant type 2) may be cleared or reset, or a sounding reference signal (SRS) may be transmitted, or no uplink data may be transmitted, or a PUCCH (for example, preamble for random access or scheduling request (SR)) may be transmitted, or a random access procedure may be performed.

In addition, if the state of a cell group is indicated as a deactivated state, or if cell group configuration information release is indicated, configuration information of a cell group configured or indicated by an RRC message (for example, RRCReconfiguration message or RRCSetup message or RRCResume message) may be released or discarded in the UE.

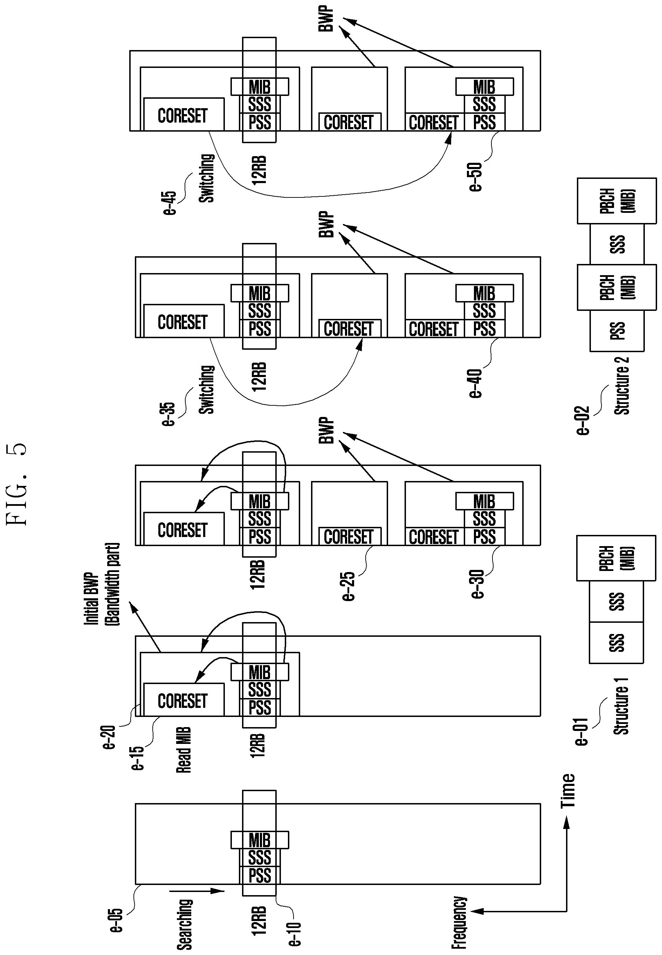

FIG. 5 illustrates a procedure for providing a service to a UE by efficiently using a substantially wide frequency bandwidth in a next-generation mobile communication system according to the disclosure.

With reference to FIG. 5, it will be described how to efficiently use a substantially wide frequency bandwidth in a next-generation mobile communication system such that a service is provided to UEs having different capabilities or categories, and the battery can be saved.

One cell in which a base station provides a service may service a substantially wide frequency band like e-05. However, in order to provide a service to UEs having different capabilities, the wide frequency band may be divided into multiple BWPs and managed as one cell.

If initially powered on, the UE may search for the entire frequency band provided by the business operator (PLMN) at a predetermined resource block level (for example, with regard to each 12 resource blocks (RB)). For example, the UE may start to search for a primary synchronization sequence (PSS)/secondary synchronization sequence (SSS) in the entire system bandwidth at the RB level (1e-10). If the signals are detected while searching for the PSS/SSS e-01 or e-02 at the RB level, the signals may be read and interpreted (decoded), thereby identifying the boundary between subframes and radio transmission resource frames. Therefore, subframes can be distinguished at 1ms level, and the UE synchronizes downlink signals with the base station. As used herein, a resource block (RB) may be defined as a two-dimensional unit indicating the size of a predetermined frequency resource and a predetermined time resource. For example, the time resource may be defined at 1ms level, and 12 subcarriers (one carrier x 15kHz = 180kHz) may be defined as the frequency resource. Upon completing synchronization, the UE may identify a master system information block (MIB) or minimum system information (MSI) so as to identify information of a control resource set (CORESET) and identify information of an initial access bandwidth part (BWP) (e-15, e-20). As used herein, CORESET information refers to the location of a time/frequency transmission resource through which a control signal is transmitted from the base station, and, for example, refers to a resource location at which a PDCCH channel is transmitted. That is, the CORESET information indicates where first system information (system information block 1 (SIB 1)) is transmitted, and indicates in what frequency/time resource the PDCCH is transmitted. Upon reading the first system information, the UE may identify information regarding the initial BWP. If the UE becomes able to receive a control signal after completing synchronization of downlink signals with the base station as described above, the UE may perform a random access procedure in the initial BWP of the cell on which the UE camped, may request RRC connection configuration, and may receive an RRC message, thereby performing RRC connection configuration.

In the RRC connection configuration, multiple BWPs may be configured for one cell (Pcell or Pscell or Spcell). Multiple BWPs may be configured for the downlink in one cell, and multiple BWPs may be separately configured for the uplink.

The multiple BWPs may be indicated and configured by BWP identifiers such that they can be used as an initial BWP or a default BWP or a first active BWP or a dormant BWP or a first active BWP activated from dormant.

The initial BWP may be used as a BWP determined cell-specifically, which exists one for each cell, and may be used by a UE which initially accesses the cell so as to configure connection to the cell through a random access procedure, or may be used by the UE to perform synchronization after configuring the connection. In addition, the base station may configure an initial downlink BWP to be used in the downlink and an initial uplink BWP to be used in the uplink, with regard to each cell. In addition, configuration information regarding the initial BWP may be broadcast in system information 1 (SIB1) indicated by the CORESET, and may be reconfigured by the base station for the UE that accessed connection through an RRC message. In addition, the initial BWP may be used in the uplink and downlink by designating BWP identifier no. 0, respectively. That is, all UEs that accessed the same cell may use the same initial BWP by designating the same BWP identifier no. 0. This is because, when performing a random access procedure, the base station may transmit a RAR message in the initial BWP that all UEs can read, thereby having an advantage in that the contention-based random access procedure is facilitated.

The first active BWP may be configured differently in a UE specific manner, and may be indicated by designating a BWP identifier among multiple BWPs. The first active BWP may be configured for each of the downlink and the uplink, and may be configured as a first active downlink BWP and a first active uplink BWP by respective BWP identifiers. The first active BWP may be used to indicate which BWP, among multiple BWPs configured for one cell, is to be first activated and used. For example, if a Pcell or Pscell and multiple Scell are configured for a UE, if multiple BWPs are configured for each Pcell or Pscell or Scell, and if the Pcell or Pscell or Scell is activated, the UE may activate and use the first active BWP among the multiple BWPs configured for the Pcell or Pscell or Scell. That is, the first active downlink BWP may be activated and used for the downlink, and the first active uplink BWP may be activated and used for the uplink.

The operation in which the UE switches the current or activated downlink BWP with regard to the cell, thereby activating the same as a first active downlink BWP (or a BWP configured or indicated by an RRC message), or switches the current or activated uplink BWP with regard to the cell, thereby activating the same as a first active uplink BWP (or a BWP configured or indicated by an RRC message), may be performed when the UE receives an instruction to activate the cell or BWP that has been inactive, through an RRC message or a MAC control element or DCI. In addition, the UE may perform the operation upon receiving an instruction to transition the cell or BWP to a dormant state or an instruction to activate the same as a dormant BWP through an RRC message or a MAC control element or DCI. This is because, when the cell or BWP is activated, the current or activated downlink BWP inevitably switched and activated as a first active downlink BWP (or a BWP configured or indicated by an RRC message), or the uplink BWP is inevitably switched and activated as a first active uplink BWP (or a BWP configured or indicated by an RRC message), and the base station can effectively use carrier aggregation only if the frequency/channel is measured and reported with regard to the first active downlink/uplink BWP even when performing channel measurement reporting in the dormant state. The default BWP may be configured differently in a UE specific manner, and may be indicated by designating a BWP identifier among multiple BWPs. The default BWP may be characteristically configured with regard to the downlink only. The default BWP may be used as a BWP to which an activated BWP is to fall back, among multiple downlink BWPs, after a predetermined time. For example, a BWP inactivity timer may be configured through an RRC message for each cell or each BWP, and the timer may be started or restarted when data transmission/reception occurs in an activated BWP other than the default BWP, or may be started or restarted when an activated BWP is switched to another BWP. If the timer expires, the UE may fall back or switch the downlink BWP activated for the cell to the default BWP. As used herein, switching may refer to a procedure of deactivating the currently activated BWP and activating the BWP regarding which switching is indicated, and the switching may be triggered by an RRC message or a MAC control element or downlink control information (DCI) of L1 signaling (PDCCH). The switching may be triggered by indicating the BWP to be switched or activated, and the BWP may be indicated by a BWP identifier (for example, 0 or 1 or 2 or 3 or 4).

The reason the default BWP is applied and used with regard to the downlink only is because the base station can cause the UE to fall back to the default BWP over a predetermined time with regard to each cell and to receive the base station's instruction (for example, DCI of PDCCH), thereby facilitating base station scheduling. For example, if the default BWP of UEs that accessed one cell is configured by the base station to be an initial BWP, the base station may continuously perform a scheduling instruction with regard to the initial BWP only after a predetermined time. If the default BWP is not configured in the RRC message, the initial BWP may be considered as the default BWP so as to fall back to the initial BWP when the BWP inactivity timer expires.

As another method, the default BWP may be defined and configured with regard to the uplink as well, in order to increase the degree of freedom regarding the implementation of the base station, and then used like the default BWP of the downlink.

The dormant BWP refers to a BWP in a dormant mode of an activated cell or a dormant BWP in activated SCell, or when the dormant BWP is activated, the UE cannot exchange data with the base station, or does not monitor the PDCCH for identifying the base station's instruction, or transmits no pilot signal but performs channel measurement, and reports the measurement result regarding the measured frequency/cell/channel periodically or when an event occurs, according to the base station configuration. Therefore, the UE does not monitor the PDCCH in the dormant BWP of the activated cell and does not transmit pilot signals such that, compared with the normal BWP (or a BWP other than the dormant BWP) of the activated cell, or compared with the time when the normal BWP (or a BWP other than the dormant BWP) of the activated cell is activated, the battery can be saved. In addition, channel measurement reporting is performed, unlike the time when the cell is deactivated, such that the base station can quickly activate the normal BWP of the activated cell, based on the measurement report, or based on the report of measurement of the dormant BWP of the activated cell, and thus can quickly use carrier aggregation, thereby reducing transmission delay.

The first active BWP switched from a dormant state or from a dormant BWP and activated (or a first active non-dormant BWP or a BWP configured or indicated by an RRC message) may be a BWP which the UE needs to activate by switching the current or activated BWP of an activated cell according to a corresponding instruction, or a BWP which is to be activated from a dormant state configured in the RRC message, if the UE is instructed by the base station through DCI of the PDCCH or a MAC CE or an RRC message to switch the BWP of the activated cell from the dormant BWP to a normal BWP (or a BWP other than the dormant BWP), or if the UE is instructed to switch or transition the activated BWP from the dormant BWP to the normal BWP, or if the UE is instructed to switch or transition or activate the active BWP from the dormant BWP to the normal BWP (for example, the first active BWP activated from dormancy), when the UE is operating the BWP of one activated cell as a dormant BWP, or when the activated BWP in the activated cell is a dormant BWP, or when the UE has switched to the dormant BWP in the cell.

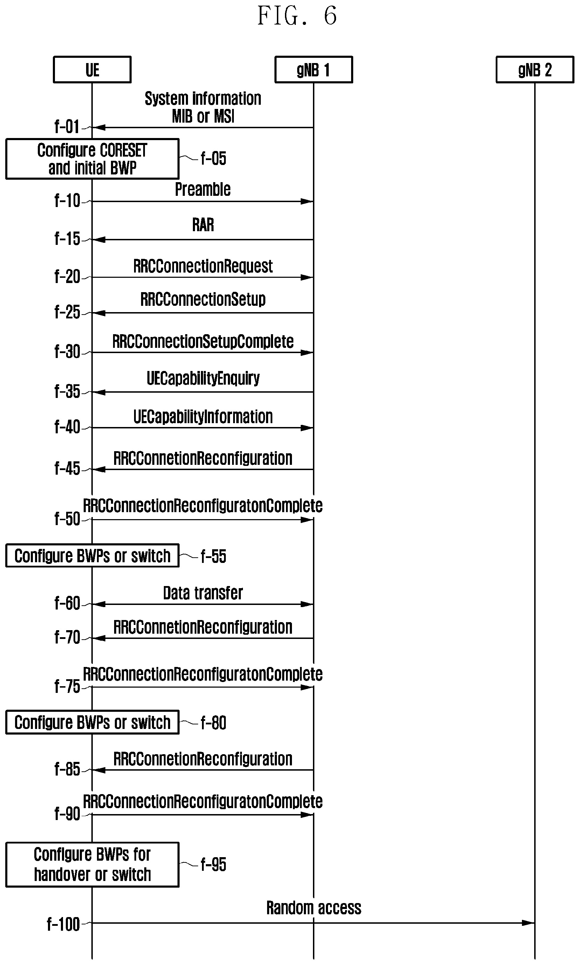

FIG. 6 illustrates a procedure in which a UE switches from an RRC idle mode to an RRC connected mode in a next-generation mobile communication system according to the disclosure, and illustrates a procedure in which bearer configuration information for connection or cell group or cell configuration information or channel measurement configuration information is configured for a UE.

One cell in which a base station provides a service may service a substantially wide frequency band. The UE may initially search for the entire frequency band provided by the business operator (PLMN) at a predetermined resource block level (for example, with regard to each 12 RBs). For example, the UE may start to search for a primary synchronization sequence (PSS)/secondary synchronization sequence (SSS) in the entire system bandwidth at the RB level. If the UE detects the signals while searching for the PSS/SSS at the RB level, the signals may be read and interpreted (decoded), thereby identifying the boundary between subframes and radio transmission resource frames. Upon completing synchronization, the UE may read system information of the cell on which the UE currently camps. For example, the UE may identify a master system information block (MIB) or minimum system information (MSI) so as to identify information of a control resource set (CORESET), and may read system information so as to identify initial bandwidth part (BWP) information (f-01, f-05). As used herein, CORESET information refers to the location of a time/frequency transmission resource through which a control signal is transmitted from the base station, and, for example, refers to a resource location at which a PDCCH channel is transmitted.

If the UE becomes able to receive a control signal after completing synchronization of downlink signals with the base station as described above, the UE may perform a random access procedure in the initial BWP, may receive a random access response, may request RRC connection configuration, and may receive an RRC message, thereby performing RRC connection configuration (f-10, f-15, f-20, f-25, f-30).

After the default RRC connection configuration is completed, the base station may send an RRC message to the UE to inquire about the UE's capability in order to identify the UE capability (UECapabilityEnquiry, f-35). As another method, the base station may inquire the MME or AMF about the UE's capability in order to identify the UE capability. This is because, if the UE has previously accessed, the MMF or AMF might have stored UE capability information. If there is no UE capability information that the base station wants, the base station may request the UE to provide UE capability. When reporting the UE capability, the UE may report whether the UE supports a dormant BWP with regard to the SCell of each cell group (master cell group or secondary cell group), or whether the UE supports the first embodiment or second embodiment or third embodiment or fourth embodiment of the disclosure, or whether the UE supports a dormant BWP with regard to the PSCell of each cell group, or whether the UE supports a cell group suspension or resumption procedure with regard to the PSCell of each cell group, or the number of supported cell groups, or the like to the base station as UE capability. In addition, in the RRC connection resumption procedure, the UE may use an RRCResume message to report whether configuration information of the SCell of the master cell group or the SCell of the secondary cell group or the PSCell of the secondary cell group can be stored and restored, or whether the same can be discarded, or whether the same can be partially reconfigured, or whether the same can be activated, to the base station as UE capability.

The reason the base station sends an RRC message to the UE to identify UE capability is to identify UE capability and to recognize what degree of frequency band the UE can read, for example, or the domain of frequency bands that can be read. In addition, the base station may configure an appropriate BWP for the UE after identifying the UE capability. Upon receiving the RRC message for inquiring about the UE capability, the UE may indicate, in response thereto, the range of bandwidths supported by the UE, or may indicate what range of bandwidths is supported in the current system bandwidth, or the like, by using an offset from the reference center frequency, or may directly indicate the starting point and last point of the supported frequency bandwidth, or may indicate the center frequency and bandwidth (f-40).

The BWP may be configured by an RRCSetup message of RRC connection configuration or RRCResume message f-25 or RRCReconfiguration message f-45, f-70. The RRC message may include configuration information regarding a PCell or a Pscell or multiple cells, and multiple BWPs may be configured with regard to each cell (PCell or Pscell or Scell). When multiple BWPs are configured with regard to each cell, multiple BWPs to be used in the downlink of each cell may be configured. In the case of an FDD system, multiple BWPs to be used in the uplink of each cell may be configured separately from the downlink BWPs. In the case of a TDD system, multiple BWPs to be commonly used in the downlink and uplink of each cell may be configured.

Cell configuration information of each cell (PCell or Pscell or Scell) or information for BWP configuration may include some of the following pieces of information:
- Cell identifier (SCell index)
- Cell configuration information
   ▪ Cell-specific or BWP-specific first channel measurement configuration information
   ▪ Cell-specific or BWP-specific second channel measurement configuration information
- The cell's downlink BWP configuration information
   ▪ Initial downlink BWP configuration information
   ▪ Multi-BWP configuration information and BWP ID corresponding to each BWP
   ▪ The cell or downlink BWP's initial state configuration information (for example, active state or dormant state or deactivated state)
   ▪ BWP ID indicating a first active downlink BWP
   ▪ BWP ID indicating a default BWP
   ▪ Configuration information for PDCCH monitoring regarding each BW. For example, CORESET information or search space resource information, or PDCCH transmission resource, cycle, subframe number information or the like
   ▪ BWP ID indicating a dormant BWP
   ▪ BWP ID indicating a first active BWP activated from dormancy
   ▪ BWP inactivity timer configuration and timer value
   ▪ Cell-specific or BWP-specific first channel measurement configuration information
   ▪ Cell-specific or BWP-specific second channel measurement configuration information
- The cell's uplink BWP configuration information
   ▪ Initial uplink BWP configuration information
   ▪ Multi-BWP configuration information and BWP ID corresponding to each BWP
   ▪ The cell or downlink BWP's initial state configuration information (for example, active state or dormant state or deactivated state)
   ▪ BWP ID indicating a first active uplink BWP
- Configuration information regarding a transmission resource to perform channel measurement in a dormant BWP or in a BWP other than the dormant BWP and to report the measurement result (for example, PCell or PUCCH SCell or PSCell's PUCCH transmission resource information)

The first channel measurement configuration information that may be included in the RRC message (RRCReconfiguration or RRCResume) and configured may include, in order to quickly activate the cell group, configuration information, such as the cycle regarding a frequent channel measurement signal (for example, radio resource or temporary reference signal (TRS) or synchronization signal block (SSB) or channel state information reference signal (CSI-RS) or reference signal (RS)) such that the base station can temporarily transmit a channel measurement signal a lot or often such that channel measurement can be quickly performed in the cell in configuration information of a cell (for example, Pcell or PSCell or SCell) of the cell group, or transmitted transmission resource information (frequency or time transmission resource used to transmit the frequent channel measurement signal) or an interval or the number of times (the number of times the frequent channel measurement signal is transmitted) or a timer value (the time during which the frequent channel measurement signal is transmitted) or a time interval (interval in which the frequent channel measurement signal is transmitted (for example, offset of time unit (slot or subframe or symbol or the like))) or a transmission resource or cycle or interval or timing or offset by which the UE needs to report the measurement result. The first channel measurement configuration information may be characterized by configuring a short reporting cycle (or transmission resource) at which the UE can report the channel measurement result, or configuring a transmission resource for channel measurement such that the base station can transmit many channel measurement signals (or transmission resources (for example, radio resources or temporary reference signals (TRS))) a lot or frequently in order for the base station to support the UE's quick channel measurement or many signal measurements. The first channel measurement configuration information may include configuration information regarding a channel measurement signal for a specific UE (or UEs) in the cell or BWP, to be used by the base station. For example, the first channel measurement configuration information may include the cycle of the channel measurement signal or the number of transmitted signals or an offset regarding the period of time during which signals are transmitted or the time at which signals are transmitted or the time length between transmitted signals or a list of multiple transmittable channel measurement signals or time transmission resources (or frequency transmission resources) indicating the location of transmitted signals or transmission resources (time transmission resources or frequency transmission resources) to be used to report measurement results or the measurement result reporting cycle or the like. In addition, the first channel measurement configuration information may be configured differently for each cell or each BWP with regard to multiple cells or BWPs configured in the RRC message, and beam-related configuration information (transmission configuration indication (TCI) state or quasi co-location (QCL)) such as the beam direction or beam number or beam location may be configured together such that the UE can easily measure transmission resources for channel measurement. In addition, the first channel measurement configuration information may be used to configure a timing advance (TA) value (or offset value) for synchronizing the base station's downlink signal or the base station's uplink signal, or a time alignment timer (TAT) indicating the validity of the TA value, or a TAT value such that correct channel measurement or channel measurement reporting can be performed. In addition, the first channel measurement configuration information configured by using an RRC message may include multiple pieces of channel measurement signal information, and an RRC message or a MAC CE or DCI may be used to indicate a specific piece of channel measurement signal information among the configured multiple pieces of channel measurement signal information, or beam configuration information, such that the UE can perform channel measurement or perform channel measurement reporting by applying or using the indicated channel measurement signal information or beam configuration information. According to the method of indication, mapping between a bitmap or an index or an identifier and each piece of channel measurement signal information configured above may be defined, and an indication may be made based thereon. As another method, the RRC message or MAC CE may be used to configure or indicate channel measurement signal information such that the UE can perform channel measurement or perform channel measurement reporting by applying or using the configured (or indicated) channel measurement signal information.

The first channel measurement configuration information proposed in the disclosure may be characterized in that the same is initially deactivated when configured by an RRC message or after a handover, and may be activated later by a MAC control element or DCI information of a PDCCH or an RRC message proposed in the disclosure. When configured by the RRC message as described above, the initial state needs to be a deactivated state such that the base station can easily manage the UE's cell state or the channel measurement performing procedure, and the UE can be accurately timed regarding when and how channel measurement is to be performed, without the processing delay problem of the RRC message.

In addition, second channel measurement configuration information may be included or configured in the RRC message (RRCReconfiguration or RRCResume). The second channel measurement configuration information may include general channel measurement configuration information such as a channel measurement signal's transmission resource or cycle or time interval or number of times, or a transmission resource or cycle or time interval for channel measurement reporting.

The configured initial BWP or default BWP or first active BWP may be used for the following purposes, and may operate as follows according to the purposes.

The initial BWP may be used as a BWP determined cell-specifically, which exists one for each cell, and may be used by a UE which initially accesses the cell so as to configure connection to the cell through a random access procedure, or may be used by the UE to perform synchronization after configuring the connection. In addition, the base station may configure an initial downlink BWP to be used in the downlink and an initial uplink BWP to be used in the uplink, with regard to each cell. In addition, configuration information regarding the initial BWP may be broadcast in system information 1 (SIB1) indicated by a CORESET, and may be reconfigured by the base station for the UE that accessed connection through an RRC message. In addition, the initial BWP may be used in the uplink and downlink by designating BWP identifier no. 0, respectively. That is, all UEs that accessed the same cell may use the same initial BWP by designating the same BWP identifier no. 0. This is because, when performing a random access procedure, the base station may transmit a RAR message in the initial BWP that all UEs can read, thereby having an advantage in that the contention-based random access procedure is facilitated.

The first active BWP may be configured differently in a UE specific manner, and may be indicated by designating a BWP identifier among multiple BWPs. The first active BWP may be configured for each of the downlink and the uplink, and may be configured as a first active downlink BWP and a first active uplink BWP by respective BWP identifiers. The first active BWP may be used to indicate which BWP, among multiple BWPs configured for one cell, is to be first activated and used. For example, if a Pcell or a Pscell and multiple Scell are configured for a UE, if multiple BWPs are configured for each Pcell or Pscell or Scell, and if the Pcell or Pscell or Scell is activated, the UE may activate and use the first active BWP among the multiple BWPs configured for the Pcell or Pscell or Scell. That is, the first active downlink BWP may be activated and used for the downlink, and the first active uplink BWP may be activated and used for the uplink.

The operation in which the UE switches the current or activated downlink BWP with regard to the cell, thereby activating the same as a first active downlink BWP (or a BWP configured or indicated by an RRC message), or switches the current or activated uplink BWP with regard to the cell, thereby activating the same as a first active uplink BWP (or a BWP configured or indicated by an RRC message), may be performed when the UE receives an instruction to activate a cell or the BWP of an activated cell, which has been inactive or dormant, or an instruction to switch or activate from the inactive or dormant BWP to a normal BWP, through an RRC message or a MAC control element or DCI of a PDCCH. In addition, the UE may switch or activate the BWP to a dormant BWP, or hibernate the BWP, when the UE is instructed to transition an activated cell or BWP to a dormant state or to switch the same to a dormant BWP or to activate the same, through an RRC message or a MAC control element or DCI of a PDCCH.

The switching to hibernation or a dormant BWP or activation of the dormant BWP may mean performing of an operation proposed in the disclosure in a dormant state. For example, the UE may not perform PDCCH monitoring and may perform an operation of measuring the channel with regard to the downlink BWP (or dormant BWP) and reporting the same to the base station. As another method, when the activated cell or BWP is activated or switched to a normal BWP, the downlink BWP will be inevitably switched and activated as a first active downlink BWP, and the uplink BWP will be inevitably switched and activated as a first active uplink BWP, and the dormant BWP may thus be configured as the first active downlink or uplink BWP or as a default BWP. The default BWP may be configured differently in a UE specific manner, and may be indicated by designating a BWP identifier among multiple BWPs. The default BWP may be characteristically be configured with regard to the downlink only. The default BWP may be used as a BWP to which an activated BWP is to fall back, among multiple downlink BWPs, after a predetermined time. For example, a BWP inactivity timer may be configured through an RRC message for each cell or each BWP, and the timer may be started or restarted when data transmission/reception occurs in an activated BWP other than the default BWP, or may be started or restarted when an activated BWP is switched to another BWP. If the timer expires, the UE may fall back or switch the downlink BWP activated for the cell to the default BWP. As used herein, switching may refer to a procedure of deactivating the currently activated BWP and activating the BWP regarding which switching is indicated, and the switching may be triggered by an RRC message or a MAC control element or downlink control information (DCI) of L1 signaling (PDCCH). The switching may be triggered by indicating the BWP to be switched or activated, and the BWP may be indicated by a BWP identifier (for example, 0 or 1 or 2 or 3 or 4).

The reason the default BWP is applied and used with regard to the downlink only is because the base station can cause the UE to fall back to the default BWP over a predetermined time with regard to each cell and to receive the base station's instruction (for example, DCI of PDCCH), thereby facilitating base station scheduling. For example, if the default BWP of UEs that accessed one cell is configured by the base station to be an initial BWP, the base station may continuously perform a scheduling instruction with regard to the initial BWP only after a predetermined time. If the default BWP is not configured in the RRC message, the initial BWP may be considered as the default BWP so as to fall back to the initial BWP when the BWP inactivity timer expires.

As another method, the default BWP may be defined and configured with regard to the uplink as well, in order to increase the degree of freedom regarding the implementation of the base station, and then used like the default BWP of the downlink.

The dormant BWP refers to a BWP in a dormant mode of an activated cell or a dormant BWP in activated SCell, or when the dormant BWP is activated, the UE cannot exchange data with the base station, or does not monitor the PDCCH for identifying the base station's instruction, or transmits no pilot signal but performs channel measurement, and reports the measurement result regarding the measured frequency/cell/channel periodically or when an event occurs, according to the base station configuration. Therefore, the UE does not monitor the PDCCH in the dormant BWP of the activated cell and does not transmit pilot signals such that, compared with the normal BWP (or a BWP other than the dormant BWP) of the activated cell, or compared with the time when the normal BWP (or a BWP other than the dormant BWP) of the activated cell is activated, the battery can be saved. In addition, channel measurement reporting is performed, unlike the time when the cell is deactivated, such that the base station can quickly activate the normal BWP of the activated cell, based on the measurement report, or based on the report of measurement of the dormant BWP of the activated cell, and thus can quickly use carrier aggregation, thereby reducing transmission delay.

The first active BWP (or first active non-dormant BWP) activated from dormancy may be the BWP of an activated cell, which the UE needs to switch or activate according to the instruction, and which is activated from dormancy as configured in an RRC message, if the UE is instructed by the base station through DCI of a PDCCH or a MAC CE or an RRC message to switch the BWP of the activated cell from the dormant BWP to a normal BWP (or a BWP other than the dormant BWP), or if the UE is instructed to switch or transition the activated BWP from the dormant BWP to the normal BWP, or if the UE is instructed to switch or transition or activate the active BWP from the dormant BWP to the normal BWP (for example, the first active BWP activated from dormancy), when the UE is operating the BWP of one activated cell as a dormant BWP, or when the activated BWP in the activated cell is a dormant BWP, or when the UE has switched to the dormant BWP in the cell.

As used herein, the description that a first BWP is switched to a second BWP may mean that the second BWP is activated, or that the first BWP that has been active is deactivated, and the second BWP is then activated.

In addition, in the RRCSetup message of RRC connection configuration or in the RRCResume message f-25, or in the RRCReconfiguration message f-45, a state transition timer may be configured such that the UE can autonomously perform a state transition even without being instructed by the base station through an RRC message or a MAC control element or DCI of the PDCCH. For example, a cell deactivation timer (ScellDeactivationTimer) may be configured for each cell and, if the cell deactivation timer expires, the cell may be transitioned to a deactivated state.

In addition, in the RRCSetup message of RRC connection configuration or in the RRCResume message f-25, or in the RRCReconfiguration message f-45, frequency measurement configuration information and frequency measurement gap configuration information and the like may be configured, and the message may include frequency measurement object information. In addition, in the RRCSetup message of RRC connection configuration or in the RRCResume message f-25, or in the RRCReconfiguration message f-45, a function for reducing the UE's power consumption (power saving mode) may be configured, and together with the function for reducing power consumption, configuration information, such as a discontinuous reception (DRX) cycle or offset or on-duration interval (an interval in which the UE needs to monitor the PDCCH) or time information, or time information regarding when the PDCCH is to be monitored or detected from the base station prior to the on-duration interval in the DRX cycle, or short time cycle information or the like may be configured. If the function for reducing the UE's power consumption has been configured, the UE may configure a DRX cycle and may detect a wakeup signal (WUS) in the interval configured such that the PDCCH of the base station is to be monitored prior to the on-duration interval, and the base station may instruct the UE, through DCI of the PDCCH of the WUS signal, whether to skip (or not perform) PDCCH monitoring in the immediately following on-duration interval or to perform the same. The UE always has to monitor the PUCCH in the on-duration interval, and the base station may instruct the UE not to monitor the PDCCH in the on-duration interval through the WUS signal, thereby reducing the UE's battery consumption.

After the RRC connection configuration is completed, the UE may configure multiple BWPs according to the instruction configured by the RRC message. In addition, in order to save the battery, one of the multiple configured BWPs, or a small number of BWPs among the same, may be activated. For example, one BWP to be activated may be indicated. In addition, the base station may indicate activation of a BWP through an RRC message or a MAC CE or L1 signaling (PHY layer control signal such as DCI of PDCCH), thereby instructing to switch from the initial access BWP to a new BWP. As another method, new bit map information may be defined in the DCI of the PDCCH, thereby indicating whether or not to active a normal BWP (or a BWP other than the dormant BWP) or to activate the dormant BWP or to deactivate the BWP. As another method, the bitmap may be used to indicate whether or not to activate a normal BWP (for example, first active BWP to be activated from hibernation) or to activate the dormant BWP or to switch to the dormant BWP or to perform BWP switching. The initial access BWP may have many other newly accessing users, and it may thus be substantially advantageous, in terms of scheduling, to allocate a new BWP and to separate manage the connected users. This is because the initial access BWP is not configured for each UE, but may be shared and used commonly by all UEs. In addition, in order to reduce signaling overhead, the MAC control element or L1 signaling or system information may be used to dynamically indicate the default BWP.

In addition, the RRC message (RRCSetup message or RRCResume message f-25 or RRCReconfiguration message f-70) may include configuration information for a cell group. The configuration information for a cell group may include some or multiple pieces of information among the following pieces of information, or may indicate the state or procedure regarding each cell group or application or release of configuration information or the like.
- Cell group identifier (for example, cell group identifier or index) indicating a cell group
- An indicator indicating the state of a cell group (for example, active state or suspended state or deactivated state)
- An indicator indicating the state of a cell group (for example, an indicator indicating that the cell group is to be suspended (or deactivated) (for example, Cellgroup (SCG) suspension indicator) or an indicator indicating that the cell group is to be resumed (or activated) (for example, Cellgroup(SCG(resumption indicator))
- An indicator that triggers a procedure of a corresponding protocol layer device (for example, SDAP layer device of PDCP layer device or RLC layer device or MAC layer device) according to an indicator indicating the state of a cell group (for example, a PDCP reestablishment indicator or a PDCP data restoration indicator or an indicator that triggers a new procedure or an RLC reestablishment indicator or a MAC layer reset indicator or a MAC layer device partial reset indicator)

If an indicator indicating that a cell group is to be suspended (or deactivated) is included, second DRX configuration information (for example, monitoring interval or on-duration length or cycle or offset or the like) may be configured such that PDCCH monitoring can be performed in the PSCell of the cell group with a substantially long cycle. For example, upon receiving the indicator indicating that the cell group is to be suspended, the UE may apply the second DRX configuration information and thus perform PDCCH monitoring based on a substantially long cycle, thereby saving UE power. As another method, upon receiving the indicator indicating that the cell group is to be suspended, the UE may apply BWP configuration information regarding the PSCell of the cell group so as to activate or switch the downlink BWP of the PSCell of the cell group to a dormant BWP, and may perform the UE operation in a cell having an activated dormant BWP proposed in the disclosure. In addition, upon receiving the indicator indicating that the cell group is to be suspended, the UE may deactivate all SCells configured in the cell group. As another method, upon receiving the indicator indicating that the cell group is to be suspended, the UE may activate or switch the downlink BWP to a dormant BWP with regard to an SCell having a configured dormant BWP, among the SCells configured in the cell group, and may perform the UE operation in a cell having an activated dormant BWP proposed in the disclosure, or may deactivate SCells having no configured dormant BWP. As another method, upon receiving an indicator indicating that a cell group is to be suspended through the RRC message, the UE may activate or deactivate or hibernate each SCell, or may activate the dormant BWP, according to configuration information or indicator regarding each SCell of the cell group included in the RRC message. Alternatively, before or after receiving the indicator indicating that a cell group is to be suspended, the UE may activate or deactivate or hibernate each SCell of the cell group, or may activate the dormant BWP, according to an indicator (for example, bitmap) of the PDCCH or a MAC control element or an RRC message.
- Configuration information regarding a transmission resource to perform channel measurement and to report the measurement result in a dormant BWP or in a BWP other than the dormant BWP (for example, PUCCH transmission resource information of the PCell or PUCCH SCell or PSCell)
- If an indicator indicating that the state of a cell group is to be resumed (or activated) is included, first DRX configuration (for example, monitoring interval or on-duration length or cycle or offset or the like) may be configured such that PDCCH monitoring can be performed again in the PScell of the cell group. Alternatively, first DRX configuration information stored with regard to the cell group may be restored and applied. For example, upon receiving the indicator indicating that a cell group is to be resumed, the UE may apply the first DRX configuration information stored therein or received from the RRC message and may perform PDCCH monitoring, thereby resuming data transmission or reception. As another method, upon receiving the indicator indicating that a cell group is to be resumed, the UE may apply BWP configuration information regarding the PSCell of the cell group so as to activate or switch the downlink BWP of the PSCell of the cell group to a BWP other than the dormant BWP (for example, a BWP configured by the RRC message), and may perform the UE operation in a cell having an activated normal BWP (a BWP other than the dormant BWP) proposed in the disclosure. Alternatively, upon receiving the indicator indicating that a cell group is to be resumed, the UE may apply random access configuration information (random access transmission resource information (time or frequency transmission resource) for preamble transmission or designated preamble information or the like) stored therein or received from the RRC message so as to trigger a random access procedure in the PSCell of the cell group. As another method, when the indicator indicating that a cell group is to be resumed is received, and if the RRC message includes random access configuration information (random access transmission resource information (time or frequency transmission resource) for preamble transmission or designated preamble information or the like), the UE may apply the random access configuration information so as to trigger a random access procedure (for example, contention-free random access) in the PSCell of the cell group. If the RRC message that indicates resumption or activation of a cell group includes no random access configuration information (random access transmission resource information (time or frequency transmission resource) for preamble transmission or designated preamble information or the like), a random access procedure (for example, contention-free random access) may be triggered in the PSCell of the cell group, or a random access procedure (contention-based random access or 2-step random access) may be triggered based on system information. If there is random access configuration information (random access transmission resource information (time or frequency transmission resource) for preamble transmission or designated preamble information or the like) stored in the UE before receiving the indicator indicating that a cell group is to be resumed, the information may be released or discarded. As another method, the UE may perform PDCCH monitoring in the indicated or configured cell group or cell and may trigger and perform a random access procedure as indicated in the PDCCH.
- If the indicator indicating that the state of a cell group is to be resumed (or activated) is included, or upon receiving the indicator indicating that a cell group is to be resumed, the UE may activate all SCells configured in the cell group. As another method, upon receiving the indicator indicating that a cell group is to be resumed, the UE may activate or switch the downlink BWP to a BWP other than the dormant BWP (for example, a BWP configured in an RRC message or a first active BWP) with regard to an SCell having a configured dormant BWP among the SCells configured in the cell group, and may perform the UE operation in a cell having an activated BWP other than the dormant BWP proposed in the disclosure, or may activate with regard to an SCell having no configured dormant BWP. As another method, upon receiving the indicator indicating that a cell group is to be resumed in the RRC message, the UE may activate or deactivate or hibernate each SCell, or may activate the dormant BWP, according to configuration information or indicator regarding each SCell of the cell group included in the RRC message. Alternatively, before or after receiving the indicator indicating that a cell group is to be resumed, the UE may activate or deactivate or hibernate each SCell of the cell group, or may activate the dormant BWP, according to an indicator (for example, bitmap) of the PDCCH or a MAC control element or an RRC message.
- An indicator which adds cell group configuration
- An indicator which releases cell group configuration
- Security configuration information (security key information or security key information for a cell group or additional information (for example, sk-counter))
- An indicator which indicates a handover or a cell group addition or a cell group change (for example, Reconfiguration With Sync indicator or mobilitycontrolInfo indicator)
- First channel measurement configuration information for each cell or each BWP
- Second channel measurement configuration information for each cell or each BWP

It is proposed that, if the RRC message (for example, RRCReconfiguration message) includes a cell group suspension indicator, no indicator indicating a handover or a cell group addition or a cell group change (for example, ReconfigurationWithSync indicator or mobilitycontrolInfo indicator) be included, and if an indicator for resuming a cell group or configuration information for configuring the same is included, an indicator indicating a handover or a cell group addition or a cell group change (for example, Reconfiguration With Sync indicator or mobilitycontrolInfo indicator) be included. This is because, when a cell group is resumed, connection to the cell group needs to be made again, and it is thus necessary to make synchronization or to receive system information or to perform a random access procedure if necessary.

Next, the disclosure newly proposes a dormant BWP in a next-generation mobile communication system, and specifically proposes UE operations in each BWP when each BWP is transitioned or switched.

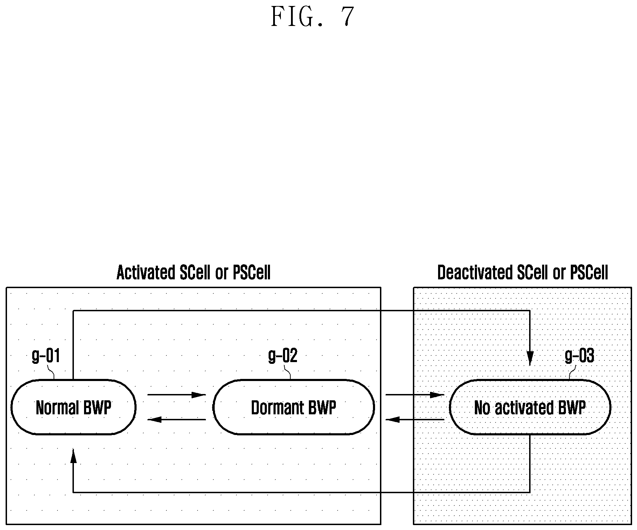

FIG. 7 illustrates a bandwidth part-specific state transition or bandwidth part switching procedure proposed in the disclosure.

As in FIG. 7, the BWP of each cell (for example, SCell or PSCell) of each cell group of a UE may be activated to be a normal BWP g-01, or activated as a dormant BWP g-02, or deactivated g-03. In addition, the normal BWP or dormant BWP may be activated or deactivated as indicated by an RRC message's configuration information or a MAC control element or DCI of PDCCH.

The operation of transitioning the state (activation or deactivation or hibernation) for each BWP of a cell proposed in the disclosure, or the operation of activating a normal BWP or activating a dormant BWP or activating a first active BWP activated from dormancy or deactivating the normal or dormant BWP may be performed by indicating or configurating one of the following cases:
- If a cell's BWP state is configured by an RRC message, or if each cell's BWP is configured by the RRC message, and if a dormant BWP is configured for the cell, or if the first active BWP is configured as a dormant BWP, the cell may be started by switching or activating the dormant BWP, and operations in the dormant BWP may be performed.
- If a cell activation or deactivation or hibernation MAC CE is received,
- If a MAC CE instructing the first active BWP or dormant BWP to be activated or deactivated from the normal BWP or dormancy is received,
- If DCI of a PDCCH instructing the first active BWP or dormant BWP to be activated or deactivated or switched from the normal BWP or dormancy is received,
- If no cell hibernation timer is configured for an active cell, and if the configured cell deactivation timer has expired,
- If no BWP hibernation timer is configured for an active cell, and if the configured BWP inactivity timer (for example, bwpInactivityTimer) has expired,

In addition, the state transition operation or dormant BWP operating method proposed in the disclosure may have the following characteristics:
- No BWP can be configured in the Spcell (Pcell or Pscell) (or the cell's downlink BWP or uplink BWP), and only a normal BWP is configured and is always activated. In the Spcell, major control signals are transmitted/received with synchronization, and if the BWP of the Spcell is hibernated or deactivated, or operated as a dormant BWP, connection to the base station is broken, and the same thus needs to remain activated always.
- If a PUCCH is configured even in the case of a BWP of the Scell or SCell, no dormant state or dormant BWP can be configured. There may be other cells which need to send feedback such as a HARQ ACK/NACK through the PUCCH, and the activated state, or a normal BWP needs to be activated and used.
- Due to the above-mentioned characteristics, the cell inactivity timer (ScellDeactivationTimer) or BWP hibernation timer is not applied to the Spcell or the BWP of the Spcell and the SCell having a configured PUCCH or the BWP of the SCell, and may be driven with regard to other Scells only.
- The cell or BWP hibernation timer (ScellHibernationTimer) is prioritized over the cell or BWP state deactivation timer (ScellDeactivationTimer). In addition, if one timer value is configured by the RRC message, the same value may be applied to all cells. As another method, Scell-specific or BWP-specific characteristics may be considered such that the base station uses different timer values for respective Scells or BWPs.
- A cell or BWP initially operates in a deactivated state, by default, unless activation or hibernation is indicated in an RRC message.

In the disclosure, the uplink may indicate an uplink BWP, and the downlink may indicate a downlink BWP. This is because only one activated or hibernated BWP can be operated with regard to each uplink or downlink.

The disclosure is characterized in that an activated state or a deactivated state or a dormant state is operated and, when a cell or BWP performs transition or switching, the same is performed at the BWP level, and is characterized in that, when state transition or switching occurs at the BWP level, the BWP (downlink BWP or uplink BWP) to which state transition or switching is indicated performs state transition or switching according to the state transition or switching indication. For example, if a BWP (downlink BWP or uplink BWP) transitions from an activated state to a dormant state or switches (or is activated) to a dormant BWP, the BWP may be transitioned to a dormant state or switched (or activated) to a dormant BWP.

As used herein, BWP switching means that, when BWP switching is indicated by DCI of the PDCCH, and if the switching is indicated by a BWP identifier while allocating a downlink assignment, the downlink BWP is switched to the BWP indicated by the BWP identifier, and when BWP switching is indicated by DCI of the PDCCH, and if the switching is indicated by a BWP identifier while allocating a UL grant, the uplink BWP is switched to the BWP indicated by the BWP identifier. In addition, the PDCCH's DCI format is different between the format (format1) for the downlink assignment and the format (format0) for the UL grant, and UE operations may thus operate according to the DCI format, even if the uplink and downlink are not separately described.

The method for operating state transition at the bandwidth part level proposed in the disclosure, and operations of bandwidth parts according to respective states, may be expanded and applied in various embodiments. Specific embodiments in which the proposal of the disclosure is expanded and applied will hereinafter be described.

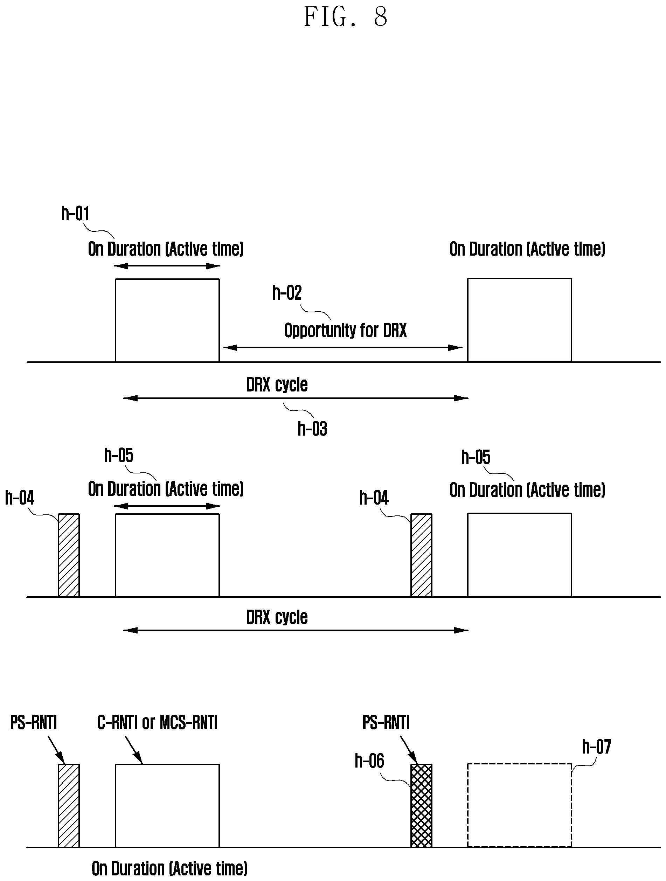

FIG. 8 illustrates a DRX configurating or DRX operating method which can save a UE's battery proposed in the disclosure.

In FIG. 8, the base station may configure a DRX function, such as a DRX cycle or starting point or offset or on-duration (active time), for the UE in a PCell or SCell or PSCell through an RRC message as in FIG. 6. It is considered in the disclosure that the DRX function is configured in a PCell or SCell or PSCell.

After a DRX function is configured in a PCell (or SpCell or PSCell) as described above, the UE may apply the DRX function in consideration of the DRX cycle h-03 and the DRX starting time or offset. When the DRX function is applied, the UE may monitor a PDCCH which can be received from the base station in the PCell only during the on-duration (or active time) h-01 of the DRX, or DCI of the PDCCH. In addition, the UE may not monitor the PDCCH or DCI of the PDCCH outside the active time h-02 of the DRX function, thereby reducing the UE's battery consumption.

In FIG. 6, the base station may configure a power saving function (power saving mode) for the UE through an RRC message in order to further improve the UE's battery consumption reduction. If the power saving function is configured together with the DRX function, the UE monitors the PDCCH outside the active time during a short time interval h-04 configured by the RRC before the active time h-01 during which the UE needs to monitor the PDCCH according to the DRX function, and monitors and receives a wakeup signal (WUS) (or DCI with CRC scrambled by PS-RNTI (DCP) signal) outside the active time. The bit of DCI of the PDCCH of the WUS signal may be used by the base station to indicate whether the UE has to perform PDCCH monitoring at the next active time h-05, h-07 or does not have to perform PDCCH monitoring.

For example, the UE for which the power saving function or DRX function is configured monitors a WUS signal during a short time interval h-04 configured by the RRC message before each active time h-05. If the value of bit of DCI of the PDCCH regarding the next active time h-05, h-07 in the received WUS signal has 0 (or 1), the UE may be instructed not to monitor the PDCCH during the next active time h-07, or a timer corresponding to the next active time may not be driven by the MAC layer device, thereby instructing the UE not to monitor the PDCCH. If the value of bit of DCI of the PDCCH regarding the next active time h-05, h-07 in the received WUS signal has 1 (or 0), the UE may be instructed to monitor the PDCCH during the next active time h-05, or a timer corresponding to the next active time may be driven by the MAC layer device, thereby instructing the UE to monitor the PDCCH.

In addition, the UE may not monitor WUS signals or the PDCCH for detecting WUS signals during the active time.

In addition, the UE for which the power saving function or DRX function is configured may detect signals by identifying the PDCCH with a first RNTI identifier (for example, PS-RNTI) when monitoring WUS signals during the short time interval h-04 configured in the RRC message before each active time h-05. The first RNTI identifier (for example, PS-RNTI) may be configured for multiple UEs, and the base station may use the first RNTI identifier (for example, PS-RNTI) to unilaterally instruct the multiple UEs whether or not to monitor the PDCCH during the next active time.

In addition, the UE for which the power saving function or DRX function is configured may detect signals, based on a second RNTI (for example, C-RNTI) uniquely configured for the UE through an RRC message, or a third RNTI (for example, MCS-C-RNTI), or a fourth RNTI (SPS-C-RNTI or CS-RNTI), when monitoring and detecting the PDCCH during the active time h-05. The second RNTI (for example, C-RNTI) may be used to indicate a normal UE's scheduling, the third RNTI (for example, MCS-C-RNTI) may be used to indicate the UE's modulation and coding scheme, and the fourth RNTI (SPS-C-RNTI or CS-RNTI) may be used to indicate the UE's periodic transmission resource.

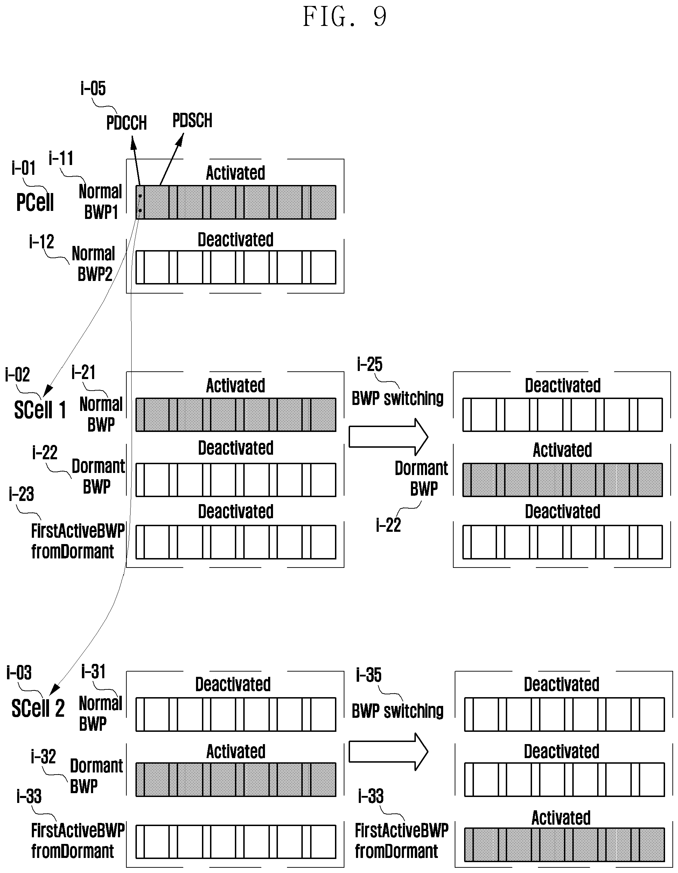

FIG. 9 illustrates the concept of a method for operating a dormant BWP in an activated SCell or PSCell proposed in the disclosure.

As in FIG. 6, the base station may configure multiple SCells for the UE through an RRC message for the sake of carrier aggregation, may allocate each SCell identifier, may configure a dormant BWP with regard to each SCell. Alternatively, the base station may configure multiple cell groups for the sake of dual connectivity, may allocate cell group identifiers, may configure or indicate a cell group suspension indicator with regard to each cell group or the PSCell of each cell group, or may configure a dormant BWP. In addition, the multiple SCells may be configured to be included in each SCell group, and one SCell group may include multiple SCells. An SCell group identifier may be allocated to each SCell group, and multiple SCell identifiers may be configured to be included in or mapped to each SCell group identifier. The Scell identifier value or SCell group identifier value may have a predetermined bit value allocated thereto, and may have an integer value (or natural number value). In addition, the PSCell of each cell group may be indicated by a cell group identifier.

In FIG. 9, the base station may define a new bitmap for the DCI of the PDCCH transmitted in the PCell, may map each bit value of the bitmap so as to indicate each SCell identifier value or each SCell group identifier value or a cell group (or secondary cell group) identifier or the PSCell (or SCell) of the cell group (or secondary cell group), and may define each bit value so as to indicate whether to switch to a dormant BWP or to activate the dormant BWP or to suspend the cell group or to resume the cell group with regard to the SCell corresponding to the bit or SCells belonging to the SCell group or the cell group (or secondary cell group) or the PSCell (or SCell) of the cell group (or secondary cell group). In addition, it may be indicated whether to switch from a dormant BWP to a normal BWP (for example, a first active BWP activated from dormancy) or to activate the normal BWP (for example, a first active BWP activated from dormancy) with regard to the SCell corresponding to the bit or SCells belonging to the SCell group or the cell group (or secondary cell group) identifier or the PSCell (or SCell) of the cell group (or secondary cell group).

In FIG. 9, the UE may receive DCI of the PDCH in the PCell i-01, may read the DCI to identify whether the same has a bitmap including an indication regarding the BWP of the SCell or SCell groups (for example, switch to or activate a dormant BWP or switch to or activate a normal BWP) or an instruction to suspend or resume a cell group (or secondary cell group) or the PSCell (or SCell) of the cell group (or secondary cell group). If the bitmap exists, the BWP may be switched or activated, or the cell group may be suspended or resumed, according to the bit value, with regard to the SCell indicated by each bit of the bitmap, or SCells i-02, i-03 belonging to the SCell group, or the cell group (or secondary cell group), or the PSCell (or SCell) of the cell group (or secondary cell group). For example, if the bit of the bitmap indicates a first SCell (or first SCell identifier) i-02 or a cell group (or secondary cell group) or the PSCell (or SCell) of the cell group (or secondary cell group), or indicates an SCell group (or SCell group identifier) including the first SCell, and if the bit value is 0 (or 1), the UE may then activate the BWP i-21 into a dormant BWP i-22 with regard to the first SCell i-02 or the cell group (or secondary cell group) or the PSCell (or SCell) of the cell group (or secondary cell group), or may switch the current BWP to a dormant BWP i-22. Alternatively, if the current BWP is not a dormant BWP, the UE may switch or activate the current activated BWP i-21 to a dormant BWP i-22 (i-25), or may suspend or deactivate the cell group. As another method, the BWP of the cell group (or secondary cell group) or the PSCell (or SCell) of the cell group (or secondary cell group) may be maintained unchanged, the second DRX configuration information or second SRS configuration information proposed in the disclosure may be applied, and PDCCH monitoring or SRS transmission may be performed at a long cycle, thereby reducing the UE's power consumption.

In FIG. 9, the UE may receive DCI of the PDCH in the PCell i-01, may read the DCI to identify whether the same has a bitmap including an indication regarding the BWP of the SCell or SCell groups (for example, switch to or activate a dormant BWP or switch to or activate a normal BWP) or an instruction to suspend or resume a cell group (or secondary cell group) or the PSCell (or SCell) of the cell group (or secondary cell group). If the bitmap exists, the BWP may be switched or activated, or the cell group may be suspended or resumed, according to the bit value, with regard to the SCell indicated by each bit of the bitmap, or SCells i-02, i-03 belonging to the SCell group, or the cell group (or secondary cell group), or the PSCell (or SCell) of the cell group (or secondary cell group). For example, if the bit of the bitmap indicates a second SCell (or second SCell identifier) i-03 or indicates an SCell group (or SCell group identifier) including the second SCell or a cell group (or secondary cell group) or the PSCell (or SCell) of the cell group (or secondary cell group), and if the bit value is 1 (or 0), the UE may then switch or activate (i-35) the BWP of the second SCell i-03 to a BWP configured by the RRC message (for example, a first active BWP i-33 activated from dormancy) or may resume or active the cell group, if the current activated BWP is a dormant BWP i-32 with regard to the second SCell i-03, or if the current activated BWP is not a normal BWP, or if the current BWP (or cell) is activated, and if the current BWP is activated as a dormant BWP i-32 (or activated as a BWP which is not a normal BWP). If the bit value is 1 (or 0) such that the SCell indicated by the bit or SCells belonging to the SCell group or the cell group (or secondary cell group) or the PSCell (or SCell) of the cell group (or secondary cell group) needs to be switched or activated to a BWP which is not a dormant BWP, or if the cell group needs to be resumed, the bit value may not be applied or may be ignored or may not be read in the case of the SCell or respective SCells belonging to the SCell group, if the state of the SCell is a deactivated state, or if the state of the SCell is an activated state, and if the activated BWP is not a dormant BWP (or if the same is a normal BWP). Alternatively, if the cell group (or secondary cell group) or the PSCell (or SCell) of the cell group (or secondary cell group) is already in an activated state or resumed state, the bit value may not be applied, or may be ignored, or may not be read. In addition, if the bit value is 0 (or 1) such that the SCell indicated by the bit or SCells belonging to the SCell group or the cell group (or secondary cell group) or the PSCell (or SCell) of the cell group (or secondary cell group) needs to be switched or activated to a dormant BWP, or the cell group needs to be suspended, the bit value may not be applied or may be ignored or may not be read in the case of the SCell or respective SCells belonging to the Scell group, if the state of the SCell is an activated state, and if the activated BWP is a dormant BWP. Alternatively, if the cell group (or secondary cell group) or the PSCell (or SCell) of the cell group (or secondary cell group) is already in suspended state or deactivated state, the bit value may not be applied, or may be ignored, or may not be read.

Next, the disclosure proposes methods in which, when a cell (SCell or PSCell or SCell) is activated, the cell can be quickly activated.

Specifically, the base station may use an RRC message (RRCReconfiguration or RRCResume) to configure first channel measurement configuration information such that, when the UE activates a cell, the channel can be quickly measured and reported. The first channel measurement configuration information may include, in order to quickly activate the cell or cell group, configuration information, such as the cycle regarding a frequent channel measurement signal (for example, radio resource or temporary reference signal (TRS) or synchronization signal block (SSB) or channel state information reference signal (CSI-RS) or reference signal (RS)) such that the base station can temporarily transmit a channel measurement signal a lot or often such that channel measurement can be quickly performed in the cell in configuration information of a cell (for example, Pcell or PSCell or SCell) of the cell group, or transmitted transmission resource information (frequency or time transmission resource used to transmit the frequent channel measurement signal) or an interval or the number of times (the number of times the frequent channel measurement signal is transmitted) or a timer value (the time during which the frequent channel measurement signal is transmitted) or a time interval (interval in which the frequent channel measurement signal is transmitted (for example, offset of time unit (slot or subframe or symbol or the like))) or a transmission resource or cycle or interval or timing or offset by which the UE needs to report the measurement result. The first channel measurement configuration information may be characterized by configuring a short reporting cycle (or transmission resource) at which the UE can report the channel measurement result, or configuring a transmission resource for channel measurement such that the base station can transmit many channel measurement signals (or transmission resources (for example, radio resources or temporary reference signals (TRS))) a lot or frequently in order for the base station to support the UE's quick channel measurement or many signal measurements. The first channel measurement configuration information may include configuration information regarding a channel measurement signal for a specific UE (or UEs) in the cell or BWP, to be used by the base station. In addition, the first channel measurement configuration information may be configured differently for each cell or each BWP with regard to multiple cells or BWPs configured in the RRC message, and beam-related configuration information (transmission configuration indication (TCI) state or quasi co-location (QCL)) such as the beam direction or beam number or beam location may be configured together such that the UE can easily measure transmission resources for channel measurement. In addition, the first channel measurement configuration information may be used to configure a timing advance (TA) value (or offset value) for synchronizing the base station's downlink signal or the base station's uplink signal, or a time alignment timer (TAT) indicating the validity of the TA value, or a TAT value such that correct channel measurement or channel measurement reporting can be performed. For example, the first channel measurement configuration information may include the cycle of the channel measurement signal or the number of transmitted signals or an offset regarding the period of time during which signals are transmitted or the time at which signals are transmitted or the time length between transmitted signals or a list of multiple transmittable channel measurement signals or time transmission resources (or frequency transmission resources) indicating the location of transmitted signals or transmission resources (time transmission resources or frequency transmission resources) to be used to report measurement results or a measurement result reporting cycle or beam-related configuration information (transmission configuration indication (TCI) state or quasi co-location (QCL)) for measuring the channel measurement signals. In addition, the first channel measurement configuration information configured by an RRC message may include multiple pieces of channel measurement signal information, and the RRC message or MAC CE or DCI may be used to indicate a specific piece of channel measurement signal information among the configured multiple pieces of channel measurement signal information, or beam configuration information, such that the UE can perform channel measurement or perform channel measurement reporting by applying or using the indicated channel measurement signal information or beam configuration information. According to the method of indication, mapping between a bitmap or an index or an identifier and each piece of channel measurement signal information configured above may be defined, and an indication may be made based thereon. As another method, the RRC message or MAC CE may be used to configure or indicate channel measurement signal information such that the UE can perform channel measurement or perform channel measurement reporting by applying or using the configured (or indicated) channel measurement signal information.

As another method, when the base station configures first channel measurement configuration information for the UE by including the same in the RRC message, and if the cell state is configured as an activated state in the RRC message such that cell activation is indicated by the RRC message, the first channel measurement configuration information may be applied or used to quicky measure or report the channel, thereby quickly activating the cell. For example, first channel measurement configuration information or channel measurement signal information or beam-related configuration information, which may be applied when the cell state is configured as an activated state in the RRC message such that cell activation is indicated by the RRC message, may be configured as separate configuration information in the RRC message (if default configuration or channel measurement signal information (or beam-related configuration information) corresponding to identifier 0 or one piece of channel measurement signal information (or beam-related configuration information) is solely configured, that channel measurement signal information (or beam-related configuration information) is applied).

The first channel measurement configuration information proposed in the disclosure may be characterized in that the same can be configured with regard to only downlink BWP configuration information of each cell. For example, the first channel measurement configuration information proposed in the disclosure may not be configured with regard to uplink BWP configuration information of each cell. This is because the UE needs to measure the downlink channel first such that the UE then can report the measurement result regarding the channel or cell, correctly receive the PDCCH, and follow the base station's instruction.

The first channel measurement configuration information proposed in the disclosure may be characterized in that the same is initially deactivated when configured by an RRC message or after a handover, and may be activated later by a MAC control element or DCI information of the PDCCH or an RRC message proposed in the disclosure. When configured by the RRC message as described above, the initial state needs to be a deactivated state such that the base station can easily manage the UE's cell state or the channel measurement performing procedure, and the UE can be accurately timed regarding when and how channel measurement is to be performed, without the processing delay problem of the RRC message.

In addition, second channel measurement signal information may be included or configured in the RRC message (RRCReconfiguration or RRCResume). The second channel measurement signal information may include normal channel measurement configuration information such as the transmission resource or cycle or time interval or number of channel measurement signals, or the transmission resource or cycle or time interval for channel measurement reporting.

In addition, the base station may send a UE capability request message (for example, UECapabilityEnquiry message) to the UE to inquire about the UE's capability. Upon receiving the UE capability request message, the UE may report the technology or function or capability supported thereby to the base station by composing a UE capability reporting message (for example, UECapabilityInformation message). The UE may report, to the base station, whether quick SCell activation is not supported based on first channel measurement signal information (for example, information including a temporary reference signal or a tracking reference signal (TRS)) with the UE capability (for example, a release 15 (or 16) UE or a UE implemented based on release 15 (or 16) specifications), or whether quick SCell activation is supported based on first channel measurement signal information (for example, information including a temporary reference signal (TRS)) with the UE capability (for example, a Release 17 or beyond Release 17 UE or a UE implemented based on Release 17 specifications or beyond Release 17 specifications). Upon receiving the UE capability reporting message, the base station may identify the UE capability and may configure first channel measurement signal information for the UE by using the RRC messaged proposed above.

Next, the disclosure proposes the structure of a MAC control element or a method for indicating the same, wherein, when first or second channel measurement configuration information is configured for the UE by using an RRC message as proposed above, the channel can be quickly measured based on the first channel measurement configuration information while activating the cell, or the measurement result can be reported, and the cell can be quickly measured. For example, the MAC control element (or RRC message) proposed in the disclosure may indicate which cell among multiple cells (SCells) configured by the RRC is to be activated or deactivated. Alternatively, if a cell is to be activated as indicated, the MAC control element (or RRC message) may indicate which measurement signal information among the first channel measurement configuration information configured by the RRC message is to be applied, how signals are to be measured (for example, how many times signal transmission resources are to be measured, or how many signals will be transmitted, or in what time interval measurement is to be made, or based on what offset the measurement time interval is to be determined, or at what cycle signals will be measured, or in what transmission resource signals will be measured, or the like may be indicated), how a report will be made (for example, how many times the measurement result will be reported, or in what time interval the measurement result will be reported, or based on what offset the measurement result report transmission resource will be determined, or at what cycle the measurement result will be reported, or in what transmission resource the measurement result will be reported, or the like may be indicated), thereby quickly activating the cell, based on the first channel measurement configuration information configured by the RRC message.

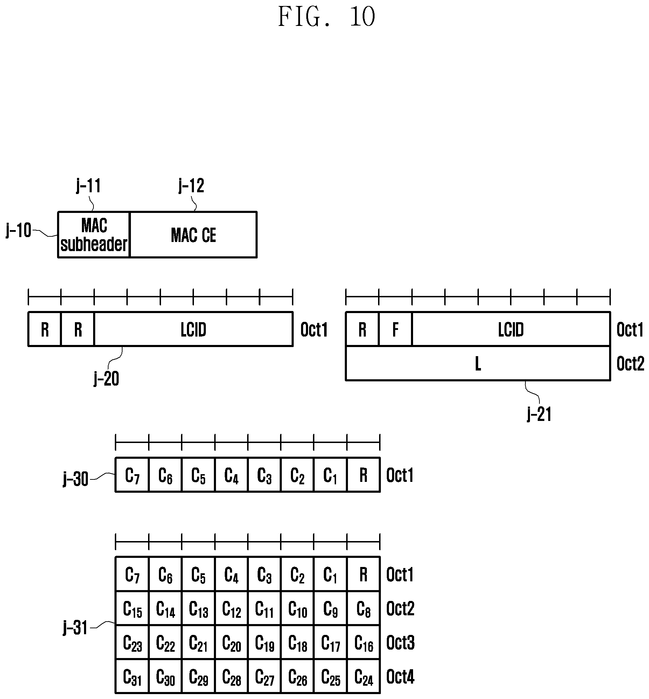

FIG. 10 illustrates a first MAC CE proposed in the disclosure to indicate activation or deactivation of each SCell to a UE which is configured multiple SCells in the disclosure (SCell activation/deactivation MAC CE). The UE may indicate, based on first channel measurement configuration information (for example, information including a temporary reference signal or a tracking reference signal (TRS)), a UE which does not support quick SCell activation (for example, a Release 15 (or 16) UE or a UE implemented based on Release 15 (or 16) specifications), by using UE capability.

MAC CEs proposed in the disclosure may be generated by a UE or a base station and then transmitted while being included in a MAC protocol data unit (PDU), and may have a structure as indicated by reference numeral j-10. For example, if a MAC CE proposed in embodiments of the disclosure is generated, a MAC sub-header corresponding to the MAC CE may be generated as indicated by as indicated by reference numeral j-11 and then attached in front of the MAC CE, thereby constituting one MAC subPDU in the structure as indicated by reference numeral j-10. If the MAC CE has a fixed length (or size), the MAC sub-header j-11 may solely include a logical channel identity (LCID) field and a reserved field as indicated by reference numeral j-20, and may have a predetermined size (for example, one byte). If the MAC CE has a variable length (or size), the MAC sub-header j-11 may include a logical channel identity (LCID) field and a reserved field and an L field and an F field indicating the size of the L field, as indicated by reference numeral j-21, and may have a predetermined size (for example, two bytes).

Hereinafter, the first embodiment of a first MAC CE for indicating activation or deactivation of an SCell (SCell activation/deactivation MAC CEs) will be proposed and described.

In the first embodiment, a MAC CE (or bitmap information) which has a one-byte size and which is used to activate or deactivate an SCell may be distinguished by a (1-1)^{th} logical channel identity (LCID) and may have a structure as indicated by reference numeral j-30 in FIG. 10. The MAC CE has a fixed size and is configured by eight bits (or one byte) including seven C fields and one reserved (R) field.

In the first embodiment, a MAC CE (or bitmap information) which has a four-byte size and which is used to activate or deactivate an SCell may be distinguished by a (1-2)^{th} logical channel identity (LCID) and may have a structure as indicated by reference numeral j-31 in FIG. 10. The MAC CE has a fixed size and is configured by 32 bits (or 4 bytes) including 31 C fields and one reserved (R) field.
- C(i) field: if SCell configuration information is configured for a UE or a MAC layer device by using an RRC message as proposed above, and if there is an SCell having an SCell index value (i) configured in the SCell configuration information by an SCell index, the C(i) field then indicates an activated or deactivated state of the SCell corresponding to the SCell index value (i). Otherwise (if there is no SCell having an SCell index value (i) configured for a UE or a MAC layer device in the RRC message by an SCell index), the MAC layer device must ignore the C(i) field. The C(i) field, if configured to have a value of 1, indicates that the SCell corresponding to the SCell index value (i) is to be activated. The C(i) field, if configured to have a value of 0, indicates that the SCell corresponding to the SCell index value (i) is to be activated.
- R field: reserved field, and configured to be 0.

When an SCell index value is configured in the RRC message, the SCell index has a five-bit length and indicates an integer value (0-31). In addition, the C (integer value) field value corresponding to the integer value may indicate activation or deactivation of the SCell.

When transmitting a MAC CE j-30 or j-31 proposed in the first embodiment to the UE, the base station may determine whether to activate or deactivate SCells corresponding to the SCell index value configured by the RRC message, may configure each C(i) field value corresponding to each SCell index value (i) in the MAC CE to be 0 or 1, and may transmit the same to the UE, thereby activating or deactivating the SCell configured for the UE.

Upon receiving the MAC CE j-30 or j-31 proposed in the first embodiment from the base station, the UE may identify the SCell index value of each SCell configured by the RRC message, and may read each C(i) field value corresponding to each SCell index value (i) in the received MAC CE. In addition, the UE may activate the SCell corresponding to the SCell index value (i) according to the C(i) field value (for example, if the C(i) field value is 1) or deactivate the same (for example, if the C(i) field value is 0).

FIG. 11 illustrates a second embodiment of a second MAC CE for indicating activation or deactivation of an SCell or activation or deactivation of the SCell based on first channel measurement configuration information to a UE which is configured first channel measurement configuration information (for example, information including a tracking reference signal or a temporary reference signal (TRS)) proposed in the disclosure, or which is configured multiple SCells (SCell activation/deactivation with TRS activation MAC CE). The UE may indicate, based on first channel measurement configuration information (for example, information including a temporary reference signal (TRS)), a UE which supports quick SCell activation (for example, a Release 17 or beyond Release 17 UE or a UE implemented based on Release 17 specifications or beyond Release 17 specifications), by using UE capability.

Next, in the disclosure, a second embodiment of second MAC CEs which indicates SCell activation or deactivation, or which configures or indicates information related to first channel measurement configuration information (SCell activation / deactivation MAC CEs) will be proposed and described.

As in the case of the first embodiment of the first MAC CE, the second embodiment may include bitmap information k-10 which has a one-byte and which is used to activate or deactivate an SCell, or may define and include a new first field (TRS related field for the SCell C(i)) k-11. The first embodiment may be referred to regarding descriptions of the bitmap information.

The second MAC CE of the second embodiment may use the same (1-1)^{th} logical channel identity (LCID) used in the first embodiment of the first MAC CE. The second MAC CE may newly define a reserved field (R field) value of bitmap information k-10 to distinguish the first embodiment or first MAC CE) or the second embodiment (or second MAC CE) (for example, the first or second embodiment is indicated according to the value or 0 or 1), and may have a structure as indicated by reference numeral k-10. As another method, in the second embodiment, a (2-1)^{th} logical channel identity (LCID) may be defined to distinguish the second MAC CE.

The MAC CE may have a variable size and may be configured by eight bits (or one byte) including seven C(i) fields and one reserved (R) field. The C(i) field may indicate activation or deactivation of the SCell corresponding to the SCell index value (i) by using the value of 0 or 1, and may indicate whether a first field regarding the SCell (TRS related field for the SCell C(i)) k-11 is present or not. For example, the C(i) field value of 1 (or 0) may indicate that the SCell corresponding to the SCell index value (i) is to be activated, and may indicate that there is a first field regarding the SCell (TRS related field for the SCell C(i)) k-11. The first field, if existing, may indicate that, when the SCell indicated by the SCell index is activated, configuration information related to the first channel measurement configuration information configured in the RRC message, or first channel measurement signal information, is to be included or indicated in the first field. For example, the first field may indicate whether first channel measurement configuration information is to be included, or whether information indicating a part of the first channel measurement configuration information is to be included, or whether a specific piece of information among the first channel measurement configuration information configured in the RRC message is to be applied (or used or activated).

In addition, if the first field has a specific value (for example, a value each bit of which is 0 (000... 0) or a value each bit of which is 1 (111... 1) or a promised or defined value), and when the SCell indicated by the SCell index is to be activated, the SCell may be activated without considering or applying first channel measurement configuration information (the SCell may be activated in the same procedure as when the UE's SCell is activated by the MAC CE of the first embodiment proposed in the disclosure). In addition, if no first channel measurement configuration information is configured with regard to an SCell by an RRC message, the first field may be configured to be the specific value (for example, a value each bit of which is 0 (000...0) or a value each bit of which is 1 (111...1) or a promised or defined value), or the first field value may not be included therein. Alternatively, if no first channel measurement configuration information is configured with regard to an SCell of the UE by an RRC message, the UE may ignore the first field value regarding the SCell or may not read or consider the same.

The first field may have a one-byte (or two-byte) length, and the length may be implemented such that byte alignment is made, thereby simplifying the implementation and facilitating the processing.

The variable-sized MAC CE of the second embodiment proposed in the disclosure is characterized by having a variable size or dynamic size. As proposed above, according to the C(i) field value of the bitmap information k-10, each first field k-11 regarding each SCell may be added behind the bitmap information. For example, with regard to SCells having a C(i) field value configured to be 1 (or 0) to indicate that the first field exists, first fields may be added in ascending (or descending) order of SCell index values, or in ascending (or descending) order of i values, and information related to first channel measurement configuration information corresponding (or mapped) to each SCell may be indicated.

In FIG. 11, reference numeral k-30 refer to an embodiment of the MAC CE of the second embodiment of the disclosure. In the bitmap information k-30, 1 may be configured in the C(2) field, C(5) field, and C(7) field, thereby indicating the SCell having the SCell index (2 or 5 or 7) corresponding to the C field value is to be activated, and respective first fields corresponding to the C(2) field, C(5) field, and C(7) field may be added behind the bitmap information in ascending order of the SCell index value or (i) value. The UE may quickly activate the SCell by applying first channel measurement configuration information indicated by the first field when activating the SCell, the activation of which is indicated in the bitmap information.

The number of first fields is identical to the number of C(i) fields, the field value of which is configured to be 1 (or 0) in the bitmap information. In addition, the number of first fields may be 0. That is, the MAC CE of the second embodiment always has a bitmap field, but may have no first field.

The MAC CE of the second embodiment proposed in the disclosure may be easily expanded to a MAC CE having four-bite bitmap information as indicated by reference numerals k-20 and k-21 in FIG. 11.

In the second embodiment, a first field (TRS related field for the SCell C(i)) may be defined and, when the SCell indicated by the SCell index is activated, the first field may include or indicate configuration information related to first channel measurement configuration information configured in the RRC message, or the first channel measurement configuration information. For example, the first field may include first channel measurement configuration information or may include information indicating a part of the first channel measurement configuration information or may indicate which piece of information among first channel measurement configuration information configured in the RRC message is to be applied (or activated or used).

For example, the first field may indicate a cycle regarding a frequent channel measurement signal (for example, radio resource or temporary reference signal (TRS) or synchronization signal block (SSB) or channel state information reference signal (CSI-RS) or reference signal (RS)) among pieces of first channel measurement configuration information configured in the RRC message, or transmitted transmission resource information (frequency or time transmission resource used to transmit the frequent channel measurement signal) or an interval or the number of times (the number of times the frequent channel measurement signal is transmitted) or a timer value (the time during which the frequent channel measurement signal is transmitted) or a time interval (interval in which the frequent channel measurement signal is transmitted (for example, offset of time unit (slot or subframe or symbol or the like))) or a transmission resource or cycle or interval or timing or offset by which the UE needs to report the measurement result, or beam-related configuration information (transmission configuration indication (TCI) state or quasi co-location (QCL)) such as the beam direction or beam number or beam location, or a timing advance (TA) value (or offset value) for synchronizing the base station's downlink signal or the base station's uplink signal, or whether to start or suspend a time alignment timer (TAT) indicating the validity of the TA value, or a TAT value. According to the method of indication, mapping between the first field and each piece of channel measurement signal information configured in the RRC by using a bitmap or an index or an identifier may be defined, and an indication may be made based thereon. As another method, the first field may be used to configure or indicate channel measurement signal information such that the UE can perform channel measurement or perform channel measurement reporting by applying or using the configured (or indicated) channel measurement signal information.

When a MAC subPDU as indicated by reference numeral j-10 is configured to transmit a MAC CE proposed in the second embodiment of the disclosure, the above-proposed MAC CE may be configured as indicated by reference numeral j-12, and a MAC sub-header j-10 corresponding thereto may have a header structure so as to include a reserved (R) field or a logical channel identity (LCID) field without including a length (L) field as indicated by reference numeral j-20. This is because a MAC CE proposed in a third embodiment of the disclosure indicates whether a first field exists in bitmap information or not, even if the same has a variable length, and the length of the MAC CE can thus be calculated. Therefore, overhead caused by the L field can be reduced.

As another method, when a MAC subPDU as indicated by reference numeral j-10 is configured to transmit a MAC CE proposed in the second embodiment of the disclosure, the above-proposed MAC CE may be configured as indicated by reference numeral j-12, and a MAC sub-header j-10 corresponding thereto may have a header structure so as to include a length (L) field as indicated by reference numeral j-21 and to include a reserved (R) field or a logical channel identity (LCID) field. This is because a MAC CE proposed in a third embodiment of the disclosure has a variable length such that, absent the L field, the length of the MAC CE always needs to be calculated by identifying whether the first field exists or not in the bitmap information. Therefore, if the MAC sub-header includes the L field, the UE may instantly identify the length of the MAC CE, based on the L field, and read the MAC CE without having to calculate the length of the MAC CE.

Fields of the MAC CE proposed in the second embodiment may be described as follows:
- C(i) field: if SCell configuration information is configured for a UE or a MAC layer device by using an RRC message as proposed above, and if there is an SCell having an SCell index value (i) configured in the SCell configuration information by an SCell index, the C(i) field then indicates an activated or deactivated state of the SCell corresponding to the SCell index value (i). As another method, an SCell index field may be defined to indicate an SCell. In addition, the C(i) field may indicate whether a first field exists or not. Otherwise (if there is no SCell having an SCell index value (i) configured for a UE or a MAC layer device in the RRC message by an SCell index), the MAC layer device must ignore the C(i) field. The C(i) field, if configured to have a value of 1, indicates that the SCell corresponding to the SCell index value (i) is to be activated, and indicates that the first field exists. The C(i) field, if configured to have a value of 0, indicates that the SCell corresponding to the SCell index value (i) is to be activated, and indicates that the first field does not exist. In addition, if the first field has a specific value (for example, a value each bit of which is 0 (000...0) or a value each bit of which is 1 (111...1) or a promised or defined value), and when the SCell indicated by the SCell index is to be activated, the SCell may be activated without considering or applying first channel measurement configuration information (for example, the SCell may be activated in the same procedure as when the UE's SCell is activated by the MAC CE of the first embodiment proposed in the disclosure). In addition, if no first channel measurement configuration information is configured with regard to an SCell by an RRC message, the first field may be configured (for example, configured by the base station) to be the specific value (for example, a value each bit of which is 0 (000...0) or a value each bit of which is 1 (111...1) or a promised or defined value), or the first field value may not exist. Alternatively, if no first channel measurement configuration information is configured with regard to an SCell of the UE by an RRC message, the UE may ignore the first field value regarding the SCell or may not read or consider the same.
- R field: reserved field, and configured to be 0.

When an SCell index value is configured in the RRC message, the SCell index has a five-bit length and indicates an integer value (0-31). In addition, the C (integer value) field value corresponding to the integer value may indicate activation or deactivation of the SCell.

The second embodiment proposed above may be easily expanded to a MAC CE having four-bite bitmap information k-20 and first fields k-21, as indicated by reference numerals k-20 and k-21, and then applied. The MAC CE (or bitmap information) may be distinguished by a (2-2)^{th} logical channel identity (LCID) (or may use the same (1-2)^{th} logical channel identity (LCID) as used in the first embodiment and may newly define an R field value of the bitmap information k-20 so as to distinguish the first embodiment or the second embodiment), and the MAC CE may have a variable size and may be configured by bitmap information configured by 32 bits (or 4 bytes) including 31 C fields and one reserved (R) field, and first fields.

As another method, in order to fix the size of the MAC CE in the second embodiment proposed above, first fields may always be added as many as the number of C(i) fields of the bitmap information such that the bitmap information and a fixed number of first fields constitute the MAC CE. If the MAC CE is configured as described above, the overhead increases, but the UE's processing speed may increase because the size of the MAC CE is always fixed.

FIG. 12 illustrates a third embodiment of a second MAC CE for indicating activation or deactivation of an SCell or activation or deactivation of the SCell based on first channel measurement configuration information to a UE which is configured first channel measurement configuration information (for example, information including a tracking reference signal or a temporary reference signal (TRS)) proposed in the disclosure, or which is configured multiple SCells (SCell activation/deactivation with TRS activation MAC CE). The UE may indicate, based on first channel measurement configuration information (for example, information including a temporary reference signal (TRS)), a UE which supports quick SCell activation (for example, a Release 17 or beyond Release 17 UE or a UE implemented based on Release 17 specifications or beyond Release 17 specifications), by using UE capability.

Next, in the disclosure, a third embodiment of a second MAC CE which indicates SCell activation or deactivation, or which configures or indicates information related to first channel measurement configuration information (SCell activation/deactivation with TRS activation MAC CE) will be proposed and described.

As in the case of the first embodiment of the first MAC CE, the third embodiment may include bitmap information 1-10 which has a one-byte and which is used to activate or deactivate an SCell, or may define and include a new first field (TRS related field for the SCell C(i)) 1-11. The first embodiment may be referred to regarding descriptions of the bitmap information.

The MAC CE of the third embodiment may use the same (1-1)th logical channel identity (LCID) used in the first embodiment, and may newly define a reserved field (R field) value of bitmap information 1-10 to distinguish the first embodiment or the third embodiment (for example, the first or third embodiment is indicated according to the value or 0 or 1), and may have a structure as indicated by reference numeral l-10. As another method, in the third embodiment, a (3-1)^{th} logical channel identity (LCID) may be defined to distinguish the MAC CE of the third embodiment.

The MAC CE has a variable size and is configured by eight bits (or one byte) including seven C(i) fields and one reserved (R) field. The C(i) field may indicate activation or deactivation of the SCell corresponding to the SCell index value (i) by using the value of 0 or 1, and may indicate whether a first field regarding the SCell (TRS related field for the SCell C(i)) 1-11 is present or not. For example, the C(i) field value of 1 (or 0) may indicate that the SCell corresponding to the SCell index value (i) is to be activated, and may indicate that there is a first field regarding the SCell (TRS related field for the SCell C(i)) l-11. The first field, if existing, may indicate that, when the SCell indicated by the SCell index is activated, configuration information related to the first channel measurement configuration information configured in the RRC message, or first channel measurement signal information, is to be included or indicated in the first field. For example, the first field may indicate whether first channel measurement configuration information is to be included, or whether information indicating a part of the first channel measurement configuration information is to be included, or whether a specific piece of information among the first channel measurement configuration information configured in the RRC message is to be applied (or used or activated).

In addition, if the first field has a specific value (for example, a value each bit of which is 0 (000... 0) or a value each bit of which is 1 (111... 1) or a promised or defined value), and when the SCell indicated by the SCell index is to be activated, the SCell may be activated without considering or applying first channel measurement configuration information (for example, the SCell may be activated in the same procedure as when the UE's SCell is activated by the MAC CE of the first embodiment proposed in the disclosure). In addition, if no first channel measurement configuration information is configured with regard to an SCell by an RRC message, the first field may be configured to be the specific value (for example, a value each bit of which is 0 (000... 0) or a value each bit of which is 1 (111... 1) or a promised or defined value), or the first field value may not be included therein. Alternatively, if no first channel measurement configuration information is configured with regard to an SCell of the UE by an RRC message, the UE may ignore the first field value regarding the SCell or may not read or consider the same.

The variable-sized MAC CE of the third embodiment proposed in the disclosure may be characterized by having a variable size or dynamic size. As proposed above, according to the C(i) field value of the bitmap information 1-10, each first field 1-11 regarding each SCell may be added behind the bitmap information. For example, with regard to SCells having a C(i) field value configured to be 1 (or 0) to indicate that the first field exists, first fields may be added in ascending (or descending) order of SCell index values, or in ascending (or descending) order of i values, and information related to first channel measurement configuration information corresponding (or mapped) to each SCell may be indicated.

The first field may have a length smaller than one byte (for example, a length corresponding to four bits) and, in such a case, the MAC CE may be configured such that byte alignment is made, thereby simplifying the implementation and facilitating the processing. For example, if the first field has a length corresponding to four bits as indicated by reference numeral l-11, and if there are odd-numbered (or even-numbered) C(i) fields having the value of 1 (or 0) so as to indicate cell activation in the bitmap information, a N/A field may be added as indicated by reference numeral l-12, for byte alignment, such that the MAC CE has a byte-unit size. For example, if odd-numbered (or even-numbered) first fields are added, the MAC CE may have a byte-based size so as to facilitate the processing. The N/A field may be made of padding or an arbitrary value, or may have a predefined value (for example, a value each bit of which is 0 (000...0) or a value each bit of which is 1 (111...1) or a promised or defined value). If the N/A field is included, the UE may ignore the N/A field or may not read or consider the same.

In FIG. 12, reference numeral l-30 refer to an embodiment of the MAC CE of the third embodiment of the disclosure. In the bitmap information l-30, 1 may be configured in the C(2) field, C(5) field, and C(7) field, thereby indicating the SCell having the SCell index (2 or 5 or 7) corresponding to the C field value is to be activated. Respective first fields corresponding to the C(2) field, C(5) field, and C(7) field may be added behind the bitmap information in ascending order of the SCell index value or (i) value. Since there are odd-numbered first fields each having a four-bit length, the MAC CE does not have a byte-unit size. Therefore, an N/A field l-32 having four bits may be added such that the MAC CE has a byte-unit size. Upon receiving the MAC CE, the UE may quickly activate the SCell by applying first channel measurement configuration information indicated by the first fields when activating the SCell, the activation of which is indicated, and may ignore the N/A field.

The number of first fields is identical to the number of C(i) fields, the field value of which is configured to be 1 (or 0) in the bitmap information. In addition, the number of first fields may be 0. That is, the MAC CE of the third embodiment always has a bitmap field, but may have no first field.

The MAC CE of the third embodiment according to an embodiment of the disclosure may be easily expanded to a MAC CE having four-bite bitmap information as indicated by reference numerals l-20 and l-21 in FIG. 12.

In the third embodiment, a first field (TRS related field for the SCell C(i)) may be defined and, when the SCell indicated by the SCell index is activated, the first field may include or indicate configuration information related to first channel measurement configuration information configured in the RRC message, or the first channel measurement configuration information. For example, the first field may include first channel measurement configuration information or may include information indicating a part of the first channel measurement configuration information or may indicate which piece of information among first channel measurement configuration information configured in the RRC message is to be applied (or activated or used).

For example, the first field may indicate a cycle regarding a frequent channel measurement signal (for example, radio resource or temporary reference signal (TRS) or synchronization signal block (SSB) or channel state information reference signal (CSI-RS) or reference signal (RS)) among pieces of first channel measurement configuration information configured in the RRC message, or transmitted transmission resource information (frequency or time transmission resource used to transmit the frequent channel measurement signal) or an interval or the number of times (the number of times the frequent channel measurement signal is transmitted) or a timer value (the time during which the frequent channel measurement signal is transmitted) or a time interval (interval in which the frequent channel measurement signal is transmitted (for example, offset of time unit (slot or subframe or symbol or the like))) or a transmission resource or cycle or interval or timing or offset by which the UE needs to report the measurement result, or beam-related configuration information (transmission configuration indication (TCI) state or quasi co-location (QCL)) such as the beam direction or beam number or beam location, or a timing advance (TA) value (or offset value) for synchronizing the base station's downlink signal or the base station's uplink signal, or whether to start or suspend a time alignment timer (TAT) indicating the validity of the TA value, or a TAT value. According to the method of indication, mapping between the first field and each piece of channel measurement signal information configured in the RRC by using a bitmap or an index or an identifier may be defined, and an indication may be made based thereon. As another method, the first field may be used to configure or indicate channel measurement signal information such that the UE can perform channel measurement or perform channel measurement reporting by applying or using the configured (or indicated) channel measurement signal information.

When a MAC subPDU as indicated by reference numeral j-10 is configured to transmit a MAC CE proposed in the third embodiment of the disclosure, the above-proposed MAC CE may be configured as indicated by reference numeral j-12, and a MAC sub-header j-10 corresponding thereto may have a header structure so as to include a reserved (R) field or a logical channel identity (LCID) field without including a length (L) field as indicated by reference numeral j-20. This is because a MAC CE proposed in the third embodiment of the disclosure indicates whether a first field exists in bitmap information or not, even if the same has a variable length, and the length of the MAC CE can thus be calculated. Therefore, overhead caused by the L field can be reduced.

As another method, when a MAC subPDU as indicated by reference numeral j-10 is configured to transmit a MAC CE proposed in the third embodiment of the disclosure, the above-proposed MAC CE may be configured as indicated by reference numeral j-12, and a MAC sub-header j-10 corresponding thereto may have a header structure so as to include a length (L) field as indicated by reference numeral j-21 and to include a reserved (R) field or a logical channel identity (LCID) field. This is because a MAC CE proposed in the third embodiment of the disclosure has a variable length such that, absent the L field, the length of the MAC CE always needs to be calculated by identifying whether the first field exists or not in the bitmap information. Therefore, if the MAC sub-header includes the L field, the UE may instantly identify the length of the MAC CE, based on the L field, and read the MAC CE without having to calculate the length of the MAC CE.

Fields of the MAC CE proposed in the third embodiment may be described as follows:
- C(i) field: if SCell configuration information is configured for a UE or a MAC layer device by using an RRC message as proposed above, and if there is an SCell having an SCell index value (i) configured in the SCell configuration information by an SCell index, the C(i) field then indicates an activated or deactivated state of the SCell corresponding to the SCell index value (i). As another method, an SCell index field may be defined to indicate an SCell. In addition, the C(i) field may indicate whether a first field exists or not. Otherwise (if there is no SCell having an SCell index value (i) configured for a UE or a MAC layer device in the RRC message by an SCell index), the MAC layer device must ignore the C(i) field. The C(i) field, if configured to have a value of 1, indicates that the SCell corresponding to the SCell index value (i) is to be activated, and indicates that the first field exists. The C(i) field, if configured to have a value of 0, indicates that the SCell corresponding to the SCell index value (i) is to be activated, and indicates that the first field does not exist. In addition, if the first field has a specific value (for example, a value each bit of which is 0 (000... 0) or a value each bit of which is 1 (111...1) or a promised or defined value), and when the SCell indicated by the SCell index is to be activated, the SCell may be activated without considering or applying first channel measurement configuration information (for example, the SCell may be activated in the same procedure as when the UE's SCell is activated by the MAC CE of the first embodiment proposed in the disclosure). In addition, if no first channel measurement configuration information is configured with regard to an SCell by an RRC message, the first field may be configured (for example, configured by the base station) to be the specific value (for example, a value each bit of which is 0 (000...0) or a value each bit of which is 1 (111...1) or a promised or defined value), or the first field value may not exist. Alternatively, if no first channel measurement configuration information is configured with regard to an SCell of the UE by an RRC message, the UE may ignore the first field value regarding the SCell or may not read or consider the same.
- R field: reserved field, and configured to be 0.
- N/A field: if there are odd-numbered (or even-numbered) C(i) fields having the value of 1 (or 0) so as to indicate cell activation in the bitmap information, a N/A field may be added as indicated by reference numeral l-12, for byte alignment, such that the MAC CE has a byte-unit size. For example, if odd-numbered (or even-numbered) first fields are added, the MAC CE may have a byte-based size so as to facilitate the processing. The N/A field may be made of padding or an arbitrary value, or may have a predefined value (for example, a value each bit of which is 0 (000...0) or a value each bit of which is 1 (111...1) or a promised or defined value). If the N/A field is included, the UE may ignore the N/A field or may not read or consider the same.

When an SCell index value is configured in the RRC message, the SCell index has a five-bit length and indicates an integer value (0-31). In addition, the C (integer value) field value corresponding to the integer value may indicate activation or deactivation of the SCell.

The third embodiment proposed above may be easily expanded to a MAC CE having four-bite bitmap information l-20 and first fields l-21, as indicated by reference numerals l-20 and l-21, and then applied. The MAC CE (or bitmap information) may be distinguished by a (3-2)^{th} logical channel identity (LCID) (or may use the same (1-2)^{th} logical channel identity (LCID) as used in the first embodiment. The MAC CE (or bitmap information) may newly define a reserved (R) field value of the bitmap information l-20 so as to distinguish the first embodiment or the third embodiment), and the MAC CE may have a variable size and may be configured by bitmap information configured by 32 bits (or 4 bytes) including 31 C fields and one reserved (R) field, and first fields.

As another method, in order to fix the size of the MAC CE in the third embodiment proposed above, first fields may always be added as many as the number of C(i) fields of the bitmap information such that the bitmap information and a fixed number of first fields constitute the MAC CE. If the MAC CE is configured as described above, the overhead increases, but the UE's processing speed may increase because the size of the MAC CE is always fixed.

The MAC CE proposed in the first or second or third embodiment of the disclosure, or the first channel measurement configuration information of the RRC message, may be expanded and applied such that, when a cell is activated, for example, an SCell or PSCell (for example, when a secondary cell group (SCG) is activated in dual connectivity) or a PCell (for example, when a target cell is quickly activated in a handover procedure, or when an inactive mode UE performs a connection resumption procedure) is activated quickly.

Hereinafter, problems that may occur by using the first MAC CE proposed in FIG. 10 or the second MAC CE proposed in FIG. 11 and FIG. 12 will be described, and a method for solving the same will be proposed.

The base station may use UE capability so as to configure, based on first channel measurement configuration information (for example, information including a temporary reference signal (TRS)), multiple SCells for a UE which supports quick SCell activation (for example, a Release 17 or beyond Release 17 UE or a UE implemented based on Release 17 specifications or beyond Release 17 specifications), and first channel measurement configuration information (for example, information including a temporary reference signal (TRS) or a tracking reference signal considered as a temporary reference signal) for respective SCells.

However, if the base station composes the first MAC CE proposed in FIG. 10 and transmits the same to the UE in order to indicate activation or deactivation of SCells, the UE cannot correctly receive the SCell activation or deactivation indication for which first channel measurement configuration information is configured. This is because the first MAC CE solely includes one-bit information regarding activation or deactivation of each SCell, and the UE thus cannot know how to apply the first channel measurement configuration information, thereby causing errors regarding UE implementation or erroneous operations.

Therefore, in order to prevent errors or erroneous operations which may would otherwise occur in the UE, the disclosure hereinafter proposes methods in which the first MAC CE proposed in FIG. 10 can be used only when no first channel measurement configuration information is configured. For example, the disclosure proposes a method in which the first MAC CE proposed in FIG. 10 is limited and thus not used if first channel measurement configuration information is configured for the UE's SCell as proposed in FIG. 11 or FIG. 12.

- First method: if there is first channel measurement configuration information configured for an SCell (or for at least one SCell configured for a UE), the first MAC CE proposed in FIG. 10 (SCell activation/deactivation MAC CE) may not be used (for example, in the above case, the base station may make the first MAC CE proposed in FIG. 10 not used (or not transmitted)), and may make the second MAC CE proposed in FIG. 11 or FIG. 12 (SCell activation/deactivation with TRS activation MAC CE) used (or transmitted)). For example, if an SCell (or at least one SCell) which is configured first channel measurement configuration information is configured for a UE, the base station may make the first MAC CE not used (for example, the SCell activation/deactivation MAC CE is not used if a SCell is configured with TRS information (or configuration)). As another method, if all configured SCells (or all SCells configured for a UE) are configured no first channel measurement configuration information, the first MAC CE proposed in FIG. 10 (SCell activation/deactivation MAC CE) may be made used (for example, in the above case, the base station may make the first MAC CE proposed in FIG. 10 used (or transmitted), and may make the second MAC CE proposed in FIG. 11 or FIG. 12 (SCell activation/deactivation with TRS activation MAC CE) not used (or not transmitted) (for example, if all the configured SCells are not configured with TRS information (or configuration), the SCell activation/deactivation MAC CE is used). As another method, if first channel measurement configuration information is configured for an SCell (or at least one SCell configured for a UE), and if the first MAC CE proposed in FIG. 10 (SCell activation/deactivation MAC CE) is received, the UE may ignore the first MAC CE or may not process the same.

As another method, in order to prevent errors or erroneous operations which may would otherwise occur in the UE, the disclosure hereinafter proposes methods wherein, assuming that first channel measurement configuration information is configured for the UE's SCell as proposed in FIG. 11 or FIG. 12, and that a first MAC CE proposed in FIG. 10 is received, the UE's operation or a method for processing the first MAC CE is defined (or proposed), thereby preventing the errors or erroneous operations. The UE may apply one of the following methods, or may apply a new method by combining the following methods:

- Second method: if there is first channel measurement configuration information configured for an SCell (or for at least one SCell configured for a UE), if the first MAC CE proposed in FIG. 10 (SCell activation/deactivation MAC CE) is received by the UE, and if there is a C(i) field in the first MAC CE configured to be 0 (or if deactivation thereof is indicated), the UE may deactivate the SCell corresponding to the C(i) field. Alternatively, if there is a C(i) field in the first MAC CE configured to be 1 (or if activation thereof is indicated) (or if first channel measurement configuration information is configured for the SCell corresponding to the C(i) field, or if the SCell has been deactivated), the SCell corresponding to the C(i) field may be activated (similarly to the method of activating the SCell in FIG. 10).
- Third method: if there is first channel measurement configuration information configured for an SCell (or for at least one SCell configured for a UE), if the first MAC CE proposed in FIG. 10 (SCell activation/deactivation MAC CE) is received by the UE, and if there is a C(i) field in the first MAC CE configured to be 0 (or if deactivation thereof is indicated), the UE may deactivate the SCell corresponding to the C(i) field. Alternatively, if there is a C(i) field in the first MAC CE configured to be 1 (or if activation thereof is indicated) (or if the SCell has been deactivated), and if first channel measurement configuration information is configured for the SCell corresponding to the C(i) field, the UE may activate the SCell corresponding to the C(i) field without considering the first channel measurement configuration information (or without activating the TRS, or similarly to the method of activating the SCell in FIG. 10). Alternatively, if there is a C(i) field in the first MAC CE configured to be 1 (or if activation thereof is indicated) (or if the SCell has been deactivated), and if no first channel measurement configuration information is configured for the SCell corresponding to the C(i) field, the UE may activate the SCell corresponding to the C(i) field (similarly to the method of activating the SCell in FIG. 10, or without considering first channel measurement configuration information).
- Fourth method: if there is first channel measurement configuration information configured for an SCell (or for at least one SCell configured for a UE), if the first MAC CE proposed in FIG. 10 (SCell activation/deactivation MAC CE) is received by the UE, and if there is a C(i) field in the first MAC CE configured to be 0 (or if deactivation thereof is indicated), the UE may deactivate the SCell corresponding to the C(i) field. Alternatively, if there is a C(i) field in the first MAC CE configured to be 1 (or if activation thereof is indicated) (or if the SCell has been deactivated), and if first channel measurement configuration information is configured for the SCell corresponding to the C(i) field, the UE may activate the SCell corresponding to the C(i) field, based on the first channel measurement configuration information (or by activating a TRS, or based on first channel measurement configuration information configured by default in an RRC message (or by activating a configured TRS). Alternatively, if there is a C(i) field in the first MAC CE configured to be 1 (or if activation thereof is indicated) (or if the SCell has been deactivated), and if no first channel measurement configuration information is configured for the SCell corresponding to the C(i) field, the UE may activate the SCell corresponding to the C(i) field (similarly to the method of activating the SCell in FIG. 10, or without considering first channel measurement configuration information).

Hereinafter, the fourth embodiment of the UE's MAC CE processing procedure or cell activation procedure when a MAC CE or an RRC message proposed in the first or second or third embodiment is received, will be proposed.
- 1> if a MAC layer device received the MAC CE or RRC message proposed in the first or second or third embodiment of the disclosure
   ▪ 2> Information related to or included in the MAC CE (for example, first channel measurement configuration information) may indicated or delivered to a lower layer device (for example, PHY layer device). Alternatively, information related to or included in the MAC CE (for example, first channel measurement configuration information) may be applied, and the cell or cells corresponding thereto may be activated.

Hereinafter, the fifth embodiment of the UE's MAC CE processing procedure or cell activation procedure when a MAC CE or an RRC message proposed in the first or second or third embodiment is received, will be proposed. The fifth embodiment may be characterized in that first channel measurement configuration information is applied only if the first active BWP identifier configured by the RRC message of a cell which is activated when the MAC CE is processed is not configured as a dormant BWP, or only with regard to a cell which has been deactivated before the MAC CE is received.

The MAC layer device operates as follows with regard to each of the configured cells (SCell or PSCell or PCell). Although an embodiment will be proposed hereinafter with regard to an SCell, the same may be expanded and applied with regard to a PSCell (for example, when a secondary cell group (SCG) or cell group is activated) or a PCell (for example, when a target cell is activated in a handover procedure, or when a UE performs a connection resumption procedure in an inactive mode).
- 1> If the SCell state is configured as an activated state when an SCell is configured, or if an SCell activation or deactivation MAC CE or RRC message indicating activation with regard to the SCell is received
- 1> Or if a MAC CE proposed in the first or second or third embodiment of the disclosure, which indicates activation with regard to the SCell, is received
   ▪ 2> If the SCell has been deactivated before the SCell activation or deactivation MAC CE is received
   ▪ 2> Or if the SCell has been deactivated before the MAC CE proposed in the first or second or third embodiment of the disclosure is received
   ▪ 2> Or if the SCell state has been configured as an activated state when the SCell is configured
      ◆ 3> If the first active downlink BWP identifier (firstActiveDownlinkBWP-Id) has not been configured as a dormant BWP
         ● 4> The SCell may be activated according to determined (or promised) timing. For example, a normal SCell operation may be applied or performed as follows:
            ▪ 5> A sounding reference signal (SRS) may be transmitted in the SCell.
            ▪ 5> If first channel measurement configuration information has been configured or indicated by an RRC message, or if first channel measurement configuration information has been configured or indicated in the received MAC CE proposed in the first or second or third embodiment
               ◆ 6> A channel measurement procedure may be performed by applying (or based on) the indicated first channel measurement configuration information such that the SCell can be quickly activated, or the channel measurement result may be reported by applying (or based on) the first channel measurement configuration information.
            ▪ 5> If no first channel measurement configuration information has been configured or indicated by an RRC message, or if no first channel measurement configuration information has been configured or indicated in the received MAC CE proposed in the first or second or third embodiment
               ◆ 6> Channel state information (CSI) may be reported with regard to the SCell. Alternatively, a channel measurement procedure may be performed by applying (or based on) the second channel measurement configuration information configured by an RRC message such that the SCell can be activated, or the channel measurement result may be reported by applying (or based on) the second channel measurement configuration information.
            ▪ 5> PDCCH monitoring may be performed in the SCell.
            ▪ 5> PDCCH monitoring may be performed regarding the SCell. (For example, PDCCH monitoring may be performed regarding the SCell in the PCell or in another SCell by using cross scheduling.)
            ▪ 5> PUCCH transmission may be performed in the SCell.
      ◆ 3> Else if the first active downlink BWP identifier (firstActiveDownlinkBWP-Id) has been configured as a dormant BWP
         ● 4> The BWP inactivity timer (bwp-InactivityTimer) of the SCell or serving cell may be suspended, if the same is being driven.
      ◆ 3> The downlink BWP and uplink BWP of the SCell may be activated as a downlink BWP and an uplink BWP indicated by the first active downlink BWP identifier and the first active uplink BWP identifier, respectively.
   ▪ 2> The cell deactivation timer (SCellDeactivationTimer) configured for the SCell or related to the SCell may be started or restarted according to determined or promised timing.
   ▪ 2> If the activated downlink BWP (or currently activated downlink BWP) or the activated SCell's activated downlink BWP (or currently activated downlink BWP) is not a dormant BWP
      ▪ 3> If a type 1 periodic uplink transmission resource (RRC-configured uplink grant Type 1) configured for the SCell or the SCell's BWP according to stored configuration information has been suspended, or if there is a suspended type 1 periodic uplink transmission resource, the type 1 periodic uplink transmission resource may be reset or reset again. In addition, the type 1 uplink transmission resource may be started or started to be used according to determined or promised timing.
      ▪ 3> A power head room (PHR) reporting procedure may be triggered with regard to the SCell or SCell's BWP.
- 1> Else if an SCell activation or deactivation MAC CE which indicates deactivation with regard to the SCell has been received
- 1> Or if the cell inactivity timer regarding the activated SCell has expired
   ▪ 2> The SCell may be deactivated according to determined or promised timing.
   ▪ 2> The cell inactivity timer regarding the SCell may be suspended.
   ▪ 2> The BWP inactivity timer regarding the SCell or serving cell may be suspended.
   ▪ 2> An activated BWP regarding the SCell may be deactivated.
   ▪ 2> A periodic downlink transmission resource (DL SPS or configured downlink assignment) configured for the cell's BWP, or a configured periodic uplink transmission resource (UL SPS or configured uplink grant type 2) may be cleared. As used herein, the term "clear" means that configuration information such as cycle information configured in an RRC message remains stored in the UE, but information regarding a periodic transmission resource activated or indicated by L1 signaling (for example, DCI) is removed and no longer used. The above-proposed method, that is, the operation of clearing a configured periodic downlink transmission resource (DL SPS or configured downlink assignment) or a configured periodic uplink transmission resource (UL SPS or configured uplink grant) may be performed only when the BWP has transitioned from an activated state to a dormant state. This is because, if the BWP has transitioned from a deactivated state to a dormant state, there is no information regarding periodic transmission resource information activated or indicated by L1 signaling. As another method, the periodic transmission resources may be cleared only if the periodic downlink transmission resource or periodic uplink transmission resource has been configured or is configured and used currently.
   ▪ 2> A PUSCH transmission resource configured for periodic channel measurement reporting (semi-persistent CSI reporting) related to the SCell may be cleared.
   ▪ 2> The periodic uplink transmission resource configured for the cell's BWP (RRC-configured uplink grant Type 1) may be suspended. As used herein, the term "suspend" means that transmission resource configuration information configured in an RRC message remains stored in the UE, but is no longer used. The above-proposed method, that is, the operation of suspending a configured periodic uplink transmission resource (configured uplink grant type 1) may be performed only when the BWP has transitioned from an activated state to a dormant state. This is because, if the BWP has transitioned from a deactivated state to a dormant state, no periodic transmission resource is being used. As another method, the periodic transmission resources may be cleared only if the periodic downlink transmission resource or periodic uplink transmission resource has been configured or is configured and used currently.
   ▪ 2> All HARQ buffers regarding the SCell may be flushed.
- If the SCell has been activated, and if first channel measurement configuration information has expired in a predefined or RRC-configured timing or time resource, or if a channel measurement procedure (or channel measurement reporting procedure) based on first channel measurement configuration information has expired (or deactivated or performed until a configured period of time), or if the timer (or time) for the above procedure has expired (or if the time has elapsed or used up), or if the channel measurement procedure (or channel measurement reporting procedure) based on first channel measurement configuration information has been completed
   ▪ 2> The UE may suspend (or deactivate or not apply) the channel measurement procedure or channel measurement reporting procedure, which is performed based on the first channel measurement configuration information. Alternatively, the UE may perform the channel measurement procedure or channel measurement reporting procedure without applying the first channel measurement configuration information any more (or after deactivating the same). Alternatively, the first channel measurement configuration information may not be applied any more. Alternatively, second channel measurement configuration information configured in the RRC message may be applied (or activated), and the channel measurement procedure or channel measurement reporting procedure may then be performed. For example, second channel measurement configuration information may be applied by falling back thereto without applying the first channel measurement configuration information any more.

Hereinafter, the sixth embodiment of the UE's MAC CE processing procedure or cell activation procedure when a MAC CE or an RRC message proposed in the first or second or third embodiment is received, will be proposed. The sixth embodiment may be characterized in that first channel measurement configuration information is applied regardless of whether the first active BWP identifier configured by the RRC message of a cell which is activated when the MAC CE is processed is configured as a dormant BWP or not, or only with regard to a cell which has been deactivated before the MAC CE is received.

The MAC layer device operates as follows with regard to each of the configured cells (SCell or PSCell or PCell). Although an embodiment will be proposed hereinafter with regard to an SCell, the same may be expanded and applied with regard to a PSCell (for example, when a secondary cell group (SCG) or cell group is activated) or a PCell (for example, when a target cell is activated in a handover procedure, or when a UE performs a connection resumption procedure in an inactive mode).
- 1> If the SCell state is configured as an activated state when an SCell is configured, or if an SCell activation or deactivation MAC CE or RRC message indicating activation with regard to the SCell is received
- 1> Or if a MAC CE proposed in the first or second or third embodiment of the disclosure, which indicates activation with regard to the SCell, is received
   ▪ 2> If the SCell has been deactivated before the SCell activation or deactivation MAC CE is received
   ▪ 2> Or if the SCell has been deactivated before the MAC CE proposed in the first or second or third embodiment of the disclosure is received
   ▪ 2> Or if the SCell state has been configured as an activated state when the SCell is configured
      ◆ 3> If the first active downlink BWP identifier (firstActiveDownlinkBWP-Id) has not been configured as a dormant BWP
         ● 4> The SCell may be activated according to determined (or promised) timing. For example, a normal SCell operation may be applied or performed as follows:
            ▪ 5> A sounding reference signal (SRS) may be transmitted in the SCell.
            ▪ 5> PDCCH monitoring may be performed in the SCell.
            ▪ 5> PDCCH monitoring may be performed regarding the SCell. (For example, PDCCH monitoring may be performed regarding the SCell in the PCell or in another SCell by using cross scheduling.)
            ▪ 5> PUCCH transmission may be performed in the SCell.
      ◆ 3> Else if the first active downlink BWP identifier (firstActiveDownlinkBWP-Id) has been configured as a dormant BWP
         ● 4> The BWP inactivity timer (bwp-InactivityTimer) of the SCell or serving cell may be suspended, if the same is being driven.
      ◆ 3> The downlink BWP and uplink BWP of the SCell may be activated as a downlink BWP and an uplink BWP indicated by the first active downlink BWP identifier and the first active uplink BWP identifier, respectively.
      ◆ 3> If first channel measurement configuration information has been configured or indicated by an RRC message, or if first channel measurement configuration information has been configured or indicated in the received MAC CE proposed in the first or second or third or fourth embodiment
         ● 4> A channel measurement procedure may be performed by applying (or based on) the indicated first channel measurement configuration information such that the SCell can be quickly activated, or the channel measurement result may be reported by applying (or based on) the first channel measurement configuration information.
      ◆ 3> If no first channel measurement configuration information has been configured or indicated by an RRC message, or if no first channel measurement configuration information has been configured or indicated in the received MAC CE proposed in the first or second or third or fourth embodiment
         ● 4> Channel state information (CSI) may be reported with regard to the SCell. Alternatively, a channel measurement procedure may be performed by applying (or based on) the second channel measurement configuration information configured by an RRC message such that the SCell can be activated, or the channel measurement result may be reported by applying (or based on) the second channel measurement configuration information.
            ▪ 2> The cell deactivation timer (SCellDeactivationTimer) configured for the SCell or related to the SCell may be started or restarted according to determined or promised timing.
            ▪ 2> If the activated downlink BWP (or currently activated downlink BWP) or the activated SCell's activated downlink BWP (or currently activated downlink BWP) is not a dormant BWP
      ▪ 3> If a type 1 periodic uplink transmission resource (RRC-configured uplink grant Type 1) configured for the SCell or the SCell's BWP according to stored configuration information has been suspended, or if there is a suspended type 1 periodic uplink transmission resource, the type 1 periodic uplink transmission resource may be reset or reset again. In addition, the type 1 uplink transmission resource may be started or started to be used according to determined or promised timing.
      ▪ 3> A power head room (PHR) reporting procedure may be triggered with regard to the SCell or SCell's BWP.
- 1> Else if an SCell activation or deactivation MAC CE which indicates deactivation with regard to the SCell has been received
- 1> Or if the cell inactivity timer regarding the activated SCell has expired
   ▪ 2> The SCell may be deactivated according to determined or promised timing.
   ▪ 2> The cell inactivity timer regarding the SCell may be suspended.
   ▪ 2> The BWP inactivity timer regarding the SCell or serving cell may be suspended.
   ▪ 2> An activated BWP regarding the SCell may be deactivated.
   ▪ 2> A periodic downlink transmission resource (DL SPS or configured downlink assignment) configured for the cell's BWP, or a configured periodic uplink transmission resource (UL SPS or configured uplink grant type 2) may be cleared. As used herein, the term "clear" means that configuration information such as cycle information configured in an RRC message remains stored in the UE, but information regarding a periodic transmission resource activated or indicated by L1 signaling (for example, DCI) is removed and no longer used. The above-proposed method, that is, the operation of clearing a configured periodic downlink transmission resource (DL SPS or configured downlink assignment) or a configured periodic uplink transmission resource (UL SPS or configured uplink grant) may be performed only when the BWP has transitioned from an activated state to a dormant state. This is because, if the BWP has transitioned from a deactivated state to a dormant state, there is no information regarding periodic transmission resource information activated or indicated by L1 signaling. As another method, the periodic transmission resources may be cleared only if the periodic downlink transmission resource or periodic uplink transmission resource has been configured or is configured and used currently.
   ▪ 2> A PUSCH transmission resource configured for periodic channel measurement reporting (semi-persistent CSI reporting) related to the SCell may be cleared.
   ▪ 2> The periodic uplink transmission resource configured for the cell's BWP (RRC-configured uplink grant Type 1) may be suspended. As used herein, the term "suspend" means that transmission resource configuration information configured in an RRC message remains stored in the UE, but is no longer used. The above-proposed method, that is, the operation of suspending a configured periodic uplink transmission resource (configured uplink grant type 1) may be performed only when the BWP has transitioned from an activated state to a dormant state. This is because, if the BWP has transitioned from a deactivated state to a dormant state, no periodic transmission resource is being used. As another method, the periodic transmission resources may be cleared only if the periodic downlink transmission resource or periodic uplink transmission resource has been configured or is configured and used currently.
   ▪ 2> All HARQ buffers regarding the SCell may be flushed.
- If a BWP is activated, and if an activated downlink BWP is a dormant BWP
   ▪ 2> If the first channel measurement configuration information has been configured or indicated, a channel measurement procedure may be performed in consideration of the first channel measurement configuration information, or the channel measurement result may be reported in consideration of the first channel measurement configuration information. Alternatively, if no first channel measurement configuration information has been configured or indicated, the channel measurement procedure may not be performed in the BWP.
- If the SCell has been activated, and if first channel measurement configuration information has expired in a predefined or RRC-configured timing or time resource, or if a channel measurement procedure (or channel measurement reporting procedure) based on first channel measurement configuration information has expired (or deactivated or performed until a configured period of time), or if the timer (or time) for the above procedure has expired (or if the time has elapsed or used up), or if the channel measurement procedure (or channel measurement reporting procedure) based on first channel measurement configuration information has been completed
   ▪ 2> The UE may suspend (or deactivate or not apply) the channel measurement procedure or channel measurement reporting procedure, which is performed based on the first channel measurement configuration information. Alternatively, the UE may perform the channel measurement procedure or channel measurement reporting procedure without applying the first channel measurement configuration information any more (or after deactivating the same). Alternatively, the first channel measurement configuration information may not be applied any more. Alternatively, second channel measurement configuration information configured in the RRC message may be applied (or activated), and the channel measurement procedure or channel measurement reporting procedure may then be performed. For example, second channel measurement configuration information may be applied by falling back thereto without applying the first channel measurement configuration information any more.

Hereinafter, the seventh embodiment of the UE's MAC CE processing procedure or cell activation procedure when a MAC CE or an RRC message proposed in the first or second or third embodiment is received, will be proposed. The seventh embodiment may be characterized in that first channel measurement configuration information is applied regardless of whether the first active BWP identifier configured by the RRC message of a cell which is activated when the MAC CE is processed is configured as a dormant BWP or not, or regardless of whether the same has been deactivated before the MAC CE is received.

The MAC layer device operates as follows with regard to each of the configured cells (SCell or PSCell or PCell). Although an embodiment will be proposed hereinafter with regard to an SCell, the same may be expanded and applied with regard to a PSCell (for example, when a secondary cell group (SCG) or cell group is activated) or a PCell (for example, when a target cell is activated in a handover procedure, or when a UE performs a connection resumption procedure in an inactive mode).
- 1> If the SCell state is configured as an activated state when an SCell is configured, or if an SCell activation or deactivation MAC CE or RRC message indicating activation with regard to the SCell is received
- 1> Or if a MAC CE proposed in the first or second or third embodiment of the disclosure, which indicates activation with regard to the SCell, is received
   ▪ 2> If first channel measurement configuration information has been configured or indicated by an RRC message, or if first channel measurement configuration information has been configured or indicated in the received MAC CE proposed in the first or second or third embodiment
      ◆ 3> A channel measurement procedure may be performed by applying (or based on) the indicated first channel measurement configuration information such that the SCell can be quickly activated, or the channel measurement result may be reported by applying (or based on) the first channel measurement configuration information.
   ▪ 2> If no first channel measurement configuration information has been configured or indicated by an RRC message, or if no first channel measurement configuration information has been configured or indicated in the received MAC CE proposed in the first or second or third embodiment
      ◆ 3> Channel state information (CSI) may be reported with regard to the SCell. Alternatively, a channel measurement procedure may be performed by applying (or based on) the second channel measurement configuration information configured by an RRC message such that the SCell can be activated, or the channel measurement result may be reported by applying (or based on) the second channel measurement configuration information.
   ▪ 2> If the SCell has been deactivated before the SCell activation or deactivation MAC CE is received
   ▪ 2> Or if the SCell state has been configured as an activated state when the SCell is configured
      ◆ 3> If the first active downlink BWP identifier (firstActiveDownlinkBWP-Id) has not been configured as a dormant BWP
         ● 4> The SCell may be activated according to determined (or promised) timing. For example, a normal SCell operation may be applied or performed as follows:
            ▪ 5> A sounding reference signal (SRS) may be transmitted in the SCell.
            ▪ 5> PDCCH monitoring may be performed in the SCell.
            ▪ 5> PDCCH monitoring may be performed regarding the SCell. (For example, PDCCH monitoring may be performed regarding the SCell in the PCell or in another SCell by using cross scheduling.)
            ▪ 5> PUCCH transmission may be performed in the SCell.
      ◆ 3> Else if the first active downlink BWP identifier (firstActiveDownlinkBWP-Id) has been configured as a dormant BWP
         ● 4> The BWP inactivity timer (bwp-InactivityTimer) of the SCell or serving cell may be suspended, if the same is being driven.
      ◆ 3> The downlink BWP and uplink BWP of the SCell may be activated as a downlink BWP and an uplink BWP indicated by the first active downlink BWP identifier and the first active uplink BWP identifier, respectively.
   ▪ 2> The cell deactivation timer (SCellDeactivationTimer) configured for the SCell or related to the SCell may be started or restarted according to determined or promised timing.
   ▪ 2> If the activated downlink BWP (or currently activated downlink BWP) or the activated SCell's activated downlink BWP (or currently activated downlink BWP) is not a dormant BWP
      ▪ 3> If a type 1 periodic uplink transmission resource (RRC-configured uplink grant Type 1) configured for the SCell or the SCell's BWP according to stored configuration information has been suspended, or if there is a suspended type 1 periodic uplink transmission resource, the type 1 periodic uplink transmission resource may be reset or reset again. In addition, the type 1 uplink transmission resource may be started or started to be used according to determined or promised timing.
      ◆ 3> A power head room (PHR) reporting procedure may be triggered with regard to the SCell or SCell's BWP.
- 1> Else if an SCell activation or deactivation MAC CE which indicates deactivation with regard to the SCell has been received
- 1> Or if the cell inactivity timer regarding the activated SCell has expired
   ▪ 2> The SCell may be deactivated according to determined or promised timing.
   ▪ 2> The cell inactivity timer regarding the SCell may be suspended.
   ▪ 2> The BWP inactivity timer regarding the SCell or serving cell may be suspended.
   ▪ 2> An activated BWP regarding the SCell may be deactivated.
   ▪ 2> A periodic downlink transmission resource (DL SPS or configured downlink assignment) configured for the cell's BWP, or a configured periodic uplink transmission resource (UL SPS or configured uplink grant type 2) may be cleared. As used herein, the term "clear" means that configuration information such as cycle information configured in an RRC message remains stored in the UE, but information regarding a periodic transmission resource activated or indicated by L1 signaling (for example, DCI) is removed and no longer used. The above-proposed method, that is, the operation of clearing a configured periodic downlink transmission resource (DL SPS or configured downlink assignment) or a configured periodic uplink transmission resource (UL SPS or configured uplink grant) may be performed only when the BWP has transitioned from an activated state to a dormant state. This is because, if the BWP has transitioned from a deactivated state to a dormant state, there is no information regarding periodic transmission resource information activated or indicated by L1 signaling. As another method, the periodic transmission resources may be cleared only if the periodic downlink transmission resource or periodic uplink transmission resource has been configured or is configured and used currently.
   ▪ 2> A PUSCH transmission resource configured for periodic channel measurement reporting (semi-persistent CSI reporting) related to the SCell may be cleared.
   ▪ 2> The periodic uplink transmission resource configured for the cell's BWP (RRC-configured uplink grant type 1) may be suspended. As used herein, the term "suspend" means that transmission resource configuration information configured in an RRC message remains stored in the UE, but is no longer used. The above-proposed method, that is, the operation of suspending a configured periodic uplink transmission resource (configured uplink grant type 1) may be performed only when the BWP has transitioned from an activated state to a dormant state. This is because, if the BWP has transitioned from a deactivated state to a dormant state, no periodic transmission resource is being used. As another method, the periodic transmission resources may be cleared only if the periodic downlink transmission resource or periodic uplink transmission resource has been configured or is configured and used currently.
   ▪ 2> All HARQ buffers regarding the SCell may be flushed.
- If a BWP is activated, and if an activated downlink BWP is a dormant BWP
   ▪ If the first channel measurement configuration information has been configured or indicated, a channel measurement procedure may be performed in consideration of the first channel measurement configuration information, or the channel measurement result may be reported in consideration of the first channel measurement configuration information. Alternatively, if no first channel measurement configuration information has been configured or indicated, the channel measurement procedure may not be performed in the BWP.
- If the SCell has been activated, and if first channel measurement configuration information has expired in a predefined or RRC-configured timing or time resource, or if a channel measurement procedure (or channel measurement reporting procedure) based on first channel measurement configuration information has expired (or deactivated or performed until a configured period of time), or if the timer (or time) for the above procedure has expired (or if the time has elapsed or used up), or if the channel measurement procedure (or channel measurement reporting procedure) based on first channel measurement configuration information has been completed
   ▪ 2> The UE may suspend (or deactivate or not apply) the channel measurement procedure or channel measurement reporting procedure, which is performed based on the first channel measurement configuration information. Alternatively, the UE may perform the channel measurement procedure or channel measurement reporting procedure without applying the first channel measurement configuration information any more (or after deactivating the same). Alternatively, the first channel measurement configuration information may not be applied any more. Alternatively, second channel measurement configuration information configured in the RRC message may be applied (or activated), and the channel measurement procedure or channel measurement reporting procedure may then be performed. For example, second channel measurement configuration information may be applied by falling back thereto without applying the first channel measurement configuration information any more.

In the embodiments of the disclosure, when the UE performs a channel measurement procedure based on first channel measurement configuration information, the channel measurement configuration information may be configured by an RRC message or a MAC CE, application (or activation or use) of the first channel measurement configuration information may be indicated by an RRC message or a MAC CE, and when a channel measurement result is reported based on the an RRC message or a MAC CE, a reporting procedure may be performed by using PUCCH transmission resources of the cell (PCell or PUCCH SCell) configured by the RRC message.

Although the embodiments proposed in the disclosure are applied with regard to an SCell, the same may be expanded and applied with regard to a PSCell (for example, when a secondary cell group (SCG) or cell group is activated) or a PCell (for example, when a target cell is activated in a handover procedure, or when a UE performs a connection resumption procedure in an inactive mode). When activating the cell group (SCG), the base station may configure or activate the first channel measurement configuration information by using an RRCReconfiguration message such that the UE can perform a channel measurement procedure or a channel measurement reporting procedure in the PSCell or SCG (the first active downlink or uplink BWP of the PSCell, or a BWP configured by an RRC message, or the initial BWP) and can quickly activate the same. In addition, when the UE activates the target cell (Pcell) in a handover procedure, the base station may configure or activate the first channel measurement configuration information by using an RRCReconfiguration such that the UE can perform a channel measurement procedure or a channel measurement reporting procedure in the PCell (the first active downlink or uplink BWP of the PCell, or a BWP configured by an RRC message, or the initial BWP) and can quickly activate the same. In addition, if the target cell (Pcell or SCell) is to be activated when the UE performs an RRC connection resumption procedure in an inactive mode, the base station may configure or activate the first channel measurement configuration information by using an RRCRelease message included in an indicator or information indicating transition to an RRC inactive mode, or by using an RRCResume message of an RRC connection resumption procedure such that the UE can perform a channel measurement procedure or a channel measurement reporting procedure in the PCell or SCell (the first active downlink or uplink BWP of the cell, or a BWP configured by an RRC message, or the initial BWP) and can quickly activate the same.

An eighth embodiment according to an embodiment of the disclosure proposes methods wherein first channel measurement configuration information may be configured for each SCell which is configured (or which has been configured) for the UE by using an RRC message, unlike the above-proposed fourth or fifth or sixth or seventh embodiment, but the cell state of the SCell is configured as an activated state by the RRC message, thereby making restrictions such that the SCell cannot be activated based on the first channel measurement configuration information. For example, the base station may configure first channel measurement configuration information for each SCell by the RRC message but cannot configure the state of the SCell as an activated state by the RRC message, and if the SCell is to be activated based on first channel measurement configuration information (SCell activation with TRS activation), the second MAC CE proposed in the disclosure in FIG. 11 or FIG. 12 may be transmitted to the UE, thereby indicating activation of the SCell. This is because UE implementation can be simplified if the SCell can be activated based on first channel measurement configuration information by using the MAC CE only.

Methods for specifying the eighth embodiment are proposed as follows. The base station (network) or UE may apply one of the following methods, or may apply a new method by combining the following methods.
- First method: if there is first channel measurement configuration information configured for at least one SCell among SCells configured for the UE, the base station (or network) may make restrictions such that, in SCell configuration information regarding the SCells, the SCell state cannot be configured as an activated state (or such that no SCell state configuration field is included, or the SCell state is configured as a deactivated state). As another method, if there is no first channel measurement configuration information configured for all SCells configured for the UE, the base station (or network) may configure the SCell state as an activated state (or deactivated state) in the SCell configuration information regarding the SCells.
- Second method: in the case of an SCell which is configured first channel measurement configuration information among SCells configured for the UE, the base station (or network) may make restrictions such that, in SCell configuration information regarding the SCell, the SCell state cannot be configured as an activated state (or such that no SCell state configuration field is included, or the SCell state is configured as a deactivated state). As another method, in the case of an SCell which is configured no first channel measurement configuration information among SCells configured for the UE, the base station (or network) may configure the SCell state as an activated state (or deactivated state) in the SCell configuration information regarding the SCell.

In the eighth embodiment, assuming that the base station configured first channel measurement configuration information with regard to the SCell of the UE by using an RRC message (for example, RRCReconfiguration message), restrictions may be made such that a second MAC CE indicating activation of the SCell cannot be transmitted to the UE together with the RRC message (for example, while being included in the same transport block (TB) or the same MAC PDU). This is because the UE needs a time to process the RRC message, and if activation regarding the SCell is indicated by the second MAC CE before the UE applies the configured first channel measurement configuration information to the SCell, it would be difficult for the UE to activate the SCell by normally applying the first channel measurement configuration information.

Therefore, after configuring the first channel measurement configuration information for the UE's SCell by the RRC message (for example, RRCReconfiguration message) (or after receiving a response RRC message (for example, RRCReconfigurationComplete message) regarding the RRC message (or after receiving a HARQ ACK or after receiving an RLC ACK)), the base station may transmit a second MAC CE to the UE so as to indicate that the SCell is to be activated based on the first channel measurement configuration information (SCell activation with TRS activation).

As another method, if the base station configured first channel measurement configuration information for the UE's SCell by an RRC message (for example, RRCReconfiguration message) in the eighth embodiment, and if a second MAC CE indicating activation of the SCell is received before transmitting a second MAC CE indicating activation of the SCell to the UE together with the RRC message (for example, while being included in the same transport block (TB) or the same MAC CDU) or receiving a response RRC message (for example, RRCReconfigurationComplete message) regarding the RRC message (or before receiving a HARQ ACK or before receiving an RLC ACK)), the UE may activate the SCell without applying the first channel measurement configuration information (similarly to the SCell activation method in FIG. 10) if the UE has not yet applied the configured first channel measurement configuration information to the SCell before a time is necessary to process the RRC message.

As another method, if the base station configured first channel measurement configuration information for the UE's SCell by an RRC message (for example, RRCReconfiguration message) in the eighth embodiment, and if a second MAC CE indicating activation of the SCell is received before transmitting a second MAC CE indicating activation of the SCell to the UE together with the RRC message (for example, while being included in the same transport block (TB) or the same MAC CDU) or receiving a response RRC message (for example, RRCReconfigurationComplete message) regarding the RRC message (or before receiving a HARQ ACK or before receiving an RLC ACK)), the UE may complete application of the first channel measurement configuration information and then activate the SCell based on the first channel measurement configuration information (SCell activation with TRS activation) if the UE has not yet applied the configured first channel measurement configuration information to the SCell before a time is necessary to process the RRC message.

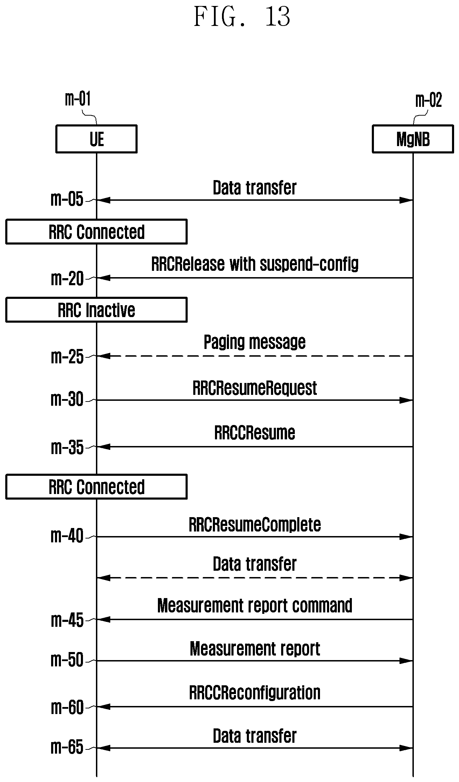

FIG. 13 illustrates a ninth embodiment in which embodiments proposed in the disclosure are expanded and applied to an RRC deactivated mode UE.

In the disclosure, a cell group or a cell may refer to a PCell of a master cell group (MCG) or an SCell of the MCG or a PSCell of a secondary cell group (SCG) or an SCell of the SCG.

It is proposed that, in the ninth embodiment, SCell configuration information (for example, the configuration information described or proposed with reference to FIG. 6) configured or stored for the embodiments proposed above as in FIG. 6 in an RRC connected mode, or PSCell (or SCell) configuration information of a cell group (for example, secondary cell group) will not be released or discarded, but will be continuously stored, even if the UE transitions to an RRC deactivated mode. In addition, it is proposed that the RRC deactivated mode UE will determine whether to discard or release the stored SCell configuration information (for example, the configuration information described or proposed with reference to FIG. 6) or PSCell (or SCell) configuration information of the cell group (for example, secondary cell group), or to maintain and apply the same, or to perform reconfiguration, through an RRCResume message transmitted by the base station when an RRC connection resumption procedure is performed, or through the indicator of an RRCReconfiguration message, or through a reconfiguration procedure. In addition, when the base station transmits an RRCRelease message including a configuration or an indicator for transitioning the UE to an RRC deactivated mode to the UE, an indicator or configuration information may be included in the RRCRelease message and transmitted to the UE so as to indicate whether to discard or release the stored SCell configuration information (for example, the configuration information described or proposed with reference to FIG. 6) or PSCell (or SCell) configuration information of the cell group (for example, secondary cell group), or to maintain and apply the same, or to perform reconfiguration. In addition, when the UE moves in the RRC deactivated mode and performs a RAN notification area (RNA) update, the UE may receive and apply an indicator or configuration information which is in the RRCRelease message transmitted to the UE by the base station, and which indicates whether to discard or release the stored SCell configuration information (for example, the configuration information described or proposed with reference to FIG. 6) or PSCell (or SCell) configuration information of the cell group (for example, secondary cell group), or to maintain and apply the same, or to perform reconfiguration.

In the ninth embodiment proposed in the disclosure, the base station may allow the first active BWP of BWP configuration information of the downlink or uplink of each cell to be configured as a dormant BWP, in the SCell configuration information (for example, the configuration information described or proposed with reference to FIG. 6) of the RRC message, or the PSCell (or SCell) configuration information of the cell group (for example, secondary cell group), such that, when the UE activates each SCell or each cell group or each cell group's PSCell, the downlink BWP or uplink BWP of each SCell or each cell group or each cell group's PSCell can be instantly operated as a dormant BWP, or the cell group can be suspended or resumed, thereby reducing the UE's battery consumption.

As another method, in the ninth embodiment proposed in the disclosure, the base station may not configure the first active BWP of BWP configuration information of the downlink or uplink of each cell as a dormant BWP in the SCell configuration information (for example, the configuration information described or proposed with reference to FIG. 6) of the RRC message, or the PSCell (or SCell) configuration information of the cell group (for example, secondary cell group), and when the UE activates or resumes each SCell or each cell group or each cell group's PSCell, the downlink BWP or uplink BWP of each SCell or each cell group or each cell group's PSCell is always activated as a first active BWP, and can be switched or activated to a dormant BWP in the embodiments proposed in the disclosure, or the cell group can be suspended or resumed, thereby reducing the UE's battery consumption.

In addition, in the ninth embodiment proposed in the disclosure, dual connectivity may be expanded and applied to each SCell configuration information or PSCell configuration information of the master cell group (MCG) or secondary cell group (SCG) of the UE for which the same has been configured. For example, the SCG's SCell configuration information or PSCell configuration information may also be stored when the UE transitions to the RRC deactivated mode, and when the RRC connection resumption procedure is performed as above, or when the UE is transitioned to the RRC deactivated mode, an indicator or configuration information may be included in an RRC message (for example, RRCResume or RRCReconfiguration or RRCRelease) and transmitted to the UE so as to indicate whether to discard or release the stored SCell configuration information (for example, the configuration information described or proposed with reference to FIG. 6) of the MCG or SCG or the PSCell configuration information, or to maintain and apply the same, or to perform reconfiguration.

In FIG. 13, the UE m-01 may establish network connection to the base station m-02 and may transmit/receive data (m-05). If the base station m-02 needs to transition the UE m-01 to an RRC deactivated mode for a specific reason, the base station m-02 may send an RRCRelease message m-20 such that the RRC-connected UE m-01 transitions to the RRC deactivated mode. An indicator or configuration information may be included in the RRC message (for example, RRCRelease) and transmitted to the UE m-01 by the base station m-02 so as to indicate whether to discard or release the stored SCell configuration information (for example, the configuration information described or proposed with reference to FIG. 6) of the MCG or SCG or the PSCell (or SCell) configuration information of the cell group (for example, secondary cell group), or to maintain and apply the same, or to perform reconfiguration. In the case of a UE m-01 to which dual connectivity is applied, in order to determine whether to suspend and resume master cell group bearer configuration or RRC configuration information or MCG or SCG's SCell configuration information, and to determine whether to suspend and resume secondary cell group bearer configuration and RRC configuration information, the base station m-02 may inquire the secondary cell base station whether to suspend or resume the same, and may receive a response and make a determination. In addition, the base station may configure the list of frequencies to be measured by the UE in an RRC idle mode or RRC deactivated mode, or frequency measurement configuration information, or the period of time during which frequencies are to be measured, or the like in the RRCRelease message.

The RRC deactivated mode UE m-01 may perform an RRC connection resumption procedure upon receiving a paging message m-25 while moving, if there is a need to transmit uplink data, or if there is a need to update the RAN notification area.

The UE m-01 performs random access procedure if there is a need to configure connection, and transmits an RRCResumeRequest message to the base station m-02, and proposed operations of the UE m-01 related to transmission of the message are as follows (m-30):
1. The UE m-01 identifies system information and, if the system information instructs transmission of a complete UE connection resumption identifier (I-RNTI or full resume ID), the UE m-01 prepares to include a stored complete UE connection resumption identifier (I-RNTI) in the message and to transmit the same. If the system information instructs transmission of a truncated UE connection resumption identifier (truncated I-RNTI or truncated resume ID), the UE m-01 configures a truncated UE connection resumption identifier (truncated resume ID) by truncating the stored complete UE connection resumption identifier (I-RNTI) in a predetermined method, and prepares to include the same in the message and to transmit the same.
2. The UE m-01 restores RRC connection configuration information and security context information from stored UE context.
3. In addition, the UE m-01 receives a new KgNB security key corresponding to the master cell group, as well as the current KgNB security key and NH (NextHop) value, from the RRCRelease message, and updates the same, based on the stored NCC value.
4. In addition, if the UE m-01 received an SCG-counter value (or sk-counter) in the RRCRelease message, the UE m-01 updates a new SKgNB security key corresponding to the secondary cell group, based on the KgNB security key and the SCG-counter value (or sk-counter).
5. In addition, the UE m-01 uses the newly updated KgNB security key to induce new security keys (K_RRCenc, K_RRC_int, K_UPint, K_UPenc) to be used in integrity protection and verification procedures and encryption and decryption procedures.
6. In addition, if the UE m-01 received an SCG-counter value (or sk-counter) in the RRCRelease message, the UE m-01 uses the newly updated SKgNB security key corresponding to the secondary cell group to induce new security keys (SK _RRCenc, SK_RRC_int, SK_UPint, SK_UPenc) to be used in integrity protection and verification procedures and encryption and decryption procedures.
7. In addition, the UE m-01 calculates MAC-I and prepares to include the same in the message and to transmit the same.
8. In addition, the UE m-01 resumes the SRB1 (an RRCResume message will be received through the SRB1 in response to the RRCResumeRequset message to perform transmission, and the same thus needs to be resumed in advance).
9. The UE m-01 composes the RRCResumeRequset message and transfers the same to a lower layer device.
10. The UE m-01 applies the updated security keys and a previously configured algorithm to all bearers (MCG terminated RBs), excluding the SRB0 belonging to the master cell group, thereby resuming integrity protection and verification procedures, and applies integrity protection and verification to data transmitted and received later. (in order to improve the reliability and security of data transmitted/received from the SRB1 or DRBs later)
11. The UE m-01 applies the updated security keys and a previously configured algorithm to all bearers (MCG terminated RBs), excluding the SRB0 belonging to the master cell group, thereby resuming encryption and decryption procedures, and applies encryption and decryption to data transmitted and received later. (in order to improve the reliability and security of data transmitted/received from the SRB1 or DRBs later)
12. if the UE m-01 received an SCG-counter value (or sk-counter) in the RRCRelease message, the UE m-01 applies the updated security keys and a previously configured algorithm to all bearers (SCG terminated RBs) corresponding to the secondary cell group, thereby resuming integrity protection and verification procedures, and applies integrity protection and verification to data transmitted and received later. (in order to improve the reliability and security of data transmitted/received from DRBs later)
13. If the UE m-01 received an SCG-counter value (or sk-counter) in the RRCRelease message, the UE m-01 applies the updated security keys and a previously configured algorithm to all bearers (SCG terminated RBs) corresponding to the secondary cell group, thereby resuming encryption and decryption procedures, and applies encryption and decryption to data transmitted and received later. (in order to improve the reliability and security of data transmitted/received from DRBs later)

UE operations proposed when the UE m-01 performed a random access procedure because a need to configure connection occurred, transmitted an RRCResumeRequest message to the base station m-02, and then received an RRCResume message in response thereto, are as follows (m-35). If the RRCResume message includes an indicator which instructs the UE m-01 to make a report if there is a valid frequency measurement result measured in the RRC deactivated mode, the UE m-01 may compose the frequency measurement result in the RRCResumeComplete message and report the same. In addition, the base station m-02 may include an indicator or configuration information in the RRC message (for example, RRCResume) and transmit the same to the UE m-01 so as to indicate whether to discard or release the SCell configuration information (for example, the configuration information described or proposed with reference to FIG. 6) of the MCG or SCG stored by the UE m-01, or to maintain and apply the same, or to perform reconfiguration.
1. Upon receiving the message, the UE m-01 restores a PDCP state corresponding to the master cell group, resets the COUNT value, and reestablishes PDCP layer devices of all DRBs (MCG terminated RBs) and SRB2 corresponding to the master cell group.
2. If the UE m-01 received an SCG-counter value (or sk-counter) in the message, the UE m-01 updates a new SKgNB security key corresponding to the secondary cell group, based on the KgNB security key and the SCG-counter value (or sk-counter). In addition, the UE m-01 uses the newly updated SKgNB security key corresponding to the secondary cell group to induce new security keys (SK_RRCenc, SK_RRC_int, SK UPint, SK UPenc) to be used in integrity protection and verification procedures and encryption and decryption procedures.
3. If the message includes master cell group (masterCellgroup) configuration information
   A. The UE m-01 performs and applies the master cell group configuration information included in the message. The master cell group configuration information may include configuration information regarding RLC layer devices belonging to the master cell group, logical channel identifiers, bearer identifies, and the like.
4. If the message includes bearer configuration information (radioBearerConfig)
   A. The UE m-01 performs and applies the bearer configuration information (radioBearerConfig) included in the message. The bearer configuration information (radioBearerConfig) may include configuration information regarding PDCP layer devices regarding respective bearers, configuration information regarding SDAP layer devices, logical channel identifiers, bearer identifies, and the like.
5. If the message includes secondary cell group (masterCellgroup) configuration information
   A. The UE m-01 performs and applies the secondary cell group configuration information included in the message. The secondary cell group configuration information may include configuration information regarding RLC layer devices belonging to the secondary cell group, logical channel identifiers, bearer identifies, and the like.
6. If the message includes secondary bearer configuration information (radioBearerConfig)
   A. The UE m-01 performs and applies the secondary bearer configuration information (radioBearerConfig) included in the message. The secondary bearer configuration information (radioBearerConfig) may include configuration information regarding PDCP layer devices regarding respective secondary bearers, configuration information regarding SDAP layer devices, logical channel identifiers, bearer identifies, and the like.
7. The UE resumes all DRBs (MCG terminated RBs) and SRB2 corresponding to the master cell group.
8. If the message includes frequency measurement configuration information (measConfig)
   A. The UE performs and applies the frequency measurement configuration information included in the message. That if, frequency measurement may be performed according to the configuration.
9. The UE m-01 transitions to an RRC connected mode.
10. The UE m-01 informs the upper layer device that suspended RRC connection is resumed.
11. In addition, the UE m-01 composes and transfers an RRCResumeComplete message for transmission to the lower layer (m-40).

If the UE m-01 has suspended secondary cell group-related bearer configuration information and UE context information, the UE m-01 may perform frequency measurement based on frequency measurement configuration information configured in system information or RRCRelease message or RRCResume message and, if there is a valid result, may include an indicator in the RRCResumeComplete message and transmit the same in order to indicate the existence of the result (m-40). Upon receiving the indicator, the base station m-02 may instruct the UE m-01 to report the frequency measurement result (m-45) if carrier aggregation or dual connectivity needs to be resumed, may receive a report of the frequency measurement result from the UE m-01, or may receive a report of the frequency measurement result in the RRCResumeComplete message (m-50). Upon receiving the frequency measurement result, the base station m-02 may inquire the secondary cell base station whether or not to resume suspended secondary cell group-related bearer configuration information, and may make a determination based on a response therefrom. The base station m-02 may send an RRCReconfiguration message to the UE m-01 to indicate whether secondary cell group-related bearers are to be resumed or released. In addition, the base station m-02 may include an indicator or configuration information in the RRC message (for example, RRCReconfiguration) and transmit the same to the UE so as to indicate whether to discard or release the SCell configuration information (for example, the configuration information described or proposed with reference to FIG. 6) of the MCG or SCG stored by the UE, or to maintain and apply the same, or to perform reconfiguration (m-60). In addition, the UE m-01 and the base station m-02 may transmit/receive data.

In the ninth embodiment proposed in FIG. 13 in the disclosure, the base station may allow the first active BWP of BWP configuration information of the downlink or uplink of each cell to be configured as a dormant BWP, in the SCell configuration information (for example, the configuration information described or proposed with reference to FIG. 6) of the RRC message (for example, RRCRelease or RRCResume or RRCReconfiguartion), or the PSCell (or SCell) configuration information of the cell group (for example, secondary cell group) such that, when the UE activates each SCell or the PSCell of the cell group (for example, secondary cell group), the downlink BWP or uplink BWP of each SCell or the PSCell can be instantly operated as a dormant BWP, or the cell group can be suspended or resumed, thereby reducing the UE's battery consumption. For example, in the case of each SCell or the PSCell, if the SCell state is configured as an activated state in the SCell configuration information or cell group configuration information of the RRC message (for example, RRCRelease or RRCResume or RRCReconfiguartion), or if the cell group state is configured as an activated state or a suspended state or a deactivated state, or if an indication is configured to suspend or resume the cell group, or if an instruction to activate the SCell is received from a MAC control element proposed in the disclosure, the UE may activate or resume or suspend the SCell or PSCell, and may operate a method in which, when the SCell or PSCell is activated, the downlink BWP or uplink BWP of the SCell or PSCell is instantly activated as a dormant BWP, thereby saving the battery of the UE.

In addition, when the RRC deactivated mode UE transitioned to an RRC connected mode and restored or applied or reconfigured the SCell configuration information or cell group's (for example, secondary cell group's) PSCell (or SCell) configuration information proposed in the disclosure, switching or activation between BWPs may be performed with regard to each activated SCell or cell group's PSCell (or SCell) according to embodiments proposed in the disclosure, or the dormant BWP may be activated or applied. In addition, the embodiments of the disclosure may be expanded and applied to a case in which a handover is performed as well.

If the UE receives an indicator indicating suspension or resumption or activation or deactivation regarding a cell or a cell group or the cell group's PSCell according to embodiments proposed in the disclosure, the PHY layer device or MAC layer device that received the indication may indicate (or transfer) the indication to the upper layer device (for example, MAC layer device or RLC layer device or PDCP layer device or RRC layer device). Upon receiving the indication (for example, cell group suspension or resumption or activation or deactivation) from the lower layer device, the upper layer device may perform a procedure of a protocol layer device regarding cell group suspension or resumption or activation or deactivation corresponding thereto. Alternatively, if the UE receives an indicator indicating suspension or resumption or activation or deactivation regarding a cell group or the cell group's PSCell through an RRC message as in embodiments of the disclosure, the RRC layer device that received the indication may transfer the indication to the lower layer device (for example, PHY layer device or MAC layer device or RLC layer device or PDCP layer device). Upon receiving the indication (for example, cell group suspension or resumption or activation or deactivation) from the upper layer device (for example, RRC layer device), the lower layer device may perform a procedure of a protocol layer device regarding cell group suspension or resumption or activation or deactivation corresponding thereto.

In the disclosure, when the base station (or network) transmits a MAC CE including an instruction to deactivate a cell group (or secondary cell group (SCG)) to a UE for which dual connectivity is configured, successful delivery of the MAC CE may be guaranteed. This is because, if the MAC CE is lost, the UE and the network differently manage the cell group's state (for example, the network considers that the cell group is in a deactivated state, or due to the loss of the MAC CE, the UE considers that the cell group is in an activated state), thereby failing in synchronization. Therefore, the network may cause HARQ ACK information corresponding to a MAC PDU (or transport (or transmission) block (TB)) including the MAC CE to be identified such that the MAC CE can be successfully delivered to the UE. Alternatively, if a HARQ NACK is received in response to the MAC PDU, the MAC CE may be retransmitted, thereby guaranteeing that the UE will successfully receive the MAC CE. As another method, a response MAC CE may be newly defined to indicate successfully reception of the MAC CE, and the UE may send the response MAC CE to the base station if the UE successfully received the MAC CE, thereby indicating successful reception.

In addition, in the disclosure, when the base station (or network) transmits a MAC CE including an instruction to deactivate a cell group (or secondary cell group (SCG)) to a UE for which dual connectivity is configured, the MAC CE may be encrypted, or integrity protection may be applied thereto (a new MAC-I field (or a new field enabling integrity verification identification) may be added thereto), and the same may then transmitted to the UE, in order to reinforce the security of the MAC CE (or to prevent hackers from counterfeiting or modifying the MAC CE). Upon receiving the MAC CE (if the MAC CE is received, and identification of the logical channel identity of the MAC sub-header confirms that the received MAC CE includes an instruction to deactivate a cell group (or secondary cell group (SCG)), the UE may decode the MAC CE or perform an integrity verification procedure and may process the MAC CE only if the same has been successfully decoded, or only if the integrity verification procedure has been successfully performed. The UE may discard the MAC CE regarding which the decoding procedure or integrity verification procedure has failed.

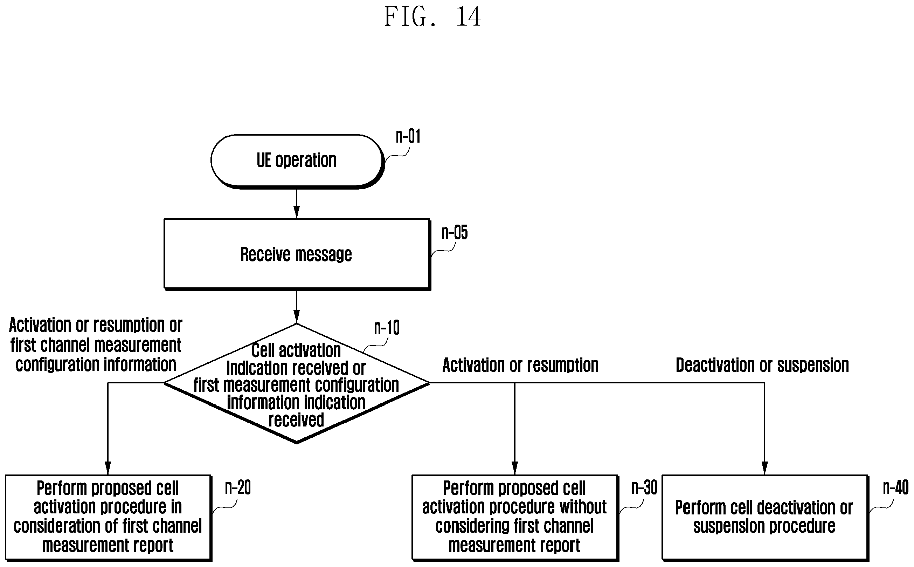

FIG. 14 illustrates operations n-01 of a UE proposed in the disclosure.

In FIG. 14, if the UE received an RRC message or a MAC CE or DCI of a PDCCH according to embodiments proposed in the disclosure, or if the UE received an RRC message first (or previously) (n-05) and configured first channel measurement configuration information (or second channel measurement configuration information), or if the UE received information indicating cell activation through an RRC message or a MAC CE or DCI of a PDCCH, or information related to first channel measurement configuration information (n-10), the UE may quickly activate the cell in consideration of the first channel measurement configuration information according to the embodiments proposed in the disclosure (n-20). If the UE received an RRC message first (or previously) and configured no first channel measurement configuration information (or second channel measurement configuration information), or if the UE received information indicating cell activation through an RRC message or a MAC CE or DCI of a PDCCH, or if the UE received no information related to first channel measurement configuration information (n-10), the UE may activate the cell without considering the first channel measurement configuration information according to the embodiments proposed in the disclosure (n-30). If the UE received information indicating cell deactivation through an RRC message or a MAC CE or DCI of a PDCCH (n-10), the UE may deactivate the cell according to the embodiments proposed in the disclosure (n-40).

The embodiments proposed in the disclosure may be combined or expanded to constitute and operate various embodiments.

According to an embodiment of the disclosure, a power headroom reporting procedure will be proposed such that a base station can adjust or manage uplink transmission power of a UE. In the case of a cell (SCell) for which a dormant BWP is configured or a serving cell or a suspended (or deactivated) cell group or cell proposed above in the disclosure, if the activated serving cell's current or activated BWP (or downlink BWP) is a dormant BWP, or activated as a BWP indicated by a dormant BWP identifier, or with regard to a cell (for example, PSCell or SCell) having a suspended (or deactivated) cell group, uplink data transmission or PUCCH transmission is impossible in the dormant BWP or suspended (or deactivated) cell group or cell even if the power headroom is reported, and unnecessary power headroom reporting may thus be performed.

Therefore, the disclosure next proposes a procedure wherein, in order to reduce the UE's unnecessary processing load and to prevent waste of transmission resources due to unnecessary power headroom reporting, the UE first identifies whether a cell is activated or deactivated and then identifies, with regard to an activated cell, whether the activated cell's activated BWP (for example, downlink BWP) is a dormant BWP (or a BWP having a dormant BWP identifier configured by an RRC message) or not a dormant BWP (or not a BWP having a dormant BWP identifier configured by an RRC message), or whether a cell group or cell (for example, PSCell) is suspended (or deactivated) or activated (or resumed). As another method, the UE may first identify whether a cell is activated or deactivated. With regard to an activated cell which is configured a dormant BWP (for example, if a dormant BWP identifier has been configured with regard to the cell by an RRC message), the UE may perform a procedure of identifying whether the activated cell's activated BWP (for example, downlink BWP) is a dormant BWP (or a BWP having a dormant BWP identifier configured by an RRC message) or not a dormant BWP (or not a BWP having a dormant BWP identifier configured by an RRC message). With regard to an activated cell which is configured no dormant BWP, the procedure of identifying an activated BWP as above may be omitted (or not performed).

In addition, it is proposed that, in the case of a cell (SCell) which is configured a dormant BWP, or a serving cell, in the above-proposed procedure, if the activated serving cell's current or activated BWP (or downlink BWP) is a dormant BWP or is activated as a BWP indicated by a dormant BWP identifier, or if a cell group or cell (for example, PSCell or SCell) is suspended (or deactivated), the power headroom reporting procedure will not be triggered, and the power headroom will not be reported with regard to the cell even if the power headroom reporting procedure is triggered by another cell. As another method, in the case of a cell (SCell) which is configured a dormant BWP, or a serving cell, the power headroom reporting procedure will be triggered only if the activated serving cell's current or activated BWP (or downlink BWP) is not a dormant BWP or is not activated as a BWP indicated by a dormant BWP identifier, or if a cell group or cell (for example, PSCell or SCell) is not suspended (or not deactivated or, if activated or resumed). Alternatively, even if the power headroom reporting procedure is triggered by another cell, the power headroom may be reported only if the activated serving cell's current or activated BWP (or downlink BWP) is not a dormant BWP or is not activated as a BWP indicated by a dormant BWP identifier, or if a cell group or cell (for example, PSCell or SCell) is not suspended (or not deactivated or, if activated or resumed). Therefore, the procedure proposed in the disclosure may prevent the UE's unnecessary processing load and prevent waste of transmission resources due to unnecessary power headroom reporting. A detailed embodiment of the above-proposed procedure will be described in the following second embodiment in consideration of a dormant BWP.

The power headroom reporting procedure in the first embodiment of the disclosure, which considers a dormant BWP, may be used to provide the following information to a base station (serving gNB) that provides a service to a UE. The power headroom may indicate the difference between maximum transmission power (or calculated or nominal UE maximum transmit power) which the UE can use for transmission in each activated serving cell (PCell or SCell or PSCell or SpCell) and power measured with regard to uplink data transmission (UL-SCH) or sounding reference signal (SRS) transmission, or may indicate the difference between maximum transmission power which the UE can use for transmission and power measured with regard to PUCCH transmission and uplink data transmission in the SpCell (PCell or PSCell) of another MAC layer device (for example, LTE MAC or E-UTRA MAC). The power headroom may be reported to the base station by configuring the power headroom value in a MAC CE and transmitting the MAC CE by an uplink transmission resource according to a power headroom reporting procedure.
- The first type of power headroom corresponds to the difference between maximum transmission power (or calculated or nominal UE maximum transmit power) which the UE can use for transmission with regard to each activated serving cell (PCell or SCell or PSCell or SpCell) and power measured with regard to uplink data transmission (UL-SCH), and this may be reported.
- The second type of power headroom corresponds to the difference between maximum transmission power (or calculated or nominal UE maximum transmit power) which the UE can use for transmission and power measured with regard to PUCCH transmission or uplink data transmission (UL-SCH) in the SpCell (PCell or PSCell) of another MAC layer device (for example, LTE MAC or E-UTRA MAC if dual connectivity has been configured), and this may be reported.
- The third type of power headroom corresponds to the difference between maximum transmission power (or calculated or nominal UE maximum transmit power) which the UE can use for transmission with regard to each activated serving cell (PCell or SCell or PSCell or SpCell) and power measured with regard to sounding reference signal (SRS) transmission, and this may be reported.

The first embodiment of the procedure of reporting the power headroom in consideration of a dormant BWP proposed in the disclosure is as follows:

In the first embodiment of the procedure, configuration information for power headroom reporting may be configured for a UE by an RRC message (for example, RRCReconfiguration), and an RRC layer device may adjust the power headroom reporting procedure with the following parameters:
- A timer value (phr-PeriodicTimer) for periodically reporting the power headroom; for example, if the periodic power headroom reporting timer expires, the power headroom reporting procedure may be triggered.
- A timer value (phr-ProhibitTimer) for limiting power headroom reporting: for example, the power headroom reporting procedure is not triggered as long as the power headroom reporting limitation timer is being driven.
- A threshold value (phr-Tx-PowerFactorChange) for triggering power headroom reporting;
- An indicator (phr-Type2OtherCell) indicating a second type of power headroom reporting in consideration of another cell or MAC layer device;
- An indicator (phr-ModeOtherCG) indicating power headroom reporting in consideration of another cell group;
- An indicator (multiplePHR) indicating multiple power headroom reports.

Above parameters may be configured by an RRC message (for example, RRCReconfiguration) as in FIG. 6 in the disclosure.

In the first embodiment of the power headroom reporting procedure in consideration of a dormant BWP proposed in the disclosure, the power headroom reporting procedure may be triggered if one event occurs among the following conditions, or if one condition is satisfied:
- If the power headroom limiting timer (phr-ProhibitTimer) has expired or had expired, if a MAC layer device's activated serving cell's BWP (or downlink BWP) is activated, and if path loss has been changed by a threshold value (phr-Tx-PowerFactorChange) dB configured by an RRC message with regard to at least one activated serving cell, the activated BWP (or downlink BWP) of which is not a dormant BWP, or if the activated serving cell's activated BWP (or downlink BWP) or the current BWP (or activated current downlink BWP) is not a dormant BWP, then a power headroom reporting procedure is triggered. The path loss may be used as a path loss reference value when a MAC layer device has (or has received) an uplink transmission resource for new transmission after the last power headroom transmitted by this MAC layer device.
- The power headroom reporting procedure may be triggered by expiration of the periodic power headroom reporting timer.
- The power headroom reporting procedure may be triggered if a power headroom reporting function is configured or reconfigured by an upper layer device (for example, RRC layer device). The configuration or reconfiguration may not be used to activate the power headroom reporting function.
- The power headroom reporting procedure may be triggered if a cell for which a MAC layer device's uplink is configured is activated, and if the first active downlink BWP configured for the cell (or first active downlink BWP identifier (firstActiveDownlinkBWP-Id)) is not configured as a dormant BWP.
- The power headroom reporting procedure may be triggered if a PSCell or cell group or cell is added or newly added or changed (or if dual connectivity is configured, and if the SCG's PSCell is newly added or changed), or if the PSCell or cell group or cell is activated or resumed.
- As another method, the power headroom reporting procedure may be triggered if a PSCell is added or newly added or changed (or if dual connectivity is configured, and if the SCG's PSCell is newly added or changed), or if the PSCell or cell group or cell is activated or resumed, and if the first active downlink BWP configured for the cell (or first active downlink BWP identifier (firstActiveDownlinkBWP-Id)) is not configured as a dormant BWP.
- The power headroom reporting procedure may be triggered if the power headroom reporting limitation timer (*phr-ProhibitTimer*) has expired or had expired, if a MAC layer device has (or has received) an uplink transmission resource for new transmission, and if the following condition is true or is satisfied with regard to an activated serving cell for which a MAC layer device's uplink is configured.
   ▪ The condition is as follows: if there is an uplink transmission resource allocated for PUCCH transmission or transmission in the cell or in this cell, if the MAC layer device has an uplink transmission resource for PUCCH transmission or transmission in the cell or in this cell, and if the required power backoff due to power management (for example, in order to reduce interference of other frequencies or to avoid harmful influences on human bodies) regarding the cell or this cell after the last transmitted power headroom is changed by a threshold value (*phr-Tx-PowerFactorChange*) dB configured by an RRC message, then a power headroom reporting procedure may be triggered.
- If a UL BWP is activated (or if the first active UL BWP is activated), or if the downlink BWP (or activated BWP or current BWP (or downlink BWP)) of an activated SCell for which the uplink of a MAC layer device is configured is switched or activated from a dormant BWP to a normal BWP (or a non-dormant BWP or a non-dormant BWP activated first from hibernation configured by an RRC message (BWP indicated by firstActiveNonDormantDownlinkBWP-Id or the non-dormant BWP's identifier), then a power headroom reporting procedure may be triggered.
- If the downlink BWP (or activated BWP or current BWP (or downlink BWP)) of an activated SCell which is configured the uplink in a MAC layer device is activated as a BWP indicated by a BWP identifier (firstOutsideActiveTimeBWP-Id or firstWithinActiveTimeBWP-Id) activated first from hibernation configured by an RRC message, then a power headroom reporting procedure may be triggered. BWP activation as above may be indicated by DCI of a PDCCH.
- If a UL BWP is activated (or if the first active UL BWP is activated), or if the downlink BWP (or activated BWP or current BWP (or downlink BWP)) of an activated SCell for which the uplink of a MAC layer device is configured is switched or activated from a dormant BWP to a normal BWP (or a non-dormant BWP or a non-dormant BWP activated first from hibernation configured by an RRC message (BWP indicated by firstActiveNonDormantDownlinkBWP-Id or firstOutsideActiveTimeBWP-Id or firstWithinActiveTimeBWP-Id or the non-dormant BWP's identifier), or if first SRS configuration information or second configuration information is configured (or if the activated serving cell's activated BWP (or downlink BWP) or current BWP (or activated current downlink BWP) is a dormant BWP, and if first SRS configuration information or second configuration information is configured), then a power headroom reporting procedure may be triggered.
- If the power headroom limiting timer (*phr-ProhibitTimer*) has expired or had expired, if a MAC layer device's activated serving cell's BWP (or downlink BWP) is activated, and if path loss has been changed by a threshold value (*phr-Tx-PowerFactorChange*) dB configured by an RRC message with regard to at least one activated serving cell, the activated BWP (or downlink BWP) of which is not a dormant BWP, or if the activated serving cell's activated BWP (or downlink BWP) or the current BWP (or activated current downlink BWP) is not a dormant BWP, or if first SRS configuration information or second configuration information is configured (or if the activated serving cell's activated BWP (or downlink BWP) or current BWP (or activated current downlink BWP) is a dormant BWP, and if first SRS configuration information or second configuration information is configured), then a power headroom reporting procedure may be triggered. The path loss may be used as a path loss reference value when a MAC layer device has (or has received) an uplink transmission resource for new transmission after the last power headroom transmitted by this MAC layer device.

The disclosure next proposes that, if a power headroom reporting procedure is triggered because one or multiple events among the above-proposed conditions has occurred, or because one or multiple conditions are satisfied, the MAC layer device will operation as follows:

If the MAC layer device has or has received an uplink allocated for new transmission, the MAC layer device operates as follows:
- 1> If the uplink transmission resource is the first uplink transmission resource allocated for new transmission after the last MAC rest procedure
   ▪ 2> A periodic power headroom reporting timer is started for periodic power headroom reporting.
- 1> If it is determined (or confirmed) that a power headroom reporting procedure has been triggered and not canceled, and
- 1> And if the allocated uplink transmission resource can include a MAC control element (CE) for power headroom reporting configured to be transmitted in the MAC layer device as a result of a logical channel prioritization (LCP) procedure (for example, a procedure of allocating an uplink transmission resource to data or MAC CE), and its sub-header (for example, MAC sub-header), or if transmission can be made with the transmission resource
   ▪ 2> If multiple indicators (multiplePHR) indicating power headroom reporting are configured as TRUE (or configured to report)
      ◆ 3> With regard to each activated serving cell which is connected to a MAC layer device or configured for a MAC layer device, and which is configured an uplink
      ◆ 3> And if the activated serving cell's BWP (or downlink BWP) is activated, and if the activated BWP (or downlink BWP) is not a dormant BWP, or if the activated serving cell's activated BWP (or downlink BWP) or current BWP (or activated current downlink BWP) is not a dormant BWP, or if the cell group or cell (for example, PSCell) is not suspended or not deactivated
      ◆ 3> Or if the activated serving cell's BWP (or downlink BWP) is activated, and if the activated BWP (or downlink BWP) is not a dormant BWP, or if the activated serving cell's activated BWP (or downlink BWP) or current BWP (or activated current downlink BWP) is not a dormant BWP, or if the cell group or cell (for example, PSCell) is not suspended or not deactivated, or if first SRS configuration information or second configuration information is configured (or if the activated serving cell's activated BWP (or downlink BWP) or current BWP (or activated current downlink BWP) is a dormant BWP, and if first or second SRS configuration information is configured)
         • 4> The value of the first or third type of power headroom corresponding to an uplink carrier (for frequency) corresponding to the cell is acquired (or calculated).
         • 4> If above or this MAC layer device has or received an uplink transmission resource allocated for transmission with regard to above or this serving cell
         • 4> Or if another MAC layer device is configured, and if the other MAC layer device has or received an uplink transmission resource allocated for transmission with regard to above or this serving cell, and if an indicator (phr-ModeOtherCG) indicating power headroom reporting on consideration of other cell groups is configured as Real by the upper layer device (RRC layer device) (or configured to be reported as a real value),
            ▪ 5> The maximum transmission power value (or power value necessary to calculate power headroom) corresponding to the serving cell is acquired from a physical layer device.
      ◆ 3> If an indicator (phr- Type2OtherCell) indicating the second type of power headroom reporting in consideration of another cell or MAC layer device is configured as TRUE (or configured to report);
         • 4> If the other MAC layer device is an E-UTRA MAC layer device
            ▪ 5> A value for the second type of power headroom reporting regarding the other MAC layer device's SpCell is acquired (or calculated)
            ▪ 5> If an indicator (phr-ModeOtherCG) indicating power headroom reporting on consideration of other cell groups is configured as Real by the upper layer device (RRC layer device) (or configured to be reported as a real value),
            ▪ 5> The maximum transmission power value (or power value necessary to calculate power headroom) corresponding to the SpCell of the other MAC layer (E-UTRA MAC layer device) is acquired from a physical layer device.
      ◆ 3> A multiplexing and reassembly procedure of the MAC layer device is instructed to generate and transmit multiple MAC CEs for reporting the power headroom, based on the values reported by the physical layer device.
   ▪ 2> If the indicator (multiplePHR) indicating multiple power headroom reports is not configured as TRUE (or not configured to report), or if one power headroom report is indicated, or if one power headroom reporting format is used
      ◆ 3> The first type of power headroom value regarding the uplink carrier (or frequency) of the serving cell (or Pcell) is acquired (or calculated) from the physical layer device.
      ◆ 3> The maximum transmission power value (or power value necessary to calculate power headroom) regarding the serving cell (or Pcell) is acquired from the physical layer device.
      ◆ 3> The multiplexing and reassembly procedure of the MAC layer device is instructed to generate and transmit one MAC CE for reporting the power headroom, based on the values reported by the physical layer device.
   ▪ 2> A timer for periodically reporting the power headroom is started or restarted.
   ▪ 2> A timer for limiting power headroom reporting is started or restarted.
   ▪ 2> All triggered power headroom or power headroom reporting procedures are canceled.

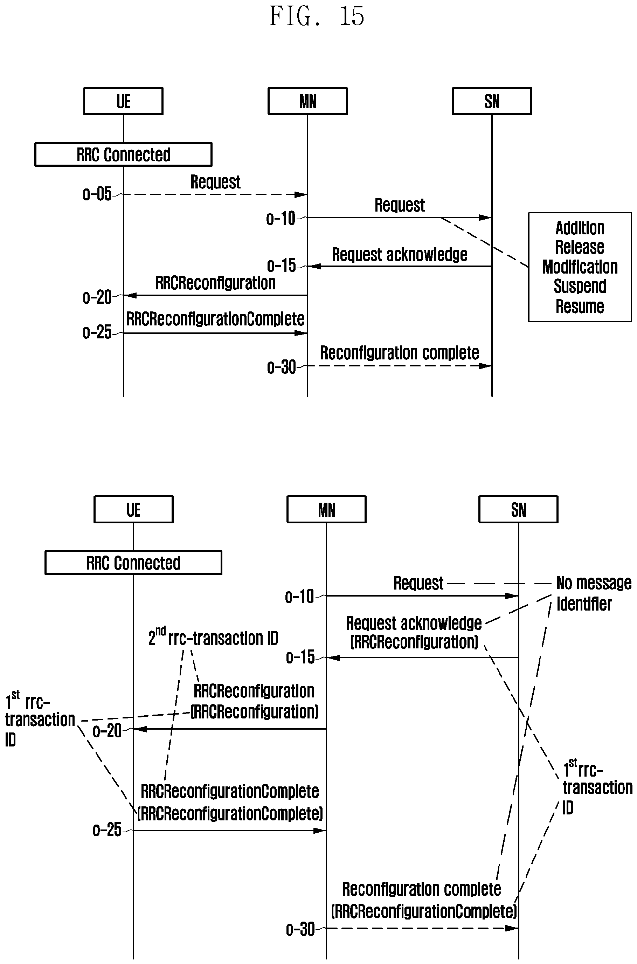

FIG. 15 illustrates a signaling procedure in which dual connectivity is configured or released in a next-generation mobile communication system according to the disclosure, or in which a secondary cell group configured by the dual connectivity is activated or resumed or suspended or deactivated.

A first signaling procedure in which dual connectivity is configured or released, or a secondary cell group configured by the dual connectivity is configured or released or activated or resumed or suspended or deactivated in FIG. 15 is as follows:

In FIG. 15, the UE may configure RRC connection to a network or a base station as in FIG. 6 of the disclosure, and may transmit or receive data with the base station (for example, master cell group, maser node (MN) or master cell group (MCG) or master cell group's cells (PCell or SCell)).

The base station may configure dual connectivity for the UE for a specific reason (for example, if a high data transmission rate is necessary, or at the UE's request (o-05), or if a high level of QoS requirement is to be satisfied, or the like). For example, the UE may send a request to the base station to configure or release or release or activate or deactivate or resume or suspend the dual connectivity or a cell group (for example, secondary cell group) or a cell. The request message may include a frequency (or channel) measurement result report or a cell group identifier or cell identifiers or measurement results (o-05). As another method, the base station may determine whether to configure or release or add or deactivate or activate or resume or change or reconfigure or suspend the dual connectivity or a cell group (for example, secondary cell group) or a cell in consideration of the amount of downlink (or uplink) data or the amount of buffer.

The master base station (master node (MN) or master cell group (MCG)) may receive a frequency-specific or channel-related frequency or channel measurement report from the UE. The master base station may determine a secondary base station (secondary node (SN) or secondary cell group (SCG)) for which dual connectivity is to be configured, based on the measurement report. Alternatively, the master base station may determine whether to configure or release or add or deactivate or activate or resume or change or reconfigure or suspend the dual connectivity or a cell group (for example, secondary cell group) or a cell in consideration of the amount of downlink (or uplink) data or the amount of buffer. The master base station may transmit a message to the secondary base station through an Xn interface (for example, inter-base station interface) or Sn interface (interface between a base station and an AMF or a UMF or between base stations) so as to request whether the determined secondary base station can be configured or added as the UE's secondary cell group in order to configure or release or add or deactivate or activate or resume or change or reconfigure or suspend the dual connectivity or a cell group (for example, secondary cell group) or a cell (o-10). In the request message, each separate new request message may be defined and used to configure or release or add or deactivate or activate or resume or change or reconfigure or suspend the dual connectivity or a cell group (for example, secondary cell group) or a cell, with regard to the secondary base station. As another method, in an existing message (for example, SN addition request message or SN modification request message or SN release request message or the like), a new indicator may be defined to instruct (or request) to configure or release or add or deactivate or activate or resume or change or reconfigure or suspend a cell group (for example, secondary cell group) or a cell. The request message may include information such as cell group configuration information (for example, master cell group configuration information) currently configured for the UE or bearer configuration information or UE capability information or the UE's frequency (or channel) measurement result information or the like such that, when the secondary base station configures a secondary cell group for the UE with reference to the above information, secondary cell group configuration information or bearer configuration information can be configured in conformity with UE capability or so as not to exceed UE capability or in conformity with the master cell group's bearer configuration information.

Upon receiving the request message o-10, the secondary base station may compose a rejection message, if the request message is to be rejected, and may transmit the same to the master base station through an Xn interface (for example, inter-base station interface) or Sn interface (interface between a base station and an AMF or a UMF or between base stations) (o-15). If the request message is to be accepted, the secondary base station may transmit a request acceptance message to the master base station through the Xn interface (for example, inter-base station interface) or Sn interface (interface between a base station and an AMF or a UMF or between base stations), the request acceptance message including configuration information or indicator to configure or release or add or deactivate or activate or resume or change or reconfigure or suspend the dual connectivity or a cell group (for example, secondary cell group) or a cell (o-15). The request acceptance message may include some of the following pieces of information:
- The same identifier as the message identifier included in the request message, or an indicator indicating that the request in the request message will be accepted
- Configuration information or indicator (for example, configuration information or indicator for the master cell group) to configure or release or add or deactivate or activate or resume or change or reconfigure or suspend the dual connectivity or a cell group (for example, secondary cell group) or a cell
- First RRC message (for example, RRCReconfiguration message) including configuration information or indicator to configure or release or add or deactivate or activate or resume or change or reconfigure or suspend the dual connectivity or a cell group (for example, secondary cell group) or a cell
- The first RRC message may include some of the following pieces of information:
   ▪ A first RRC message identifier (for example, rrc-Transaction identifier) for distinguishing the first RRC message. The UE and the base station (for example, secondary base station) transmit or receive multiple RRC messages with each other, and the RRC message may thus include an identifier for distinguishing each RRC message. For example, an RRC message (for example, RRCReconfiguration) transmitted by the transmitting end or an RRC message (for example, RRCReconfigurationComplete) corresponding to the RRC message (for example, RRCReconfiguration) transmitted by the receiving end or an RRC message corresponding to the RRC message transmitted by the transmitting end may include the same first RRC message identifier.
   ▪ Configuration information or indicator (for example, configuration information or indicator for the UE) to configure or release or add or deactivate or activate or resume or change or reconfigure or suspend the dual connectivity or a cell group (for example, secondary cell group) or a cell
   ▪ An indicator indicating the state of a cell group (for example, activated or deactivated or suspended or resumed)
   ▪ A cell group identifier for distinguishing cell groups. The cell group identifier may be allocated by the master base station, or one of pre-promised identifiers may be allocated by the secondary base station.)
   ▪ Cell group or cell configuration information
   ▪ Bearer configuration information. For example, indicator information indicating operations of a protocol layer device (for example, SDAP layer device or PDCP layer device or RLC layer device or MAC layer device) of each bearer (for example, a PDCP suspension indicator or a PDCP reestablishment indicator or a PDCP data restoration indictor or an RLC reestablishment indicator or a MAC partial reset indicator or a MAC reset indicator or an indicator triggering a new operation)
   ▪ If configuration information or indicator for configuring or adding or activating or resuming or changing or reconfiguring the dual connectivity or a cell group (for example, secondary cell group) or a cell is included, a first indicator (for example, mobilityControlInfor or ReconfigurationWithSync) may be included together. However, if configuration information or indicator for releasing or deactivating or reconfiguring or suspending the dual connectivity or a cell group (for example, secondary cell group) or a cell is included, the first indicator (for example, mobilityControlInfor or ReconfigurationWithSync) may not be included. The first indicator may be an indicator for triggering a random access procedure by the cell group or cell, or an indicator for synchronizing signals with a new cell, or an indicator indicating the UE's frequency shift, or an indicator indicating the cell group's (or cell's) change.
   ▪ If configuration information or indicator for configuring or adding or activating or resuming or changing or reconfiguring the dual connectivity or a cell group (for example, secondary cell group) or a cell is included, random access configuration information may be included together. However, if configuration information or indicator for releasing or deactivating or reconfiguring or suspending the dual connectivity or a cell group (for example, secondary cell group) or a cell is included, the random access configuration information may not be included. The random access configuration information may include random access transmission resource information (time or frequency transmission resource) for preamble transmission regarding the cell group or cell, or designated preamble information or the like.
   ▪ Time information indicating when the dual connectivity or a cell group (for example, secondary cell group) or a cell (PSCell or SCG SCell) is to be activated or resumed or deactivated or suspended (for example, information (for example, X) indicating timing, time unit, subframe or time slot or symbol unit), for example, if the message was received at the n^{th} time unit, time information indicating whether the cell is to be activated or resumed or deactivated or suspended at the (n+X)^{th})

Upon receiving a request acceptance message o-15, the master base station may identify the request acceptance message and may transmit a second RRC message (for example, RRCReconfiguration) including information included in the request acceptance message (for example, first RRC message included in the request acceptance message o-15) to the UE (o-20). The second RRC message may include some of the following pieces of information:
- A second RRC message identifier (for example, rrc-Transaction identifier) for distinguishing the second RRC message. The UE and the base station (for example, master base station) transmit or receive multiple RRC messages with each other, and the RRC message may thus include an identifier for distinguishing each RRC message. For example, an RRC message (for example, RRCReconfiguration) transmitted by the transmitting end or an RRC message (for example, RRCReconfigurationComplete) corresponding to the RRC message (for example, RRCReconfiguration) transmitted by the receiving end or an RRC message corresponding to the RRC message transmitted by the transmitting end may include the same second RRC message identifier.
- A first RRC message included in the request acceptance message o-15
- Configuration information or indicator (for example, configuration information or indicator for the UE) to configure or release or add or deactivate or activate or resume or change or reconfigure or suspend the dual connectivity or a cell group (for example, secondary cell group) or a cell
- An indicator indicating the state of a cell group (for example, activated or deactivated or suspended or resumed)
- A cell group identifier for distinguishing cell groups. The cell group identifier may be allocated by the master base station, or one of pre-promised identifiers may be allocated by the secondary base station.)
- Cell group or cell configuration information
- Bearer configuration information. For example, indicator information indicating operations of a protocol layer device (for example, SDAP layer device or PDCP layer device or RLC layer device or MAC layer device) of each bearer (for example, a PDCP suspension indicator or a PDCP reestablishment indicator or a PDCP data restoration indictor or an RLC reestablishment indicator or a MAC partial reset indicator or a MAC reset indicator or an indicator triggering a new operation)
- If configuration information or indicator for configuring or adding or activating or resuming or changing or reconfiguring the dual connectivity or a cell group (for example, secondary cell group) or a cell is included, a first indicator (for example, mobilityControlInfor or ReconfigurationWithSync) may be included together. However, if configuration information or indicator for releasing or deactivating or reconfiguring or suspending the dual connectivity or a cell group (for example, secondary cell group) or a cell is included, the first indicator (for example, mobilityControlInfor or ReconfigurationWithSync) may not be included. The first indicator may be an indicator for triggering a random access procedure by the cell group or cell, or an indicator for synchronizing signals with a new cell, or an indicator indicating the UE's frequency shift, or an indicator indicating the cell group's (or cell's) change. As another method, the UE may perform PDCCH monitoring in the designated or configured cell group or cell, and may trigger and perform a random access procedure as indicated in the PDCCH. For example, the upper layer device (for example, RRC layer device) may send an indicator for triggering the random access procedure to the lower layer device (for example, MAC layer device).
- If configuration information or indicator for configuring or adding or activating or resuming or changing or reconfiguring the dual connectivity or a cell group (for example, secondary cell group) or a cell is included, random access configuration information may be included together. However, if configuration information or indicator for releasing or deactivating or reconfiguring or suspending the dual connectivity or a cell group (for example, secondary cell group) or a cell is included, the random access configuration information may not be included. The random access configuration information may include random access transmission resource information (time or frequency transmission resource) for preamble transmission regarding the cell group or cell, or designated preamble information or the like.
- Time information indicating when the dual connectivity or a cell group (for example, secondary cell group) or a cell (PSCell or SCG SCell) is to be activated or resumed or deactivated or suspended (for example, information (for example, X) indicating timing, time unit, subframe or time slot or symbol unit), for example, if the message was received at the n^{th} time unit, time information indicating whether the cell is to be activated or resumed or deactivated or suspended at the (n+X)^{th})

Upon receiving the second RRC message o-20, the UE may read and identify the second RRC message, or may read information (for example, first RRC message included in the second RRC message message) included in the second RRC message, and the UE may configure or add or change or resume or suspend or deactivate the dual connectivity or a cell group (for example, secondary cell group). In addition, if the second RRC message or first RRC message includes a first indicator for triggering a random access procedure, the UE may trigger a random access procedure with regard to the configured or indicated cell group or cell. When the UE performs the random access procedure, if there is random access information in the RRC message, or if there is random access information that has been stored, a random access procedure (for example, contention-free random access procedure (for example, four-step random access or two-step random access)) may be performed based on random access information which has been stored, or which is received in the RRC message, or based on system information. If there is no random access information in the RRC message, the UE may perform a random access procedure (for example, contention-based random access procedure (for example, four-step random access or two-step random access)). As another method, the UE may perform PDCCH monitoring in the designated or configured cell group or cell and may trigger and perform a random access procedure as indicated in the PDCCH. For example, the upper layer device (for example, RRC layer device) may send an indicator for triggering the random access procedure to the lower layer device (for example, MAC layer device).

The UE may receive a second RRC message o-20 or may apply received configuration information, may generate a third RRC message o-25 or a fourth RRC message, and may transmit the same to the base station (o-25). The third RRC message may include some of the following pieces of information:
- A second RRC message identifier having the same value as the second RRC message identifier included in the second RRC message
- An indicator or identifier indicating successful reception of the second RRC message
- A fourth RRC message including a response indicating successful reception of a first RRC message generated and transmitted by the secondary base station. The fourth RRC message may include some of the following pieces of information:
   ▪ A first RRC message identifier having the same value as the first RRC message identifier included in the first RRC message
   ▪ An indicator or identifier indicating successful reception of the first RRC message
   ▪ A response indicator indicating successful application of the first RRC message

Upon receiving the third RRC message, the base station (for example, master base station) may identify whether the same is a response message to the second RRC message, through the second identifier. The base station may identify the fourth RRC message included in the third RRC message, and may transmit the fourth RRC message to the secondary base station while being included in a configuration completion message indicating completion of configuration to the secondary cell group base station through an Xn interface (for example, inter-base station interface) or Sn interface (interface between a base station and an AMF or a UMF or between base stations) (o-30). The configuration completion message may include some of the following pieces of information:
- A fourth RRC message included in the third RRC message
- An indicator or identifier indicating completion of configuration (cell group addition or change or release) or instruction (cell group activation or deactivation or suspension or resumption) indicated in the request acceptance message or first RRC message

Upon receiving the configuration completion message, the base station (for example, secondary base station) may read or identify the fourth RRC message included in the configuration completion message, and may identify whether the same is a response message to the first RRC message, through the first identifier. In addition, the base station may identify whether the configuration or instruction indicated thereby is successfully completed. Upon receiving the configuration completion message or the fourth RRC message, the secondary base station may transmit, in response thereto, a response message to the master base station to indicate successful reception of the configuration completion message or the fourth RRC message.

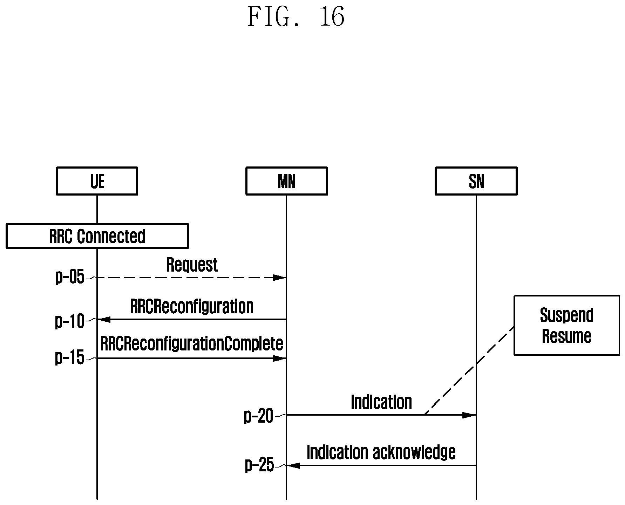

FIG. 16 illustrates a second signaling procedure in which dual connectivity is configured or released, or in which a secondary cell group configured by the dual connectivity is configured or released or activated or resumed or suspended or deactivated.

In FIG. 16, the UE may configure RRC connection to a network or a base station as in FIG. 6 of the disclosure, and may transmit or receive data with the base station (for example, master cell group, maser node (MN) or master cell group (MCG) or master cell group's cells (PCell or SCell)).

The base station may configure dual connectivity for the UE for a specific reason (for example, if a high data transmission rate is necessary, or at the UE's request (p-05), or if a high level of QoS requirement is to be satisfied, or the like). For example, the UE may send a request to the base station to configure or release or release or activate or deactivate or resume or suspend the dual connectivity or a cell group (for example, secondary cell group) or a cell, and the request message may include a frequency (or channel) measurement result report or a cell group identifier or cell identifiers or measurement results (p-05). As another method, the base station may determine whether to configure or release or add or deactivate or activate or resume or change or reconfigure or suspend the dual connectivity or a cell group (for example, secondary cell group) or a cell in consideration of the amount of downlink (or uplink) data or the amount of buffer.

The master base station (master node (MN) or master cell group (MCG)) may receive a frequency-specific or channel-related frequency or channel measurement report from the UE, and may determine a secondary base station (secondary node (SN) or secondary cell group (SCG)) for which dual connectivity is to be configured, based on the measurement report. Alternatively, the master base station may determine whether to configure or release or add or deactivate or activate or resume or change or reconfigure or suspend the dual connectivity or a cell group (for example, secondary cell group) or a cell in consideration of the amount of downlink (or uplink) data or the amount of buffer. The master base station may transmit a first RRC message to the UE in order to configure or release or add or deactivate or activate or resume or change or reconfigure or suspend the dual connectivity regarding the determined secondary base station or a cell group (for example, secondary cell group) or a cell (p-10). In the first RRC message, each separate new request message may be defined and used to indicate to the UE whether to configure or release or add or deactivate or activate or resume or change or reconfigure or suspend the dual connectivity or a cell group (for example, secondary cell group) or a cell. As another method, in an existing message (for example, RRCReconfiguration or RRCResume message), a new indicator may be defined to instruct (or request) to configure or release or add or deactivate or activate or resume or change or reconfigure or suspend a cell group (for example, secondary cell group) or a cell. The first RRC message may include some of the following pieces of information:
- A first RRC message identifier (for example, rrc-Transaction identifier) for distinguishing the first RRC message. Since the UE and the base station (for example, master base station) transmit or receive multiple RRC messages with each other, the RRC message may include identifiers for distinguishing respective RRC messages. For example, an RRC message (for example, RRCReconfiguration) transmitted by the transmitting end or an RRC message (for example, RRCReconfigurationComplete) corresponding to the RRC message (for example, RRCReconfiguration) transmitted by the receiving end or an RRC message corresponding to the RRC message transmitted by the transmitting end may include the same first RRC message identifier.
- Configuration information or indicator (for example, configuration information or indicator for the UE) for configuring or releasing or adding or deactivating or activating or resuming or changing or reconfiguring or suspending the dual connectivity or a cell group (for example, secondary cell group) or a cell
- An indicator indicating the state of a cell group (for example, activated or deactivated or suspended or resumed)
- A cell group identifier for distinguishing cell groups. The cell group identifier may be allocated by the master base station, or one of pre-promised identifiers may be allocated by the secondary base station.)
- Cell group or cell configuration information
- Bearer configuration information. For example, indicator information indicating operations of a protocol layer device (for example, SDAP layer device or PDCP layer device or RLC layer device or MAC layer device) of each bearer (for example, a PDCP suspension indicator or a PDCP reestablishment indicator or a PDCP data restoration indictor or an RLC reestablishment indicator or a MAC partial reset indicator or a MAC reset indicator or an indicator triggering a new operation)
- If configuration information or indicator for configuring or adding or activating or resuming or changing or reconfiguring the dual connectivity or a cell group (for example, secondary cell group) or a cell is included, a first indicator (for example, mobilityControlInfor or ReconfigurationWithSync) may be included together. However, if configuration information or indicator for releasing or deactivating or reconfiguring or suspending the dual connectivity or a cell group (for example, secondary cell group) or a cell is included, the first indicator (for example, mobilityControlInfor or ReconfigurationWithSync) may not be included. The first indicator may be an indicator for triggering a random access procedure by the cell group or cell, or an indicator for synchronizing signals with a new cell, or an indicator indicating the UE's frequency shift, or an indicator indicating the cell group's (or cell's) change. As another method, the UE may perform PDCCH monitoring in the indicated or configured cell group or cell, and may trigger and perform a random access procedure as indicated in the PDCCH. For example, the upper layer device (for example, RRC layer device) may send an indicator for triggering the random access procedure to the lower layer device (for example, MAC layer device).
- If configuration information or indicator for configuring or adding or activating or resuming or changing or reconfiguring the dual connectivity or a cell group (for example, secondary cell group) or a cell is included, random access configuration information may be included together. However, if configuration information or indicator for releasing or deactivating or reconfiguring or suspending the dual connectivity or a cell group (for example, secondary cell group) or a cell is included, the random access configuration information may not be included. The random access configuration information may include random access transmission resource information (time or frequency transmission resource) for preamble transmission regarding the cell group or cell, or designated preamble information or the like.
- Time information indicating when the dual connectivity or a cell group (for example, secondary cell group) or a cell (PSCell or SCG SCell) is to be activated or resumed or deactivated or suspended (for example, information (for example, X) indicating timing, time unit, subframe or time slot or symbol unit), for example, if the message was received at the n^{th} time unit, time information indicating whether the cell is to be activated or resumed or deactivated or suspended at the (n+X)^{th})

Upon receiving the first RRC message p-10, the UE may read and identify the first RRC message, and the UE may configure or add or change or resume or suspend or deactivate the dual connectivity or a cell group (for example, secondary cell group). In addition, if the first RRC message includes a first indicator for triggering a random access procedure, the UE may trigger a random access procedure with regard to the configured or indicated cell group or cell. When the UE performs the random access procedure, if there is random access information in the RRC message, or if there is random access information that has been stored, a random access procedure (for example, contention-free random access procedure (for example, four-step random access or two-step random access)) may be performed based on random access information which has been stored, or which is received in the RRC message, or based on system information. If there is no random access information in the RRC message, the UE may perform a random access procedure (for example, contention-based random access procedure (for example, four-step random access or two-step random access)). As another method, the UE may perform PDCCH monitoring in the indicated or configured cell group or cell and may trigger and perform a random access procedure as indicated in the PDCCH. For example, the upper layer device (for example, RRC layer device) may send an indicator for triggering the random access procedure to the lower layer device (for example, MAC layer device).

The UE may receive a first RRC message p-10 or may apply received configuration information, may generate a second RRC message and transmit the same to the base station (p-15). The second RRC message may include some of the following pieces of information:
- A first RRC message identifier having the same value as the first RRC message identifier included in the first RRC message
- An indicator or identifier indicating successful reception of the first RRC message

Upon receiving the second RRC message, the base station (for example, master base station) may identify whether the same is a response message to the first RRC message, through the first identifier. The base station may identify the first RRC message and may transmit an indication message, which includes an indication of cell group configuration or addition or release or activation or resumption or suspension or deactivation to the secondary cell group base station, to the secondary base station through an Xn interface (for example, inter-base station interface) or Sn interface (interface between a base station and an AMF or a UMF or between base stations) (p-20). The indication message may include some of the following pieces of information:
- An identifier enabling distinction of the indication message
- Configuration information or an indicator indicating that the dual connectivity or a cell group (for example, secondary cell group) or a cell is configured or released or added or deactivated or activated or resumed or changed or reconfigured or suspended (for example, configuration information or an indicator for the secondary cell group)

Upon receiving the indication message, the base station (for example, secondary base station) may read or identify configuration information or a message included in the indication message, may generate an indication identification message as a response message to the indication message, and may transmit the same to the master base station (p-25).
- An identifier having the same value as the identifier included in the indication message
- An indicator or identifier indicating successful reception of the indication message
- A response indicator indicating successful application of the indication message

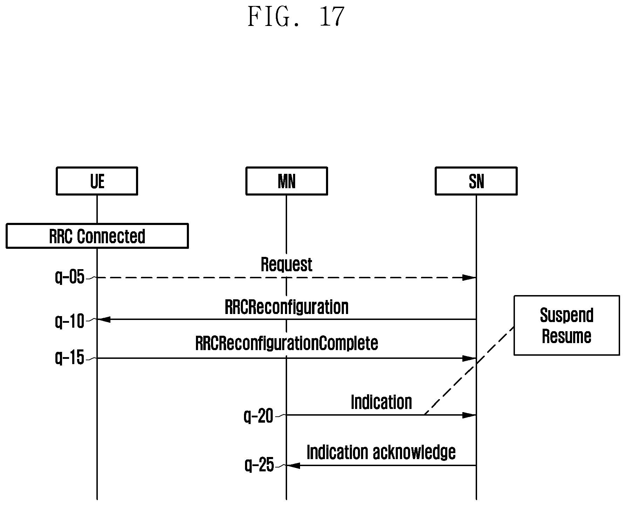

FIG. 17 illustrates a third signaling procedure in which dual connectivity is configured or released, or in which a secondary cell group configured by the dual connectivity is configured or released or activated or resumed or suspended or deactivated.

In FIG. 17, the UE may configure RRC connection to a network or a base station as in FIG. 6 of the disclosure, and may transmit or receive data with the base station (for example, master cell group, maser node (MN) or master cell group (MCG) or master cell group's cells (PCell or SCell)).

In FIG. 17, according to the configuration procedure in FIG. 6, the base station may configure an SRB (for example, SRB3) for the UE such that a control message or an RRC message can be directly transmitted or received between the UE and the secondary base station.

The base station (for example, secondary or master base station) may configure dual connectivity for the UE for a specific reason (for example, if a high data transmission rate is necessary, or at the UE's request (q-05), or if a high level of QoS requirement is to be satisfied, or the like). For example, the UE may send a request to the base station to configure or release or release or activate or deactivate or resume or suspend the dual connectivity or a cell group (for example, secondary cell group) or a cell, or may send a request to the secondary base station through the SRB3 (q-05). The request message may include a frequency (or channel) measurement result report or a cell group identifier or cell identifiers or measurement results. As another method, the secondary base station may determine whether to configure or release or add or deactivate or activate or resume or change or reconfigure or suspend the dual connectivity or a cell group (for example, secondary cell group) or a cell in consideration of the amount of downlink (or uplink) data or the amount of buffer.

The secondary base station (secondary node (SN) or secondary cell group (SCG)) may receive a frequency-specific or channel-related frequency or channel measurement report from the UE, and may determine, based on the measurement result, whether to configure or release or add or deactivate or activate or resume or change or reconfigure or suspend the dual connectivity or a cell group (for example, secondary cell group) or a cell. Alternatively, the secondary base station may determine whether to configure or release or add or deactivate or activate or resume or change or reconfigure or suspend the dual connectivity or a cell group (for example, secondary cell group) or a cell, in consideration of the amount of downlink (or uplink) data or the amount of buffer.

The secondary base station may transmit a first RRC message to the UE through SRB3 in order to configure or release or add or deactivate or activate or resume or change or reconfigure or suspend the dual connectivity or a cell group (for example, secondary cell group) or a cell (q-10). In the first RRC message, each separate new request message may be defined and used to indicate to the UE whether to configure or release or add or deactivate or activate or resume or change or reconfigure or suspend the dual connectivity or a cell group (for example, secondary cell group) or a cell. As another method, in an existing message (for example, RRCReconfiguration or RRCResume message), a new indicator may be defined to instruct (or request) to configure or release or add or deactivate or activate or resume or change or reconfigure or suspend a cell group (for example, secondary cell group) or a cell. The first RRC message may include some of the following pieces of information:
- A first RRC message identifier (for example, rrc-Transaction identifier) for distinguishing the first RRC message. Since the UE and the base station (for example, secondary base station) transmit or receive multiple RRC messages with each other, the RRC message may include identifiers for distinguishing respective RRC messages. For example, an RRC message (for example, RRCReconfiguration) transmitted by the transmitting end or an RRC message (for example, RRCReconfigurationComplete) corresponding to the RRC message (for example, RRCReconfiguration) transmitted by the receiving end or an RRC message corresponding to the RRC message transmitted by the transmitting end may include the same first RRC message identifier.
- Configuration information or indicator (for example, configuration information or indicator for the UE) for configuring or releasing or adding or deactivating or activating or resuming or changing or reconfiguring or suspending the dual connectivity or a cell group (for example, secondary cell group) or a cell
- An indicator indicating the state of a cell group (for example, activated or deactivated or suspended or resumed)
- A cell group identifier for distinguishing cell groups. The cell group identifier may be allocated by the master base station, or one of pre-promised identifiers may be allocated by the secondary base station.
- Cell group or cell configuration information
- Bearer configuration information. For example, indicator information indicating operations of a protocol layer device (for example, SDAP layer device or PDCP layer device or RLC layer device or MAC layer device) of each bearer (for example, a PDCP suspension indicator or a PDCP reestablishment indicator or a PDCP data restoration indictor or an RLC reestablishment indicator or a MAC partial reset indicator or a MAC reset indicator or an indicator triggering a new operation)
- If configuration information or indicator for configuring or adding or activating or resuming or changing or reconfiguring the dual connectivity or a cell group (for example, secondary cell group) or a cell is included, a first indicator (for example, mobilityControlInfor or ReconfigurationWithSync) may be included together. However, if configuration information or indicator for releasing or deactivating or reconfiguring or suspending the dual connectivity or a cell group (for example, secondary cell group) or a cell is included, the first indicator (for example, mobilityControlInfor or ReconfigurationWithSync) may not be included. The first indicator may be an indicator for triggering a random access procedure by the cell group or cell, or an indicator for synchronizing signals with a new cell, or an indicator indicating the UE's frequency shift, or an indicator indicating the cell group's (or cell's) change. As another method, the UE may perform PDCCH monitoring in the indicated or configured cell group or cell, and may trigger and perform a random access procedure as indicated in the PDCCH. For example, the upper layer device (for example, RRC layer device) may send an indicator for triggering the random access procedure to the lower layer device (for example, MAC layer device).
- If configuration information or indicator for configuring or adding or activating or resuming or changing or reconfiguring the dual connectivity or a cell group (for example, secondary cell group) or a cell is included, random access configuration information may be included together. However, if configuration information or indicator for releasing or deactivating or reconfiguring or suspending the dual connectivity or a cell group (for example, secondary cell group) or a cell is included, the random access configuration information may not be included. The random access configuration information may include random access transmission resource information (time or frequency transmission resource) for preamble transmission regarding the cell group or cell, or designated preamble information or the like.
- Time information indicating when the dual connectivity or a cell group (for example, secondary cell group) or a cell (PSCell or SCG SCell) is to be activated or resumed or deactivated or suspended (for example, information (for example, X) indicating timing, time unit, subframe or time slot or symbol unit), for example, if the message was received at the n^{th} time unit, time information indicating whether the cell is to be activated or resumed or deactivated or suspended at the (n+X)^{th})

Upon receiving the first RRC message q-15 through the SRB3, the UE may read and identify the first RRC message, and the UE may configure or add or change or resume or suspend or deactivate dual connectivity or a cell group (for example, secondary cell group). In addition, if the first RRC message includes a first indicator for triggering a random access procedure, the UE may trigger a random access procedure with regard to the configured or indicated cell group or cell. When the UE performs the random access procedure, if there is random access information in the RRC message, or if there is random access information that has been stored, a random access procedure (for example, contention-free random access procedure (for example, four-step random access or two-step random access)) may be performed based on random access information which has been stored, or which is received in the RRC message, or based on system information. If there is no random access information in the RRC message, the UE may perform a random access procedure (for example, contention-based random access procedure (for example, four-step random access or two-step random access)). As another method, the UE may perform PDCCH monitoring in the indicated or configured cell group or cell and may trigger and perform a random access procedure as indicated in the PDCCH. For example, the upper layer device (for example, RRC layer device) may send an indicator for triggering the random access procedure to the lower layer device (for example, MAC layer device).

The UE may receive a first RRC message q-10 or may apply received configuration information, may generate a second RRC message and transmit the same to the secondary base station through the SRB3 (q-15). The second RRC message may include some of the following pieces of information:
- A first RRC message identifier having the same value as the first RRC message identifier included in the first RRC message
- An indicator or identifier indicating successful reception of the first RRC message

Upon receiving the second RRC message, the base station (for example, secondary base station) may identify whether the same is a response message to the first RRC message, through the first identifier. The base station may identify the first RRC message and may transmit an indication message, which includes an indication of cell group configuration or addition or release or activation or resumption or suspension or deactivation to the master base station or master cell group base station, to the master base station through an Xn interface (for example, inter-base station interface) or Sn interface (interface between a base station and an AMF or a UMF or between base stations) (q-20). The indication message may include some of the following pieces of information:
- An identifier enabling distinction of the indication message
- Configuration information or an indicator indicating that dual connectivity or a cell group (for example, secondary cell group) or a cell is configured or released or added or deactivated or activated or resumed or changed or reconfigured or suspended (for example, configuration information or an indicator for the secondary cell group)

Upon receiving the indication message, the base station (for example, master base station) may read or identify configuration information or a message included in the indication message, may generate an indication identification message as a response message to the indication message, and may transmit the same to the secondary base station (q-25).
- An identifier having the same value as the identifier included in the indication message
- An indicator or identifier indicating successful reception of the indication message
- A response indicator indicating successful application of the indication message

If a message is sent to the UE to configure or indicate the cell group or cell configuration information proposed in the disclosure for the UE, and if the message includes, for example, configuration information or an indicator for configuring or adding or activating or resuming or changing or reconfiguring dual connectivity or a cell group (for example, secondary cell group) or a cell, SDAP configuration information may be included or reconfigured, or the SDAP layer device's bearer and QoS flow's mapping configuration information may be included or configured or reconfigured. However, if the message includes configuration information or an indicator for releasing or deactivating or reconfiguring or suspending dual connectivity or a cell group (for example, secondary cell group) or a cell, the SDAP configuration information may not be included or may not be reconfigured, or the SDAP layer device's bearer and QoS flow's mapping configuration information may not be included or may not be configured or may not be reconfigured, or application thereof may be suspended.

The signaling procedures proposed in the disclosure may be combined with each other, modified, and expanded to new signaling procedures.

The signaling procedures proposed in the disclosure may be expanded to multi-access technology. For example, configuration information of multiple cell groups may be configured for a UE through an RRC message, and one of multiple configured cell groups or multiple cell groups (or cells) may be activated or resumed by a PDCCH indicator or a MAC control element or an RRC message, or one or multiple cell groups may be suspended or deactivated thereby.

Next, the disclosure proposes UE operations regarding each cell (PSCell or SCG SCell) when the dual connectivity proposed in the disclosure or a cell group (for example, secondary cell group) or a cell (PSCell or SCG SCell) is activated or resumed or added or deactivated or released or suspended, or UE operations regarding each protocol layer device (for example, an SDAP layer device or a PDCP layer device or an RLC layer device or a MAC layer device or a PHY layer device).
- 1> If the UE receives configuration information or an indicator for configuring or adding or activating or resuming or changing or reconfiguring dual connectivity or a cell group (for example, secondary cell group) or a cell (for example, through DCI of the PDCCH or a MAC control element or an RRC message), the UE may perform some of the following procedures:
   ▪ 2> The upper layer device (for example, RRC layer device) may indicate the configuration information or indictor to the lower layer device (for example, PDCP layer device or RLC layer device or MAC layer device or PHY layer device).
   ▪ 2> The UE's operation regarding the PSCell: upon receiving the configuration information or indicator, the UE may maintain the PSCell activated, may activate the downlink BWP of the PSCell to be a normal BWP (for example, a first active BWP or a BWP which is not a dormant BWP) configured in the RRC message or the lastly activated BWP, and may perform a UE operation in the activated BWP. As another method, upon receiving the configuration information or indicator, the UE may maintain the PSCell activated, may reconfigure or switch the PDCCH monitoring cycle or DRX configuration cycle of the PSCell to a short cycle, based on first DRX configuration information, may perform PDCCH monitoring, and may perform the activated cell's UE operation. According to a method as described above, a UE operation regarding the PSCell may be performed to quickly receive a scheduling instruction from the cell group or cell and to start data transmission or reception. In addition, in order to more quickly receive a scheduling instruction from the cell group or cell and to start data transmission or reception, the UE may measure many or frequent channel signals, based on first channel measurement configuration information configured in the RRC message, and may quickly report the channel measurement result to the base station. If the predetermined condition is satisfied, the UE may again measure channel signals, based on second channel measurement configuration information, and may report the measurement result to the base station.
   ▪ 2> UE operations regarding the SCell of the secondary cell group: upon receiving the configuration information or indicator, the UE may activate the SCell of the secondary cell group, may activate the downlink BWP or uplink BWP to be the BWP (for example, first active BWP) configured in the RRC message, and may perform a UE operation of the activated SCell or BWP. As another method, if the UE receives the configuration information or indicator, and if there is a dormant BWP configured in the SCell of the secondary cell group, the UE may maintain the SCell activated, may activate the downlink BWP of the SCell to be the BWP (for example, first active BWP) configured in the RRC message, and may perform a UE operation in the activated BWP. Alternatively, if there is no dormant BWP configured in the SCell of the secondary cell group, the UE may switch the SCell to an activated state, may activate the downlink BWP or uplink BWP to be the BWP (for example, first active BWP) configured in the RRC message, and may perform a UE operation of the activated SCell or BWP. As another method, upon receiving the configuration information or indicator, the UE may determine to switch or activate or deactivate the state of the SCell or the BWP according to the SCell configuration information or indicator configured in the message including the configuration information or indicator, and may perform a UE operation.
   ▪ 2> UE operations of the MAC layer device regarding the secondary cell group: upon receiving the configuration information or indicator, the UE may perform an reset procedure (MAC reset) with regard to the MAC layer device (for example, configuration information configured for the MAC layer device may be reset or cleared, configured timers may be suspended or reset, or the HARQ procedure may be suspended or reset). For example, it may be considered that the timing advance timer (TAT) timer that indicates the validity of signal synchronization between the UE and the base station is suspended or expired. As another method, upon receiving the configuration information or indicator, the UE may perform a MAC partial reset process (or if the message including the configuration information or indicator includes an indicator indicating a MAC partial reset process, the MAC partial reset process may be performed). For example, the timing advance timer (TAT) timer that indicates the validity of signal synchronization between the UE and the base station may be continuously maintained, or HARQ retransmission that is being retransmitted may be continuously performed. As another method, no procedure may be performed with regard to the MAC layer device, and the current configuration may be maintained. In addition, if the upper layer device (for example, RRC layer device) indicates that a random access procedure is to be triggered, or if the TAT timer is suspended or expired, the UE may trigger the random access procedure. As another method, if the TAT timer is not suspended or has not expired, no random access procedure may be triggered or performed. This is because, if the TAT timer is being driven, signal synchronization with the secondary cell group is correct or is maintained, and an unnecessary random access procedure would thus be performed. As another method, if the base station triggered a random access procedure through a PDCCH indication, the UE may trigger the random access procedure and may configure or adjust the timing advance (TA) value or may start the TA timer. After the random access procedure is completed, the secondary cell group may be resumed or activated, and data transmission or reception may be restarted. As the random access procedure, a contention-based random access (CBRA) procedure may be performed. As another method, if the message (or previously received message) indicating activation or resumption of the cell group when the random access procedure is performed has designated random access configuration information (dedicated RACH config or dedicated preamble) configured (or included) therein, a contention-free random access (CFRA) procedure may be performed. Alternatively, if the message (or previously received message) indicating activation or resumption of the cell group has no designated random access configuration information (dedicated RACH config or dedicated preamble) configured (or included) therein, a contention-based random access (CBRA) procedure may be performed, or no random access procedure may be performed.
   ▪ 2> Operations regarding the data radio bearer (DRB) configured in the secondary cell group: upon receiving the configuration information or indicator, the UE may resume DRBs included in the secondary cell group (or an SN(SCG) terminated DRB or a DRB having a PDCP layer device configured in the SCG). For example, with regard to a split bearer having a PDCP layer device configured in the master cell group (a bearer having an RLC layer device configured in the master cell group and having another RLC layer device configured in the secondary cell group), the RRC message including the configuration information or indicator may also include an indicator (reestablishRLC) that triggers a procedure of reestablishing the RLC layer device configured in the secondary cell group, or the UE may perform a reestablishment procedure with regard to the RLC layer device configured in the secondary cell group. For example, with regard to a split bearer having a PDCP layer device configured in the secondary cell group (a bearer having an RLC layer device configured in the master cell group and having another RLC layer device configured in the secondary cell group), the RRC message including the configuration information or indicator may also include an indicator (reestablishRLC) that triggers a procedure of reestablishing the RLC layer device configured in the master cell group, or may also include an indicator that triggers a PDCP reestablishment procedure (reestablishPDCP) or a PDCP resumption procedure (PDCP resume) in the PDCP layer device configured in the secondary cell group. Alternatively, the UE may perform a reestablishment procedure with regard to the RLC layer device configured in the master cell group, or may perform a PDCP reestablishment procedure or a PDCP resumption procedure (PDCP resume) in the PDCP layer device configured in the secondary cell group. For example, with regard to bearers configured in the secondary cell group, the bearers may be resumed, or the RRC layer device may instruct the PDCP layer device to trigger a PDCP reestablishment procedure or a PDCP resumption procedure, or the PDCP layer device may perform a PDCP reestablishment procedure or a PDCP resumption procedure (PDCP resume). The UE may trigger a first PDCP resumption procedure with regard to bearers configured in the secondary cell group, or may perform the first PDCP resumption procedure in the PDCP layer device. As another method, in order to solve the security issue problem caused by transmission of different pieces of data with the same security key when the secondary cell group is activated or resumed, the UE may trigger a second PDCP resumption procedure with regard to bearers configured in the secondary cell group, or may perform the second PDCP resumption procedure in the PDCP layer device. As another method, if the upper layer device triggered a PDCP layer device resumption procedure, a first PDCP resumption procedure may be triggered and performed. If the upper layer device issued an indicator for triggering a PDCP layer device resumption procedure or activating or resuming a cell group (or cell), a second PDCP resumption procedure may be triggered and performed. As another method, in order to solve the above-mentioned security issue problem caused by transmission of different pieces of data with the same security key, when the base station issued an indicator for activating or resuming a cell group (or cell), the RRC message including the indicator for activating or resuming a cell group (or cell) may include security key configuration information (for example, sk-counter) such that a new security key is configured, and the security key is changed or updated. Alternatively, the RRC message may include a PDCP reestablishment procedure indicator to change or update the security key of bearers configured in the secondary cell group, or the UE may perform a PDCP reestablishment procedure with regard to the bearers. As another method, if security configuration information is included in the message including the instruction to resume or activate a cell group, or if a security configuration information change (or update) is indicated thereby, or if an indicator of a first PDCP resumption procedure is included therein, the UE may trigger a first PDCP resumption procedure with regard to bearers configured in the secondary cell group, or may perform a first PDCP resumption procedure in the PDCP layer device. However, if no security configuration information is included in the message including the instruction to resume or activate a cell group, or if no security configuration information change (or update) is indicated thereby, or if an indicator of a second PDCP resumption procedure is included therein, the UE may trigger a second PDCP resumption procedure with regard to bearers configured in the secondary cell group in order to solve the security issue problem caused by transmission of different pieces of data with the same security key when the secondary cell group is activated or resumed, or may perform a second PDCP resumption procedure in the PDCP layer device. The methods proposed above may also be performed when a message including an instruction to suspend or deactivate the cell group is received. In addition, the methods proposed above may be applied to SCG bearers (bearers having a PDCP layer device in the SCG, or SCG terminated bearers).
   ▪ 2> Operations regarding the signaling radio bearer (SRB) configured in the secondary cell group: the UE may receive the configuration information or indicator and may activate the PSCell. Alternatively, if the activated downlink BWP of the PSCell is a normal BWP which is not a dormant BWP, or if the activated PSCell monitors the PDCCH at a long cycle, based on first DRX configuration information, the UE may continuously maintain SRBs included in the secondary cell group (or SN(SCG) terminated SRBs or SRBs having a PDCP layer device configured in the SCG, or SRB3) (for example, the UE may continuously transmit or receive control messages with the secondary base station). Alternatively, the UE may perform a data discarding procedure for discarding old data (for example, PDCP SDU or PDCP PDU) stored in the SRBs configured in the secondary cell group (for example, the PDCP layer device is instructed to discard the data, or an RLC reestablishment procedure). As another method, upon receiving the configuration information or indicator, the UE may resume SRBs included in the secondary cell group (or SN(SCG) terminated SRBs or SRBs having a PDCP layer device configured in the SCG, or SRB3). Alternatively, the UE may perform a data discarding procedure for discarding old data (for example, PDCP SDU or PDCP PDU) stored in the SRBs configured in the secondary cell group (for example, the PDCP layer device is instructed to discard the data, or an RLC reestablishment procedure). For example, with regard to a split bearer having a PDCP layer device configured in the master cell group (a bearer having an RLC layer device configured in the master cell group and having another RLC layer device configured in the secondary cell group), the RRC message including the configuration information or indicator may also include an indicator (reestablishRLC) that triggers a procedure of reestablishing the RLC layer device configured in the secondary cell group, or the UE may perform a reestablishment procedure with regard to the RLC layer device configured in the secondary cell group. For example, with regard to a split bearer having a PDCP layer device configured in the secondary cell group (a bearer having an RLC layer device configured in the master cell group and having another RLC layer device configured in the secondary cell group), the RRC message including the configuration information or indicator may also include an indicator (reestablishRLC) that triggers a procedure of reestablishing the RLC layer device configured in the master cell group, or may also include an indicator that triggers a PDCP reestablishment procedure (reestablishPDCP) or a PDCP resumption procedure (PDCP resume) in the PDCP layer device configured in the secondary cell group. Alternatively, the UE may perform a reestablishment procedure with regard to the RLC layer device configured in the master cell group, or may perform a PDCP reestablishment procedure or a PDCP resumption procedure (PDCP resume) in the PDCP layer device configured in the secondary cell group. For example, with regard to bearers configured in the secondary cell group, the bearers may be resumed, or the RRC layer device may instruct the PDCP layer device to trigger a PDCP reestablishment procedure or a PDCP resumption procedure, or the PDCP layer device may perform a PDCP reestablishment procedure or a PDCP resumption procedure (PDCP resume). The UE may trigger a first PDCP resumption procedure with regard to bearers configured in the secondary cell group, or may perform the first PDCP resumption procedure in the PDCP layer device. As another method, in order to solve the security issue problem caused by transmission of different pieces of data with the same security key when the secondary cell group is activated or resumed, the UE may trigger a second PDCP resumption procedure with regard to bearers configured in the secondary cell group, or may perform the second PDCP resumption procedure in the PDCP layer device. As another method, if the upper layer device triggered a PDCP layer device resumption procedure, a first PDCP resumption procedure may be triggered and performed. If the upper layer device issued an indicator for triggering a PDCP layer device resumption procedure or activating or resuming a cell group (or cell), a second PDCP resumption procedure may be triggered and performed. As another method, in order to solve the above-mentioned security issue problem caused by transmission of different pieces of data with the same security key, when the base station issued an indicator for activating or resuming a cell group (or cell), the RRC message including the indicator for activating or resuming a cell group (or cell) may include security key configuration information (for example, sk-counter) such that a new security key is configured, and the security key is changed or updated. Alternatively, the RRC message may include a PDCP reestablishment procedure indicator to change or update the security key of bearers configured in the secondary cell group, or the UE may perform a PDCP reestablishment procedure with regard to the bearers. As another method, if security configuration information is included in the message including the instruction to resume or activate a cell group, or if a security configuration information change (or update) is indicated thereby, or if an indicator of a first PDCP resumption procedure is included therein, the UE may trigger a first PDCP resumption procedure with regard to bearers configured in the secondary cell group, or may perform a first PDCP resumption procedure in the PDCP layer device. However, if no security configuration information is included in the message including the instruction to resume or activate a cell group, or if no security configuration information change (or update) is indicated thereby, or if an indicator of a second PDCP resumption procedure is included therein, the UE may trigger a second PDCP resumption procedure with regard to bearers configured in the secondary cell group in order to solve the security issue problem caused by transmission of different pieces of data with the same security key when the secondary cell group is activated or resumed, or may perform a second PDCP resumption procedure in the PDCP layer device. The methods proposed above may be performed when a message including an instruction to suspend or deactivate the cell group is received. In addition, the methods proposed above may be applied to SCG bearers (bearers having a PDCP layer device in the SCG, or SCG terminated bearers).
   ▪ 2> UE operations regarding the PUCCH SCell of the secondary cell group: upon receiving the configuration information or indicator, the UE may activate the PUCCH SCell of the secondary cell group, may activate the downlink BWP or uplink BWP to be the BWP (for example, first active BWP) configured in the RRC message, and may perform a UE operation of the activated SCell or BWP. As another method, upon receiving the configuration information or indicator, if a dormant BWP is configured in the PUCCH SCell of the secondary cell group, the UE may maintain the SCell activated, may activate the downlink BWP of the SCell to be the BWP (for example, first active BWP) configured in the RRC message, and may perform a UE operation in the activated BWP. Alternatively, if there is no dormant BWP configured in the SCell of the secondary cell group, the UE may switch the SCell to an activated state, may activate the downlink BWP or uplink BWP to be the BWP (for example, first active BWP) configured in the RRC message, and may perform a UE operation of the activated SCell or BWP. As another method, upon receiving the configuration information or indicator, the UE may determine to switch or activate or deactivate the state of the SCell or the BWP according to the SCell configuration information or indicator configured in the message including the configuration information or indicator, and may perform a UE operation. As another method, upon receiving the configuration information or indicator, the UE may apply first DRX configuration information configured in the RRC message with regard to the PUCCH SCell (for example, suspend second DRX information and reconfigure the same by first DRX information), and if PDCCH monitoring can be performed, may perform a UE operation in the activated SCell.
   ▪ 2> The UE may transmit an indicator to the master cell group or secondary cell group to indicate a cell group (for example, secondary cell group) or cell was configured or added or activated or resumed or changed or reconfigured. The UE may transmit the indicator to the secondary cell group (or base station) or master cell group (or base station) by using a physical signal (for example, HARQ ACK or NACK or new transmission resource) or a MAC control element or an RRC message.
   ▪ 2> Upon receiving an indicator instructing the same to resume or activate or add a cell group (for example, secondary cell group) or a cell, the UE may trigger a PDCP state report in the PDCP layer device with regard to configured SCG bearers, or bearers connected to the SCG RLC layer device, or SCG split bearers, or MCG bearers, or MCG split bearers such that the same is reported to the base station. By transmitting the PDCP state report, data lost between the UE and the base station, or the state of window parameters can be identified, thereby synchronizing between the transmitting and receiving windows.
- 1> If the UE receives configuration information or an indicator for releasing or deactivating or reconfiguring or suspending dual connectivity or a cell group (for example, secondary cell group) or a cell (for example, through DCI of the PDCCH or a MAC control element or an RRC message), the UE may perform some of the following procedures:
   ▪ 2> The upper layer device (for example, RRC layer device) may indicate the configuration information or indictor to the lower layer device (for example, PDCP layer device or RLC layer device or MAC layer device or PHY layer device).
   ▪ 2> The UE's operation regarding the PSCell: upon receiving the configuration information or indicator, the UE may maintain the PSCell activated, may activate the downlink BWP of the PSCell to be the dormant BWP configured in the RRC message and may perform a UE operation in the dormant BWP. As another method, upon receiving the configuration information or indicator, the UE may maintain the PSCell activated, may reconfigure or switch the PDCCH monitoring cycle or DRX configuration cycle of the PSCell to a substantially long cycle, based on second DRX configuration information, may perform PDCCH monitoring, and may perform the activated cell's UE operation. As another method, upon receiving the configuration information or indicator, the UE may deactivate the PSCell and may perform a deactivated cell's UE operation. The UE's power consumption may be reduced by performing UE operations regarding the PSCell in a method as described above.
   ▪ 2> UE operations regarding the SCell of the secondary cell group: upon receiving the configuration information or indicator, the UE may deactivate the SCell of the secondary cell group, and may perform the deactivated SCell's UE operation. As another method, if the UE receives the configuration information or indicator, and if there is a dormant BWP configured in the SCell of the secondary cell group, the UE may maintain the SCell activated, may activate the downlink BWP of the SCell to be a dormant BWP, and may perform a UE operation in the dormant BWP. Alternatively, if there is no dormant BWP configured in the SCell of the secondary cell group, the UE may switch the SCell to a deactivated state, and may perform a UE operation in the deactivated cell or BWP. As another method, upon receiving the configuration information or indicator, the UE may determine to switch or activate or deactivate the state of the SCell or the BWP according to the SCell configuration information or indicator configured in the message including the configuration information or indicator, and may perform a UE operation.
   ▪ 2> UE operations of the MAC layer device regarding the secondary cell group: upon receiving the configuration information or indicator, the UE may perform a reset procedure (MAC reset) with regard to the MAC layer device (for example, configuration information configured for the MAC layer device may be reset or cleared, configured timers may be suspended or reset, or the HARQ procedure may be suspended or reset). For example, it may be considered that the timing advance timer (TAT) timer that indicates the validity of signal synchronization between the UE and the base station is suspended or expired. As another method, in order to prevent data loss due to the MAC layer device's reset procedure, the UE may perform a MAC partial reset process upon receiving the configuration information or indicator (or if the message including the configuration information or indicator includes an indicator indicating a MAC partial reset process, the MAC partial reset process may be performed). For example, the timing advance timer (TAT) timer that indicates the validity of signal synchronization between the UE and the base station may be continuously maintained, or HARQ retransmission that is being retransmitted may be continuously performed. As another method, no procedure may be performed with regard to the MAC layer device, and the current configuration may be maintained. If the TAT timer is continuously maintained, and if the TAT timer expires, the UE may perform a random access procedure even if the secondary cell group is suspended or deactivated, thereby again adjusting or configuring the timing advance (TA). When performing the random access procedure, the UE may send an indicator to the base station to indicate that the same was a random access procedure for adjusting the TA (for example, a buffer state report (MAC control element) may be included and transmitted to indicate that there is no data to transmit, or a new indicator may be introduced). Alternatively, the base station may transmit a message including an instruction to suspend or deactivate the cell group again to the UE after completing the random access procedure. Alternatively, the UE may maintain the cell group suspended or deactivated after completing the random access procedure (as another method, without the base station's instruction, the UE may autonomously maintain the cell group suspended or deactivated). As another method, if the TAT timer is continuously maintained, and if the TAT timer expires, the master cell group or secondary cell group may trigger a random access procedure (for adjusting or reconfiguring the TA) by the UE through a cell (PCell or SCell or PSCell) because the base station is driving the same TAT timer, or may transmit a message including an indicator to resume or activate the cell group to the UE.
   ▪ 2> Operations regarding the data radio bearer (DRB) configured in the secondary cell group: upon receiving the configuration information or indicator, the UE may suspend DRBs included in the secondary cell group (or an SN(SCG) terminated DRB or a DRB having a PDCP layer device configured in the SCG). For example, with regard to a split bearer having a PDCP layer device configured in the master cell group (a bearer having an RLC layer device configured in the master cell group and having another RLC layer device configured in the secondary cell group), the RRC message including the configuration information or indicator may also include an indicator (reestablishRLC) that triggers a procedure of reestablishing the RLC layer device configured in the secondary cell group, or may also include an indicator that triggers a PDCP data recovery procedure in the PDCP layer device configured in the master cell group. Alternatively, the UE may perform a reestablishment procedure with regard to the RLC layer device configured in the secondary cell group, or may perform a PDCP data recovery procedure in the PDCP layer device configured in the master cell group. For example, with regard to a split bearer having a PDCP layer device configured in the secondary cell group (a bearer having an RLC layer device configured in the master cell group and having another RLC layer device configured in the secondary cell group), the RRC message including the configuration information or indicator may also include an indicator (reestablishRLC) that triggers a procedure of reestablishing the RLC layer device configured in the master cell group. Alternatively, the RRC message may also include an indicator that triggers a PDCP reestablishment procedure (reestablishPDCP) or a PDCP suspension procedure (PDCP suspend) in the PDCP layer device configured in the secondary cell group. Alternatively, the UE may perform a reestablishment procedure with regard to the RLC layer device configured in the master cell group, or may perform a PDCP reestablishment procedure or a PDCP suspension procedure (PDCP suspend) in the PDCP layer device configured in the secondary cell group. For example, with regard to bearers configured in the secondary cell group, the bearers may be suspended, or the RRC layer device may instruct the PDCP layer device to trigger a PDCP reestablishment procedure or a PDCP suspension procedure, or the PDCP layer device may perform a PDCP reestablishment procedure or a PDCP suspension procedure (PDCP suspend). The UE may trigger a first PDCP suspension procedure with regard to bearers configured in the secondary cell group, or may perform the first PDCP suspension procedure in the PDCP layer device. As another method, in order to solve the security issue problem caused by transmission of different pieces of data with the same security key when the secondary cell group is activated or resumed, the UE may trigger a second PDCP suspension procedure with regard to bearers configured in the secondary cell group), or may perform the second PDCP suspension procedure in the PDCP layer device. As another method, if the upper layer device triggered a PDCP layer device suspension procedure, the UE may trigger and perform a first PDCP suspension procedure. If the upper layer device issued an indicator for triggering a PDCP layer device suspension procedure or deactivating or suspending a cell group (or cell), the UE may trigger and perform a second PDCP suspension procedure. As another method, if security configuration information is included in the message including the instruction to suspend or deactivate a cell group, or if a security configuration information change (or update) is indicated thereby, or if an indicator of a first PDCP suspension procedure is included therein, the UE may trigger a first PDCP suspension procedure with regard to bearers configured in the secondary cell group, or may perform a first PDCP suspension procedure in the PDCP layer device. However, if no security configuration information is included in the message including the instruction to suspend or deactivate a cell group, or if no security configuration information change (or update) is indicated thereby, or if an indicator of a second PDCP suspension procedure is included therein, the UE may trigger a second PDCP suspension procedure with regard to bearers configured in the secondary cell group in order to solve the security issue problem caused by transmission of different pieces of data with the same security key when the secondary cell group is activated or resumed, or may perform a second PDCP suspension procedure in the PDCP layer device. The methods proposed above may be performed when a message including an instruction to resume or activate the cell group is received. In addition, the methods proposed above may be applied to SCG bearers (bearers having a PDCP layer device in the SCG, or SCG terminated bearers).
   ▪ 2> Operations regarding the signaling radio bearer (SRB) configured in the secondary cell group: the UE may receive the configuration information or indicator and may activate the PSCell. Alternatively, if the activated downlink BWP of the PSCell is a normal BWP which is not a dormant BWP, or if the activated PSCell monitors the PDCCH at a long cycle, based on second DRX configuration information, the UE may continuously maintain SRBs included in the secondary cell group (or SN(SCG) terminated SRBs or SRBs having a PDCP layer device configured in the SCG, or SRB3) without suspending the same (for example, the UE may continuously transmit or receive control messages with the secondary base station). Alternatively, the UE may perform a data discarding procedure for discarding old data (for example, PDCP SDU or PDCP PDU) stored in the SRBs configured in the secondary cell group (for example, the PDCP layer device is instructed to discard the data, or an RLC reestablishment procedure). As another method, upon receiving the configuration information or indicator, the UE may suspend SRBs included in the secondary cell group (or SN(SCG) terminated SRBs or SRBs having a PDCP layer device configured in the SCG, or SRB3). Alternatively, the UE may perform a data discarding procedure for discarding old data (for example, PDCP SDU or PDCP PDU) stored in the SRBs configured in the secondary cell group (for example, the PDCP layer device is instructed to discard the data, or an RLC reestablishment procedure). For example, with regard to a split SRB bearer having a PDCP layer device configured in the master cell group (a bearer having an RLC layer device configured in the master cell group and having another RLC layer device configured in the secondary cell group), the RRC message including the configuration information or indicator may also include an indicator (reestablishRLC) that triggers a procedure of reestablishing the RLC layer device configured in the secondary cell group, or may also include an indicator that triggers a PDCP data recovery procedure in the PDCP layer device configured in the master cell group. Alternatively, the UE may perform a reestablishment procedure with regard to the RLC layer device configured in the secondary cell group, or may perform a PDCP data recovery procedure in the PDCP layer device configured in the master cell group. For example, with regard to a split bearer having a PDCP layer device configured in the secondary cell group (a bearer having an RLC layer device configured in the master cell group and having another RLC layer device configured in the secondary cell group), the RRC message including the configuration information or indicator may also include an indicator (reestablishRLC) that triggers a procedure of reestablishing the RLC layer device configured in the master cell group, or may also include an indicator that triggers a PDCP reestablishment procedure (reestablishPDCP) or a PDCP suspension procedure (PDCP suspend) in the PDCP layer device configured in the secondary cell group. Alternatively, the UE may perform a reestablishment procedure with regard to the RLC layer device configured in the master cell group, or may perform a PDCP reestablishment procedure or a PDCP suspension procedure (PDCP suspend) in the PDCP layer device configured in the secondary cell group. For example, with regard to bearers configured in the secondary cell group, the bearers may be suspended, or the RRC layer device may instruct the PDCP layer device to trigger a PDCP reestablishment procedure or a PDCP suspension procedure, or the PDCP layer device may perform a PDCP reestablishment procedure or a PDCP suspension procedure (PDCP suspend). The UE may trigger a first PDCP suspension procedure with regard to bearers configured in the secondary cell group, or may perform the first PDCP suspension procedure in the PDCP layer device. As another method, in order to solve the security issue problem caused by transmission of different pieces of data with the same security key when the secondary cell group is activated or resumed, the UE may trigger a second PDCP suspension procedure with regard to bearers configured in the secondary cell group, or may perform the second PDCP suspension procedure in the PDCP layer device. As another method, if the upper layer device triggered a PDCP layer device suspension procedure, the UE may trigger and perform a first PDCP suspension procedure. If the upper layer device issued an indicator for triggering a PDCP layer device suspension procedure or deactivating or suspending a cell group (or cell), the UE may trigger and perform a second PDCP suspension procedure. As another method, if security configuration information is included in the message including the instruction to suspend or deactivate a cell group, or if a security configuration information change (or update) is indicated thereby, or if an indicator of a first PDCP suspension procedure is included therein, the UE may trigger a first PDCP suspension procedure with regard to bearers configured in the secondary cell group, or may perform a first PDCP suspension procedure in the PDCP layer device. However, if no security configuration information is included in the message including the instruction to suspend or deactivate a cell group, or if no security configuration information change (or update) is indicated thereby, or if an indicator of a second PDCP suspension procedure is included therein, the UE may trigger a second PDCP suspension procedure with regard to bearers configured in the secondary cell group in order to solve the security issue problem caused by transmission of different pieces of data with the same security key when the secondary cell group is activated or resumed, or may perform a second PDCP suspension procedure in the PDCP layer device. The methods proposed above may be performed when a message including an instruction to resume or activate the cell group is received. In addition, the methods proposed above may be applied to SCG bearers (bearers having a PDCP layer device in the SCG, or SCG terminated bearers).
   ■ 2> UE operations regarding the PUCCH SCell of the secondary cell group: upon receiving the configuration information or indicator, the UE may deactivate the PUCCH SCell of the secondary cell group, and may perform a UE operation of the deactivated SCell. As another method, upon receiving the configuration information or indicator, if a dormant BWP is configured in the PUCCH SCell of the secondary cell group, the UE may maintain the SCell activated, may activate the downlink BWP of the SCell to be a dormant BWP, and may perform a UE operation in the dormant BWP. Alternatively, if there is no dormant BWP configured in the PUCCH SCell of the secondary cell group, the UE may switch the SCell to a deactivated state and may perform a UE operation in the deactivated cell or BWP. As another method, upon receiving the configuration information or indicator, the UE may determine to switch or activate or deactivate the state of the SCell or the BWP according to the SCell configuration information or indicator configured in the message including the configuration information or indicator, and may perform a UE operation. As another method, upon receiving the configuration information or indicator, the UE may apply second DRX configuration information configured in the RRC message with regard to the PUCCH SCell, and if PDCCH monitoring can be performed based on a long cycle, may perform a UE operation in the activated SCell.
   ■ 2> The UE may transmit an indicator to the master cell group or secondary cell group to indicate a cell group (for example, secondary cell group) or a cell was suspended or deactivated or released or changed. The UE may transmit the indicator to the secondary cell group (or base station) or master cell group (or base station) by using a physical signal (for example, HARQ ACK or NACK or new transmission resource) or a MAC control element or an RRC message.
   ■ 2> Upon receiving an indicator instructing the same to suspend or deactivated or release a cell group (for example, secondary cell group) or a cell, the UE may trigger a PDCP state report in the PDCP layer device with regard to configured SCG bearers, or bearers connected to the SCG RLC layer device, or SCG split bearers, or MCG bearers, or MCG split bearers such that the same is reported to the base station. This is because, by transmitting the PDCP state report, data lost between the UE and the base station, or the state of window parameters can be identified, thereby synchronizing between the transmitting and receiving windows.

The partial reset of the MAC layer device proposed in the disclosure may include one or multiple UE operations among the following procedures:
- The UE performs an operation of flushing remaining HARQ processes (that is, normal HARQ processes or HARQ processes for system information) other than the HARQ process for MBS, among HARQ processes configured for the serving cell, and performs an operation of emptying (flushing) or clearing (flushing) or resetting (flushing) the HARQ process for MBS after handover completion or after an RRC state mode transition (to an RRC deactivated mode or RRC idle mode), or omitting the flushing.
- In the case of flushing operation, at a timepoint at which the target base station becomes able to receive the MBS service after handover completion or after an RRC state mode transition (to an RRC deactivated mode or RRC idle mode), or at a timepoint at which G-RNTI monitoring starts, data of the HARQ process related to the MBS may be flushed. Alternatively, data may be continuously received through the G-RNTI until the handover is completed, or until the RRC state mode transition (to an RRC deactivated mode or RRC idle mode) is completed. In the case of handover, an operation of monitoring the -C-RNTI in the target allocated through the RRC message may be performed by the target base station. As another method, data may be continuously received through the G-RNTI even before the random access is completed from the target base station.
- If there is a random access procedure that is being performed, it may be suspended.
- Specifically, if there is a configured or indicated preamble identifier or preamble configuration information or PRACH (random access configuration-related information) configuration information, it may be discarded.
- If there is a temporary cell identifier (C-RNTI), it may be cleared.
- The buffer for messages transmission may be flushed.
- All new data indicators regarding the HARQ process regarding the uplink may be configure to be 0.
- If the uplink DRX retransmission timer is being driven with regard to the uplink, it may be suspended.
- If all uplink HARQ-related timers are being driven, they may be suspended.

When the MAC layer device reset procedure is performed, or if no partial reset procedure indicator of the MAC layer device is included or indicated or performed, the UE may perform the entire MAC layer device's reset procedure, and the UE may thus flush all normal HARQ processes or HARQ processes for MBS or HARQ processes for system information.

The first PDCP suspension (or resumption) procedure proposed in the disclosure may include one or multiple UE operations among the following procedures:
- The UE's transmission PDCP layer device may reset a transmission window parameter or configure the same as an initial value or may discard stored data (for example, PDCP PDU or PDCU SDU). As another method, only the PDCP PDU may be discarded to prevent data loss. This procedure is for preventing transmission or retransmission of old data when the secondary cell group is later activated or resumed.
- If a reordering timer (t-reordering) (timer for ordering data in ascending order with reference to the PDCP serial number or COUNT value) is being driven, the UE's reception PDCP layer device may suspend or reset the timer. Alternatively, a header decompression procedure may be performed with regard to stored data (for example, PDCP SDU), and the data may be delivered to the upper layer device in the ascending order of COUNT value. The UE's reception PDCP layer device may reset a reception window parameter or configure the same as an initial value.

The second PDCP suspension (or resumption) procedure proposed in the disclosure may include one or multiple UE operations among the following procedures:
- The UE's transmission PDCP layer device may not reset the transmission window parameter or configure the same as an initial value, but may maintain the parameter value intact. The reason the parameter value (for example, COUNT value) is maintained is to solve the security issue problem caused by transmission of different pieces of data with the same security key (for example, COUNT value) when the secondary cell group is activated or resumed. The UE's transmission PDCP layer device may discard stored data (for example, PDCP PDU or PDCU SDU). As another method, only the PDCP PDU may be discarded to prevent data loss. This procedure is for preventing transmission or retransmission of old data when the secondary cell group is later activated or resumed. As another method, the transmission PDCP layer device may store the value of transmission window parameters and may reset the window parameters (for example, configure the same as 0). The reset window parameters may be used if security configuration information is changed when the cell group is resumed or activated, or if security configuration information is included in a message indicating resumption or activation of the cell group, or if a security key change is indicated. Alternatively, the stored value of transmission window parameters may be restored, or the value of transmission window parameters may be configured or reconfigured or reset with the stored value of transmission window parameters and then used if security configuration information is not changed when the cell group is resumed or activated, or if no security configuration information is included in a message indicating resumption or activation of the cell group, or if no security key change is indicated.
- If a reordering timer (t-reordering) (timer for ordering data in ascending order with reference to the PDCP serial number or COUNT value) is being driven, the UE's reception PDCP layer device may suspend or reset the reordering timer. Alternatively, the UE may perform a header decompression procedure with regard to stored data (for example, PDCP SDU) and may deliver the data to the upper layer device in the ascending order of COUNT value. The UE's reception PDCP layer device may not reset the reception window parameter or configure the same as an initial value, but may maintain the parameter value intact. The reason the parameter value (for example, COUNT value) is maintained is to solve the security issue problem caused by transmission of different pieces of data with the same security key (for example, COUNT value) when the secondary cell group is activated or resumed. As another method, the UE may configure or update the RX_NEXT window parameter (a parameter indicating the COUNT value of data expected to be received next) to the value of RX_DELIV window parameter (a parameter indicating the COUNT value of next data of data delivered to the upper layer device) or to the COUNT value of data initially received by the UE such that, when the secondary cell group is activated or resumed, or when data is received, the reordering timer is not instantly trigger even through there is no COUNT value or PDCP serial number gap. As another method, if a reordering timer value is configured in the message, or if an indicator is received from the upper layer device, the RX_REORD window parameter (a parameter indicating the COUNT value of next data of data that triggered the reordering timer) may be configured or updated to the value of RX_NEXT window parameter, or the reordering timer may be suspended or restart. As another method, the reception PDCP layer device may store the value of reception window parameters and may reset the window parameters (for example, configure the same as 0). The reset window parameters may be used if security configuration information is changed when the cell group is resumed or activated, or if security configuration information is included in a message indicating resumption or activation of the cell group, or if a security key change is indicated. Alternatively, the stored value of reception window parameters may be restored, or the value of reception window parameters may be configured or reconfigured or reset with the stored value of reception window parameters and then used if security configuration information is not changed when the cell group is resumed or activated, or if no security configuration information is included in a message indicating resumption or activation of the cell group, or if no security key change is indicated.

When the UE receives configuration information or an indicator for releasing or deactivating or reconfiguring or suspending dual connectivity or a cell group (for example, secondary cell group) or a cell (for example, through DCI of the PDCCH or a MAC control element or an RRC message), when the UE performs the proposed UE operations, and if data to be transmitted by the UE through the uplink occurs or is generated, the UE may transmit a scheduling request (SR) or a MAC control element (or an indicator or the amount of buffer or a buffer state report) to the master base station or secondary base station in a transmission resource of a PUCCH configured in the RRC message, thereby requesting an uplink transmission resource or requesting that dual connectivity or a cell group (for example, secondary cell group) or a cell be configured or added or activated or resumed or changed or reconfigured. As another method, when the UE receives configuration information or an indicator for releasing or deactivating or reconfiguring or suspending dual connectivity or a cell group (for example, secondary cell group) or a cell (for example, through DCI of the PDCCH or a MAC control element or an RRC message), when the UE performs the proposed UE operations, and if data to be transmitted by the UE through the uplink occurs or is generated, the UE may generate an RRC message and transmit the same to the master base station or secondary base station, thereby requesting an uplink transmission resource or requesting that dual connectivity or a cell group (for example, secondary cell group) or a cell be configured or added or activated or resumed or changed or reconfigured.

The procedures proposed in the disclosure may be expanded to multi-access technology. For example, configuration information of multiple cell groups may be configured for a UE through an RRC message, and one of multiple configured cell groups or multiple cell groups (or cells) may be activated or resumed by a PDCCH indicator or a MAC control element or an RRC message, or one or multiple cell groups may be suspended or deactivated thereby.

Hereinafter, the disclosure proposes UE operations for reactivating or resuming a cell group or a cell if uplink data regarding a secondary cell group is generated or occurs in the UE (or in bearers belonging to the secondary cell group) while the secondary cell group or the secondary cell group's PSCell remains deactivated or suspended by means of the cell group or cell deactivation or suspension procedure proposed in the disclosure.

If a cell group or a cell is deactivated or suspended as proposed in the disclosure, the UE cannot transmit or receive data, and if uplink data is generated in the UE's secondary cell group (or in bearers belonging to the secondary cell group), the cell group or cell needs to be reactivated or resumed. The procedure in which the UE requests the base station (master base station or secondary base station) to reactivate or resume the cell group or cell may be performed by one of the following methods or by a method expanded by combining or applying the following methods:
- First method: the UE composes a message (for example, RRC message) for requesting reactivation or resumption of the secondary cell group or cell and transmits the same to the master base station. Upon receiving the message, the master base station may request the secondary base station to perform a resumption procedure similarly to the first signaling procedure in FIG. 15, may receive a response, may compose a message (for example, RRC message) indicating reactivation or resumption of the secondary cell group, and may transmit the same to the UE. As another method, the master base station may compose a message (for example, RRC message) indicating reactivation or resumption of the secondary cell group similarly to the second signaling procedure in FIG. 16, and transmit the same to the UE, and may indicate activation or resumption to the secondary base station. As another method, the UE may compose a message (for example, RRC message) requesting reactivation or resumption of the secondary cell group or cell similarly to the third signaling procedure in FIG. 17, and may transmit the same to the secondary base station through the SRB3. The secondary base station may compose a message (for example, RRC message) indicating reactivation or resumption of the secondary cell group, may transmit the same to the UE, and may indicate activation or resumption to the master base station.
- Second method: the UE composes a message (for example, MAC control element) for requesting reactivation or resumption of the secondary cell group or cell and transmits the same to the master base station. Upon receiving the message, the master base station may request the secondary base station perform a resumption procedure similarly to the first signaling procedure in FIG. 15 proposed in the disclosure, may receive a response, may compose a message (for example, RRC message or MAC control element) indicating reactivation or resumption of the secondary cell group, and may transmit the same to the UE. As another method, the master base station may compose a message (for example, RRC message or MAC control element) indicating reactivation or resumption of the secondary cell group similarly to the second signaling procedure in FIG. 16, may transmit the same to the UE, and may indicate activation or resumption to the secondary base station. As another method, the UE may compose a message (for example, RRC message) requesting reactivation or resumption of the secondary cell group or cell similarly to the third signaling procedure in FIG. 17, and may transmit the same to the secondary base station through the SRB3. The secondary base station may compose a message (for example, RRC message or MAC control element) indicating reactivation or resumption of the secondary cell group, may transmit the same to the UE, and may indicate activation or resumption to the master base station. When the MAC control element is used to request or indicate cell group activation or resumption, the MAC control element may be newly defined and designed. As another method, a new field (or indicator) may be defined in an existing MAC control element (for example, buffer state report), or a new value (field value or identifier value) may be defined therein, thereby indicating the same.
- Third method: the UE composes a message (for example, a physical signal of a PHY layer device) for requesting reactivation or resumption of the secondary cell group or cell and transmits the same to the master base station. Upon receiving the message, the master base station may request the secondary base station perform a resumption procedure similarly to the first signaling procedure in FIG. 15 proposed in the disclosure, may receive a response, may compose a message (for example, an RRC message or a physical signal of a PHY layer device) indicating reactivation or resumption of the secondary cell group, and may transmit the same to the UE. As another method, the master base station may compose a message (for example, an RRC message or a physical signal of a PHY layer device) indicating reactivation or resumption of the secondary cell group similarly to the second signaling procedure in FIG. 16, may transmit the same to the UE, and may indicate activation or resumption to the secondary base station. As another method, the UE may compose a message (for example, a physical signal of a PHY layer device) requesting reactivation or resumption of the secondary cell group or cell similarly to the third signaling procedure in FIG. 17, and may transmit the same to the secondary base station through the SRB3. The secondary base station may compose a message (for example, an RRC message or a physical signal of a PHY layer device) indicating reactivation or resumption of the secondary cell group, may transmit the same to the UE, and may indicate activation or resumption to the master base station. When the physical signal of a PHY layer device is used to request or indicate cell group activation or resumption, the physical signal of a PHY layer device may be defined and designed by a new transmission resource (for example, a new scheduling request (SR) transmission resource for the secondary cell group (for example, a PUCCH transmission resource of the PCell or PSCell) or a new field of DCI (a PDCCH transmission resource transmitted from the PSCell or from the PCell) of the PDCCH). As another method, a new field (or indicator) may be defined in an existing physical signal of a PHY layer device (for example, a scheduling request (SR) transmission resource (for example, a PUCCH transmission resource of the PCell or PSCell) or a field of DCI (a PDCCH transmission resource transmitted from the PSCell or from the PCell) of the PDCCH), or a new value (field value or identifier value) may be defined therein, thereby indicating the same. As another method, when the UE applies second DRX configuration information to perform PDCCH monitoring with regard to the PSCell of the secondary cell group with a long cycle, or when the UE's secondary cell group is in a deactivated state or suspended state, and if the PSCell triggers a random access procedure by the UE through DCI of the PDCCH, the UE may interpret the indication as activation or resumption of the secondary cell group. As used herein, a physical transmission resource may refer to a transmission resource for random access. The UE may perform a random access procedure if uplink data regarding the secondary cell group occurs while the secondary cell group remains suspended or deactivated. As another method, if uplink data regarding the secondary cell group occurs while the secondary cell group remains suspended or deactivated, and if there is a configured SR transmission resource (or if a TA timer is being driven), the UE may transmit an SR transmission resource to the master or secondary cell group. If there is no configured SR transmission resource (or if the TA timer expired), the UE may perform a random access procedure. As the random access procedure, a contention-based random access (CBRA) procedure may be performed. As another method, if the message (or previously received message) indicating suspension or deactivation of the cell group has designated random access configuration information (dedicated RACH config or dedicated preamble) configured (or included) therein, the UE may perform a contention-free random access (CFRA) procedure. Alternatively, if the message (or previously received message) indicating deactivation or suspension of the cell group has no designated random access configuration information (dedicated RACH config or dedicated preamble) configured (or included) therein, the UE may perform a contention-based random access (CBRA) procedure. The UE may transmit an indicator (for example, buffer state report (MAC control element)) to the base station to inform that uplink data occurred during the random access procedure or after completion of the random access procedure. Upon receiving the indicator, or if the random access procedure is completed, the base station (for example, secondary or master base station) may transmit a message to the UE to indicate secondary cell group resumption or activation such that the secondary cell group is resumed or activated, and may again transmit or receive data.

When the UE activates or resumes a cell group (for example, secondary cell group) or a cell (for example, PSCell) by a PDCCH or a MAC control element or an RRC message's indicator as proposed in the disclosure, activation or resumption of the cell group or cell may be completed at a first timepoint. The first timepoint may be configured by the RRC message as proposed in the disclosure. For example, the RRC message may include time information indicating when dual connectivity or a cell group (for example, secondary cell group) or a cell (PSCell or SCG SCell) is to be activated or resumed or deactivated or suspended (for example, information (for example, X) indicating timing, time unit, subframe or time slot or symbol unit). For example, time information may be configured such that, if the PDCCH or MAC control element or RRC message indicating that a cell group (for example, secondary cell group) or a cell (for example, PSCell) is to be activated or resumed or deactivated or suspended was received at the n^{th} time unit, the cell group or cell is to be completely activated or resumed or deactivated or suspended at the (n+X)^{th}). As another method, the time information (for example, X) may not be configured by the base station, but a pre-promised and defined fixed value may be used. As another example, time information may be configured such that, if random access is started (or preamble is transmitted) at the n^{th} time unit after receiving the PDCCH or MAC control element or RRC message indicating that a cell group (for example, secondary cell group) or a cell (for example, PSCell) is to be activated or resumed or deactivated or suspended, or if the random access is successfully completed, the cell group or cell is to be completely activated or resumed or deactivated or suspended at the (n+X)^{th}. As another method, the time information (for example, X) may not be configured by the base station, but a pre-promised and defined fixed value may be used. When the cell group or cell is completely activated or suspended or deactivated or resumed, the UE may perform UE operations proposed in the disclosure according to each cell or BWP's state (for example, activated or dormant or deactivated). In addition, when the cell group or cell is completely activated or resumed, the UE's DRX operation may be started or restarted, or when the cell group or cell is completely deactivated or suspended, the UE's DRX operation may be suspended or deactivated.

In addition, when the UE activates a cell (for example, PSCell or SCell) of a cell group (for example, master cell group or secondary cell group) as instructed by a MAC control element as proposed in the disclosure, activation of the cell may be completed at a second timepoint. The second timepoint may be configured by an RRC message as proposed in the disclosure. For example, the RRC message may include time information indicating when carrier aggregation or dual connectivity or a cell group (for example, master cell group or secondary cell group) or a cell (MCG PSCell or SCG SCell) is to be activated or deactivated (for example, information (for example, X) indicating timing, time unit, subframe or time slot or symbol unit). For example, time information may be configured such that, if the UE received a MAC control element indicating that a cell (for example, SCell) is to be activated or deactivated at the n^{th} time unit, the cell is to be completely activated or deactivated at the (n+X)^{th}. As another method, the time information (for example, X) may not be configured by the base station, but a pre-promised and defined fixed value may be used. As another example, time information may be configured such that, if random access is started (or preamble is transmitted) at the n^{th} time unit after receiving a MAC control element indicating that a cell (for example, SCell or PSCell) is to be activated or deactivated, or if the random access is successfully completed, the cell is to be completely activated or deactivated at the (n+X)^{th}. As another method, the time information (for example, X) may not be configured by the base station, but a pre-promised and defined fixed value may be used. When the cell group or cell is completely activated or suspended or deactivated or resumed, the UE may perform UE operations proposed in the disclosure according to each cell or BWP's state (for example, activated or dormant or deactivated). In addition, when the cell group or cell is completely activated or resumed, the UE's DRX operation may be started or restarted, or when the cell group or cell is completely deactivated or suspended, the UE's DRX operation may be suspended or deactivated.

In addition, when the UE activates a cell (for example, PSCell or SCell) of a cell group (for example, master cell group or secondary cell group) as instructed by an RRC message as proposed in the disclosure, activation of the cell may be completed at a third timepoint. The third timepoint may be configured by an RRC message as proposed in the disclosure. For example, the RRC message may include time information indicating when carrier aggregation or dual connectivity or a cell group (for example, master cell group or secondary cell group) or a cell (MCG PSCell or SCG SCell or PSCell) is to be activated or deactivated (for example, information (for example, X) indicating timing, time unit, subframe or time slot or symbol unit). For example, time information may be configured such that, if the UE received an RRC message indicating that a cell (for example, SCell) is to be activated or deactivated at the n^{th} time unit, the cell is to be completely activated or deactivated at the (n+X)^{th}. As another method, the time information (for example, X) may not be configured by the base station, but a pre-promised and defined fixed value may be used. As another example, time information may be configured such that, if random access is started (or preamble is transmitted) at the n^{th} time unit after receiving an RRC message indicating that a cell (for example, SCell or PSCell) is to be activated or deactivated, or if the random access is successfully completed, the cell is to be completely activated or deactivated at the (n+X)^{th}. As another method, the time information (for example, X) may not be configured by the base station, but a pre-promised and defined fixed value may be used. The X may be configured or promised with reference to the slot number, or may be configured or promised with reference to the shortest slot length among configured PCells or PSCells or SCells. When the cell group or cell is completely activated or suspended or deactivated or resumed, the UE may perform UE operations proposed in the disclosure according to each cell or BWP's state (for example, activated or dormant or deactivated). In addition, when the cell group or cell is completely activated or resumed, the UE's DRX operation may be started or restarted, or when the cell group or cell is completely deactivated or suspended, the UE's DRX operation may be suspended or deactivated.

The concept of a cell group proposed in the disclosure may be expanded to a sub-cell group. For example, a first cell group and a second cell group are configured such that dual connectivity is configured for a UE in the disclosure, and are applied as a master cell group and a secondary cell group such that dual connectivity is configured, and data can be transmitted or received with two base stations. However, if the concept of a cell group is expanded to a sub-cell group, multiple sub-cell groups may be configured in the cell group for a UE connected to one base station, or a sub-cell group identifier may be configured for each sub-cell group. Although the UE transmits or receives data with regard to one base station, an activation or suspension or resumption or deactivation procedure may be expanded and applied by means of the PDCCH or MAC control element or RRC message proposed in the disclosure with regard to different frequencies or cells for each sub-cell group. For example, when the UE communicates with one base station through multiple frequencies or cells, the base station may configure multiple sub-cell groups for the UE with regard to multiple frequencies or cells of the base station corresponding to the cell group (master cell group) such that the UE can apply carrier aggregation, and may define fields indicating the sub-cell groups, respectively, in the PDCCH or MAC control element or RRC message such that respective fields indicate activation or deactivation or suspension or resumption of respective sub-cell groups. The UE may apply an activation or suspension or resumption or deactivation procedure by means of the PDCCH or MAC control element or RRC message proposed in the disclosure with regard to different frequencies or cells for each sub-cell group. As another method, the proposed sub-cell group may be implemented by introducing a downlink or uplink logical channel restriction regarding each cell. For example, configuration information may be included in the RRC message and configured for the UE so as to restrict logical channels belonging to one cell group such that data can be transmitted or received with regard to a specific frequency or cell only. Logical channels (for example, logical channel identifiers) may be mapped to respective cells or frequencies as above and configured such that the logical channels are grouped and are considered like the proposed sub-cell group, and fields indicating the cells, respectively, may be defined in the PDCCH or MAC control element or RRC message such that respective fields indicate activation or deactivation or suspension or resumption of respective cells.

In addition, if the master cell group detects a radio link failure when a UE for which dual connectivity is configured in the disclosure transmits or receives data with the master or secondary cell group, or when the secondary cell group is suspended or deactivated, the UE may report the radio link failure to the secondary cell group or to the master cell group through the secondary cell group. For example, the UE may compose an RRC message for reporting the radio link failure and may transmit the same through a split SRB1 or SRB3, thereby reporting the same. If the split SRB1 is configured, the radio link failure may always be reported through the split SRB1. As another method, if the master cell group detects a radio link failure when the UE for which dual connectivity is configured transmits or receives data with the master or secondary cell group, or when the secondary cell group is suspended or deactivated, the UE may announce a radio link failure and may perform an RRC connection re-establishment procedure.

In addition, if the secondary cell group detects a radio link failure when the UE for which dual connectivity is configured in the disclosure transmits or receives data with the master or secondary cell group, or when the secondary cell group is suspended or deactivated, the UE may report the radio link failure to the master cell group or to the secondary cell group through the master cell group. For example, the UE may compose an RRC message for reporting the radio link failure and may transmit the same through a split SRB1 or SRB3, thereby reporting the same. If the SRB1 or split SRB 1 is configured, the radio link failure may always be reported through the split SRB 1.

The description that the secondary cell group is released when dual connectivity is configured for the UE in the disclosure means that the connection (data transmission or reception) to the secondary cell group is released, or configuration information of the secondary cell group (or bearer configuration information or protocol layer device configuration information (PHY or MAC or RLC or PDCP or SDAP layer device)) is discarded or cleared. In contrast, the description that the secondary cell group is suspended or deactivated means that the connection (data transmission or reception) to the secondary cell group is released or suspended, but the configuration information of the secondary cell group (or bearer configuration information or protocol layer device configuration information (PHY or MAC or RLC or PDCP or SDAP layer device)) is maintained or suspended or stored, or connection to the secondary cell group can be quickly resumed or activated later, based on the stored configuration information of the secondary cell group.

In the cell group configuration information or cell (SpCell (Pcell or PSCell) or SCell) configuration information, or in previously configured cell group configuration information or cell (SpCell (Pcell or PSCell) or SCell) configuration information, or in a message (for example, RRC message or RRCReconfiguration or MAC control element or downlink control information (DCI) of PDCCH) that instructs cell group or cell (SpCell (Pcell or PSCell) or SCell) activation or resumption, first channel measurement configuration information may be configured and included therein for quick cell group or cell (SpCell (Pcell or PSCell) or SCell) activation. In order to quickly activate the cell group, the first channel measurement configuration information may include configuration information, such as the cycle regarding a frequent channel measurement signal (for example, radio resource or temporary reference signal (TRS)) such that the base station can temporarily transmit a channel measurement signal a lot or often such that channel measurement can be quickly performed in the cell in configuration information of a cell (for example, PCell or PSCell or SCell) of the cell group, or transmitted transmission resource information (frequency or time transmission resource used to transmit the frequent channel measurement signal) or an interval or the number of times (the number of times the frequent channel measurement signal is transmitted) or a timer value (the time during which the frequent channel measurement signal is transmitted) or a time interval (interval in which the frequent channel measurement signal is transmitted (for example, offset of time unit (slot or subframe or symbol or the like))) or a transmission resource or cycle or interval or timing or offset by which the UE needs to report the measurement result. The first channel measurement configuration information may simply configure a short reporting cycle (or transmission resource) at which the UE can report the channel measurement result, or may configure a transmission resource for channel measurement such that the base station can transmit many channel measurement signals (or transmission resources or (for example, radio resources or temporary reference signals (TRS))) a lot or frequently in order for the base station to support the UE's quick channel measurement or many signal measurements.

In addition, the message (for example, RRC message or RRCReconfiguration or MAC control element or downlink control information (DCI) of PDCCH) that instructs activation or resumption of the cell group or cell (SpCell (Pcell or PSCell) or SCell) may include second channel measurement signal information for measuring signals of the cell (PSCell or PCell or SCell) of the cell group. The second channel measurement signal information may include normal channel measurement configuration information such as the transmission resource or cycle or time interval or number of channel measurement signals, or the transmission resource or cycle or time interval for channel measurement reporting.

In the disclosure, the UE may apply the UE's first channel measurement configuration information or second channel measurement configuration information according to the following conditions so as to measure channels, and may report measurement results to the base station.
1> If the UE received a message (for example, PDCCH indicator or MAC control element or RRC message) instructing the UE to activate (or resume) a cell (PCell or PSCell or SCell) or a cell group
   ■ 2> If the UE is configured first channel measurement configuration information
      ◆ 3> According to the first channel measurement configuration information of the UE, the UE may identify that the base station will transmit many channel measurement signals frequently, and may temporarily measure many or frequent channel measurement signals according to the first channel measurement configuration information (for example, until a time interval (for example, subframe or slot or symbol) configured in the first channel measurement signal information, or during a promised (or predetermined) a time interval, or during a time (for example, while a timer is driven), or until a first condition is satisfied). In addition, the UE may report the measured channel measurement according to the cycle or transmission resource configured in the first channel measurement configuration information until the time interval (for example, subframe or slot or symbol) configured in the first channel measurement configuration information, or during a promised (or predetermined) time interval, or during a time (for example, while a timer is driven), or until a first condition is satisfied. Therefore, as the UE becomes able to quickly measure frequent channel measurement signals and quickly report the measurement result, the UE can quickly activate (or resume) the cell (PCell or SCell or PSCell) or cell group, or can quickly receive indicated scheduling information. If second channel measurement configuration information is configured for the UE after the time interval (for example, subframe or slot or symbol) configured in the first channel measurement configuration information, or after the promised (or predetermined) time interval, or after the time (for example, if the timer expires), or after the first condition is satisfied, the UE may suspend or release application of the first channel measurement configuration information and may measure channel measurement signals according to the second channel measurement configuration information. For example, the UE may fall back from the first channel measurement configuration information to the second channel measurement configuration information, or may apply second channel information instead of the first channel measurement configuration information. In addition, the UE may report measured channel measurement results according to the cycle or transmission resource configured in the second channel measurement configuration information. If the second channel measurement configuration information has not been configured, no channel measurement may be performed.
   ■ 2> Otherwise (if the UE is not configured first channel measurement configuration information)
      ◆ 3> If the UE is configured second channel measurement configuration information, the UE may measure channel measurement signals according to the second channel measurement configuration information. In addition, the UE may report measured channel measurement results according to the cycle or transmission resource configured in the second channel measurement configuration information. If the second channel measurement configuration information has not been configured, no channel measurement may be performed.

The first condition of the disclosure may be one of the following conditions. The disclosure proposes, as the first condition, following efficient conditions configured such that the base station does not need to transmit unnecessarily many transmission resources or frequent transmission resources when the first condition is used to activate a cell or activate a cell group or resume the same or when an RRC inactive mode UE resumes connection in an RRC connection resumption procedure. For example, until one of the following conditions is satisfied, first channel measurement configuration information may be applied, and a channel measurement procedure or a channel measurement reporting procedure may be performed.
- It may be determined that the first condition is satisfied when the UE has successfully completed a random access procedure in the cell (for example, PCell or SCell or PSCell) or in a cell (for example, PSCell or SCell) of a cell group, or when the first uplink transmission resource is allocated after successfully completing the random access procedure, or when an uplink transmission resource is initially indicated to the UE.
   ■ For example, more specifically, if the UE performs a contention-free random access (CFRA) procedure (for example, if a predesignated preamble or UE cell identifier (for example, C-RNTI) has been allocated)
      ◆ It may be determined that the first condition is satisfied because the random access procedure may be deemed to be successfully completed when the UE transmits a predesignated preamble to the cell and then receives a random access response (RAR) message, or when a PDCCH indication is received in response to the RAR. As another method, it may be determined that the first condition is satisfied when an uplink transmission resource is initially received after the RAR is received.
   ■ If the UE performs a contention-based random access (CBRA) procedure (for example, if no predesignated preamble or UE cell identifier (for example, C-RNTI) has been allocated)
      ◆ It may be determined that the first condition is satisfied because the UE may be deemed to have successfully completed the procedure of random access to a target base station if the UE transmits a preamble (for example, an arbitrary preamble) to the cell and then receives a random access response (RAR) message, if message 3 (for example, handover completion message) is transmitted by using an uplink transmission resource allocated or included or indicated in the RAR message, and if a MAC CE indicating that contention has been resolved (contention resolution MAC CE) is received from the target base station through message 4, or if an uplink transmission resource is received through a PDCCH corresponding to the UE's C-RNTI. As another method, if the uplink transmission resource allocated in the RAR message has a sufficient size such that, after transmitting message 3, the UE can additionally transmit uplink data, it may be determined that an uplink transmission resource has been initially received, and it may be determined that the first condition is satisfied. That is, it may be determined that an uplink transmission resource is initially received when the RAR is received, and it may be determined that the first condition is satisfied.
- 1> If the UE performs a two-step random access procedure configured or indicated therefor
- 1> Or if no two-step random access procedure is configured or indicated in the message, but if the UE supports the two-step random access procedure by UE capability, and if the cell's system information supports the two-step random access procedure, and if the system information broadcasts information for the two-step random access procedure (for example, a random access resource, or a threshold for determining whether or not to perform the two-step random access, or the like), or if the UE receives the system information and performs the two-step random access procedure with regard to the cell because the signal strength is better or larger than the threshold broadcast in the system information,
   ■ 2> The UE may determine that the first condition is satisfied when the two-step random access procedure is successfully completed.
   ■ 2> The two-step random access procedure may be specifically performed by one of a contention-based random access (CBRA) method or a contention-free random access (CFRA) method.
      ◆ 3> If the UE performed the CBRA-based two-step random access procedure,
         • 4> The UE may transmit a preamble in a transmission resource for two-step random access (for example, a PRACH occasion or a transmission resource configured by the base station through an RRC message or a transmission resource broadcast in system information), and may transmit data (for example, MsgA MAC PDU) in a transmission resource (for example, PUSCH occasion) for data transmission. The data may include a MAC control element (C-RNTI MAC CE) including a UE identifier (C-RNTI) or an RRC message (RRCReconfigurationComplete or handover completion message).
         • 4> The UE may monitor a PDCCH scrambled by a UE identifier (C-RNTI) or a first identifier (MsgB-RNTI) derived by the time or frequency at which the preamble is transmitted.
         • 4> If the UE receives the PDCCH scrambled by the UE identifier or if a downlink transmission resource is allocated in the PDCCH or if a MAC control element (timing advance command MAC CE) for timing adjustment is received in the downlink transmission resource
            • 5> The UE may determine that the two-step random access procedure is successfully completed, and may determine that the first condition is satisfied.
         • 4> If the UE receives a PDCCH scrambled by the first identifier (MsgB-RNTI), or if a downlink transmission resource is allocated in the PDCCH, or if a fallback random access response regarding a preamble transmitted by the UE in the downlink transmission resource is received (for example, if the base station received the preamble but received no MsgA, the fallback RAR instructs the MsgA to be transmitted through another transmission resource)
            • 5> The UE may transmit data (MsgA MAC PDU) by using the transmission resource indicated in the fallback RAR.
            • 5> The UE may monitor the PDCCH scrambled by the UE identifier (C-RNTI).
            • 5> If the UE receives the PDCCH scrambled by the UE identifier, or if an uplink transmission resource is allocated in the PDCCH, the UE may determine that the two-step random access procedure is successfully completed, and may determine that the first condition is satisfied.
      ◆ 3> If the UE performed the CFRA-based two-step random access procedure,
         • 4> The UE may transmit a preamble in a transmission resource for two-step random access (for example, a PRACH occasion or a transmission resource configured by the base station through an RRC message), and may transmit data (for example, MsgA MAC PDU) in a transmission resource (for example, PUSCH occasion) for data transmission. The data may include a MAC control element (C-RNTI MAC CE) including a UE identifier (C-RNTI) or an RRC message (RRCReconfigurationComplete or handover completion message).
         • 4> The UE may monitor a PDCCH scrambled by a UE identifier (C-RNTI) or a first identifier (MsgB-RNTI) derived by the time or frequency at which the preamble is transmitted.
         • 4> If the UE receives the PDCCH scrambled by the UE identifier or if a downlink transmission resource is allocated in the PDCCH or if a MAC control element (timing advance command MAC CE) for timing adjustment is received in the downlink transmission resource
            • 5> The UE may determine that the two-step random access procedure is successfully completed, and may determine that the first condition is satisfied.
         • 4> If the UE receives a PDCCH scrambled by the first identifier (MsgB-RNTI), or if a downlink transmission resource is allocated in the PDCCH, or if a fallback random access response regarding a preamble transmitted by the UE in the downlink transmission resource is received (that is, if the base station received the preamble but received no MsgA, the fallback RAR instructs the MsgA to be transmitted through another transmission resource)
            • 5> The UE may determine that the two-step random access procedure is successfully completed, and may determine that the first condition is satisfied.
            • 5> The UE may transmit data (MsgA MAC PDU) by using the transmission resource indicated in the fallback RAR.
- 1> It may be determined that the first condition is satisfied when the random access procedure is started, or when a preamble for the random access procedure is transmitted.
- 1> As another method, if the message configures or instructs a two-step random access procedure for the UE, the UE may determine that the first condition is satisfied. For example, in the above case, the UE may determine that the first condition is satisfied before the two-step random access procedure is started.
- 1> As another method, if the message configures or instructs a two-step random access procedure for the UE, and if the transmission resource (PUSCH) configured for data transmission in the two-step random access procedure is larger than a first threshold, or if the RRC message includes a configuration value (timing advance value) for timing adjustment, the UE may determine that the first condition is satisfied. The first threshold may be configured by the base station through an RRC message (for example, RRCReconfiguration), or may be broadcast in system information, or may be configured by the size of data held by the UE to be transmitted. For example, in the above case, the UE may determine that the first condition is satisfied before the two-step random access procedure is started. As another method, if the RRC message includes a configuration value (timing advance value) for timing adjustment, or if a two-step random access procedure is configured therein, the UE may instantly transmit data in a configured transmission resource (for example, a transmission resource configured by the RRC message or a transmission resource indicated by the PDCCH of the target base station after the PDCCH is monitored by the UE) without transmitting a preamble. Therefore, in the above case, the UE may determine that the first condition is satisfied before the two-step random access procedure is started, or when or before the data is transmitted. As another method, if the RRC message includes a configuration value (timing advance value) for timing adjustment, or if a two-step random access procedure is configured therein, the UE may instantly transmit data in a configured transmission resource (PUSCH) (for example, a transmission resource configured by the RRC message or a transmission resource indicated by the PDCCH of the target base station after the PDCCH is monitored by the UE) without transmitting a preamble. In the above case, if a configured transmission resource (PUSCH) (for example, a transmission resource configured by the RRC message or a transmission resource indicated by the PDCCH of the target base station after the PDCCH is monitored by the UE) is larger than a first threshold, or if the RRC message includes a configuration value (timing advance value) for timing adjustment, the UE may determine that the first condition is satisfied before the two-step random access procedure is started, or when or before the data is transmitted.
- 1> It may be considered that the first condition is satisfied if an RRC inactive mode UE transmits an RRCResumeRequest and then receives an RRCResume message (or RRCSetup message) in response thereto.
- 1> In the case of expiration of a timer which indicates a period of time for channel measurement when the UE performs channel measurement, based on first channel measurement configuration information configured in the RRC message,
- 1> In the case of elapse (or expiration) of a time interval which indicates a period of time for channel measurement when the UE performs channel measurement, based on first channel measurement configuration information configured in the RRC message, or if the time interval is all used (or applied),
- 1> If signals for channel measurement when the UE performs channel measurement, based on first channel measurement configuration information configured in the RRC message, are all measured (or completed) a configured number of times, or if signals are received the configured number of times
- 1> If channel measurement is completed (if channel measurement expires), based on the configuration information, when the UE performs channel measurement, based on first channel measurement configuration information configured in the RRC message, or if channel measurement reporting is completed (or if channel measurement reporting expires)

If the first condition is satisfied, the upper layer device (for example, RRC layer device) may indicate to the lower layer device (for example, PDCP layer device or RLC layer device or MAC layer device or PHY layer device) through an indicator, or the lower layer device (for example, PDCP layer device or RLC layer device or MAC layer device or PHY layer device) may indicate to the upper layer device (for example, RRC layer device).

The methods for configuring or applying first channel measurement configuration information proposed in the disclosure may be expanded and configured and used when a cell group (for example, PSCell) is activated or resumed, or when an SCell is activated, or when RRC connection is resumed in an RRC inactive mode.

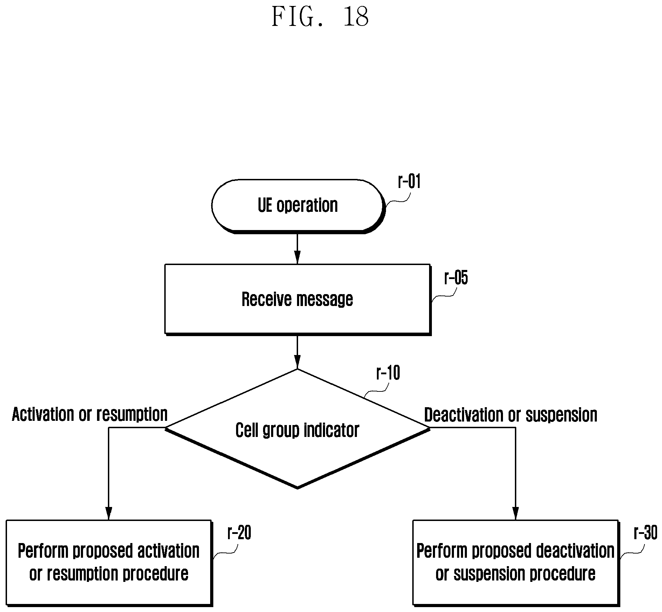

FIG. 18 illustrates operations r-01 of a UE proposed in the disclosure.

In FIG. 18, the UE may receive a message (for example, DCI of PDCCH or MAC control element or RRC message) from a base station (r-05). If the message includes cell group configuration information or a cell group state or a cell group indicator, the UE may identify whether configuration or addition or activation or resumption of a cell group is indicated or release or deactivation or suspension of the cell group is indicated (r-10). If configuration or addition or activation or resumption of the cell group is indicated, the cell group configuration or addition or activation or resumption procedure proposed in the disclosure may be performed (r-20). If release or deactivation or suspension of the cell group is indicated, the cell group release or deactivation or suspension procedure proposed in the disclosure may be performed (r-30).

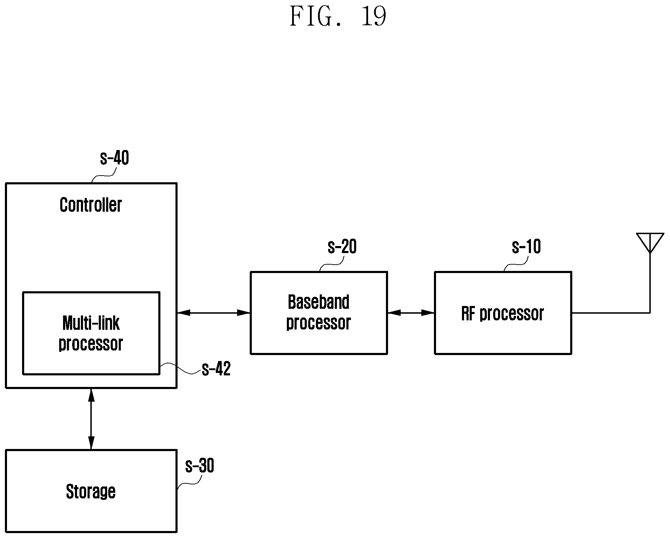

FIG. 19 illustrates the structure of a UE to which an embodiment of the disclosure is applicable.

Referring to FIG. 19, the UE includes a radio frequency (RF) processing unit s-10, a baseband processing unit s-20, a storage unit s- 30, and a controller s-40.

The RF processing unit s-10 performs functions for transmitting/receiving signals through a radio channel, such as signal band conversion and amplification. That is, the RF processing unit s-10 up-converts a baseband signal provided from the baseband processing unit s-20 to an RF band signal, transmits the same through an antenna, and down-converts an RF band signal received through the antenna. For example, the RF processing unit s-10 may include a transmission filter, a reception filter, an amplifier, a mixer, an oscillator, a digital-to-analog converter (DAC), and an analog-to-digital converter (ADC), and the like. Although only one antenna is illustrated in FIG. 1R, the UE may include multiple antennas. In addition, the RF processing unit s-10 may include multiple RF chains. Furthermore, the RF processing unit s-10 may perform beamforming. For the beamforming, the RF processing unit s-10 may adjust the phase and magnitude of signals transmitted/received through multiple antennas or antenna elements, respectively. In addition, the RF processing unit s-10 may perform MIMO, and may receive multiple layers when performing a MIMO operation. The RF processing unit s-10 may appropriately select multiple antennas or antenna elements under the control of the controller so as to perform received beam sweeping, or may adjust the direction and beam width of received beams such that received beams are coordinated with transmitted beams.

The baseband processing unit s-20 performs functions of conversion between baseband signals and bitstrings according to the system's physical layer specifications. For example, during data transmission, the baseband processing unit s-20 encodes and modulates a transmitted bitstring to generate complex symbols. In addition, during data reception, the baseband processing unit s-20 demodulates and decodes a baseband signal provided from the RF processing unit s-10 to restore a received bitstring. For example, when following the orthogonal frequency division multiplexing (OFDM) scheme, during data transmission, the baseband processing unit s-20 encodes and modulates a transmitted bitstring to generate complex symbols, maps the complex symbols to subcarriers, and configures OFDM symbols through inverse fast Fourier transform (IFFT) operation and cyclic prefix (CP) insertion. In addition, during data reception, the baseband processing unit s-20 splits a baseband signal provided from the RF processing unit s-10 at the OFDM symbol level, restores signals mapped to subcarriers through fast Fourier transform (FFT) operation, and restores a received bitstring through demodulation and decoding.

The baseband processing unit s-20 and the RF processing unit s-10 transmit and receive signals as described above. Therefore, the baseband processing unit s-20 and the RF processing unit s-10 may be referred to as a transmitter, a receiver, a transceiver, or a communication unit. Furthermore, at least one of the baseband processing unit s-20 and the RF processing unit s-10 may include multiple communication modules to support multiple different radio access technologies. In addition, at least one of the baseband processing unit s-20 and the RF processing unit s-10 may include different communication modules to process signals in different frequency bands. For example, the different radio access technologies may include LTE networks, NR networks, and the like. In addition, the different frequency bands may include a super high frequency (SHF) (for example, 2.5GHz, 5Ghz) bands and millimeter wave (for example, 60GHz) bands.

The storage unit s-30 stores data such as basic programs for operation of the UE, application programs, configuration information. The storage unit s-30 provides the stored data at the request of the controller s-40.

The controller s-40 controls overall operations of the UE. For example, the controller s-40 transmits/receives signals through the baseband processing unit s-20 and the RF processing unit s-10. In addition, the controller s-40 records and reads data in the storage unit s-40. To this end, the controller s-40 may include at least one processor. For example, the controller s-40 may include a communication processor (CP) configured to perform control for communication, and an application processor (AP) configured to control upper layers such as application programs.

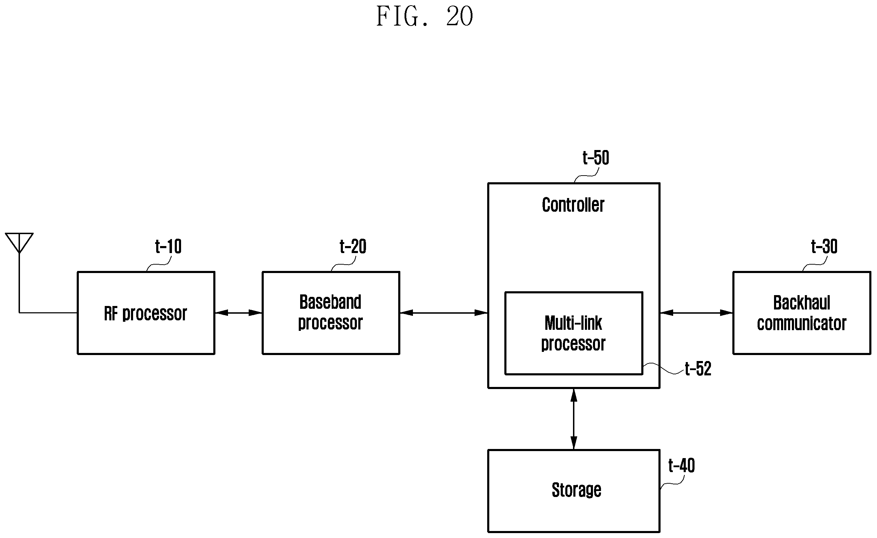

FIG. 20 illustrates the block configuration of a base station (for example, TRP) in a wireless communication system to which an embodiment of the disclosure is applicable.

Referring to FIG. 20, the base station includes an RF processing unit t-10, a baseband processing unit t-20, a backhaul communication unit t-30, a storage unit t-40, and a controller t-50.

The RF processing unit t-10 performs functions for transmitting/receiving signals through a radio channel, such as signal band conversion and amplification. That is, the RF processing unit t-10 up-converts a baseband signal provided from the baseband processing unit t-20 to an RF band signal, transmits the same through an antenna, and down-converts an RF band signal received through the antenna. For example, the RF processing unit t-10 may include a transmission filter, a reception filter, an amplifier, a mixer, an oscillator, a DAC, and an ADC. Although only one antenna is illustrated in FIG. 20, the first access node may include multiple antennas. In addition, the RF processing unit t-10 may include multiple RF chains. Furthermore, the RF processing unit t-10 may perform beamforming. For the beamforming, the RF processing unit t-10 may adjust the phase and magnitude of signals transmitted/received through multiple antennas or antenna elements, respectively. The RF processing unit may transmit one or more layers to perform a downward MIMO operation.

The baseband processing unit t-20 performs functions of conversion between baseband signals and bitstrings according to the physical layer specifications of first radio access technology. For example, during data transmission, the baseband processing unit t-20 encodes and modulates a transmitted bitstring to generate complex symbols. In addition, during data reception, the baseband processing unit t-20 demodulates and decodes a baseband signal provided from the RF processing unit t-10 to restore a received bitstring. For example, when following the OFDM scheme, during data transmission, the baseband processing unit t-20 encodes and modulates a transmitted bitstring to generate complex symbols, maps the complex symbols to subcarriers, and configures OFDM symbols through IFFT operation and CP insertion. In addition, during data reception, the baseband processing unit t-20 splits a baseband signal provided from the RF processing unit t-10 at the OFDM symbol level, restores signals mapped to subcarriers through FFT operation, and restores a received bitstring through demodulation and decoding. The baseband processing unit t-20 and the RF processing unit t-10 transmit and receive signals as described above. Therefore, the baseband processing unit t-20 and the RF processing unit t-10 may be referred to as a transmitter, a receiver, a transceiver, or a communication unit.

The backhaul communication unit t-30 provides an interface for communicating with other nodes in the network.

The storage unitts-40 stores data such as basic programs for operation of the base station, application programs, configuration information. Particularly, the storage unit t-40 may store regarding a bearer allocated to a connected UE, a measurement result reported from the connected UE, and the like. In addition, the storage unit t-40 may store information serving as a reference to determine whether to provide multi-connection to a UE or to suspend the same. In addition, the storage unit t-40 provides the stored data at the request of the controller t-50.

The controller t-50 controls overall operations of the main base station. For example, the controller t-50 transmits/receives signals through the baseband processing unit t-20 and the RF processing unit t-10 or through the backhaul communication unit t-30. In addition, the controller t-50 records and reads data in the storage unit t-40. To this end, the controller t-50 may include at least one processor.

Methods disclosed in the claims and/or methods according to the embodiments described in the specification of the disclosure may be implemented by hardware, software, or a combination of hardware and software.

When the methods are implemented by software, a computer-readable storage medium for storing one or more programs(software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Furthermore, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Furthermore, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least a part of the computer program product (e.g., a downloadable app) may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Furthermore, the above respective embodiments may be employed in combination, as necessary. For example, one embodiment of the disclosure may be partially combined with any other embodiment to operate a base station and a terminal. In addition, the embodiments of the disclosure may be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method of a UE in a wireless communication system, the method comprising:
receiving, from a base station, a MAC CE for indicating activation or deactivation of at least one secondary cell (SCell), a first SCell being configured a temporary reference signal (TRS) for a fast activation;
identifying that an activation of the first SCell is indicated, based on the MAC CE; and
activating the first SCell without using the TRS in case that the first SCell is in a deactivated state before receiving the MAC CE.

2. The method of claim 1, further comprising:
identifying that a deactivation of a second SCell is indicated, based on the MAC CE; and
deactivating the second SCell, based on the MAC CE.

3. The method of claim 1, comprising:
identifying that an activation of a third SCell is indicated, based on the MAC CE, the TRS not being configured with regard to the third SCell; and
activating the third SCell regardless of the TRS in case that the third SCell is in a deactivated state before receiving the MAC CE.

4. The method of claim 1, further comprising:
transmitting, to the base station, capability information indicating whether fast activation is supported with regard to a specific SCell.

5. A method of a base station in a wireless communication system, the method comprising:
receiving, from a UE, capability information indicating whether a fast activation is supported with regard to a specific SCell;
transmitting, based on the capability information, configuration information of a TRS for a fast activation with regard to a first SCell to the UE; and
transmitting a MAC CE for indicating activation or deactivation of at least one secondary cell (SCell) to the UE,
wherein the first SCell is activated without using the TRS in case of identifying that an activation of the first SCell is indicated, based on the MAC CE, by the UE, and in case that the first SCell is in a deactivated state before receiving the MAC CE.

6. The method of claim 5, wherein, in case of identifying that a deactivation of a second SCell is indicated, based on the MAC CE, by the UE, the second SCell is deactivated, based on the MAC CE.

7. The method of claim 5, wherein, in case of identifying that an activation of a third SCell is indicated, based on the MAC CE, by the UE, the third SCell not being configured the TRS, the third SCell is activated regardless of the TRS in case that the third SCell is in a deactivated state before receiving the MAC CE.

8. A UE in a wireless communication system, the UE comprising:
a transceiver; and
a controller configured to receive a MAC CE for indicating activation or deactivation of at least one secondary cell (SCell) from a base station through the transceiver, a first SCell being configured a TRS for a fast activation, identify that an activation of the first SCell is indicated, based on the MAC CE, and control the first SCell to be activated without using the TRS in case that the first SCell is in a deactivated state before receiving the MAC CE.

9. The UE of claim 8, wherein the controller is configured to identify that a deactivation of a second SCell is indicated, based on the MAC CE, , and control the second SCell to be deactivated, based on the MAC CE.

10. The UE of claim 8, wherein the controller is configured to identify that an activation of a third SCell is indicated, based on the MAC CE, , the TRS not being configured with regard to the third SCell, and control the third SCell to be activated regardless of the TRS in case that the third SCell is in a deactivated state before receiving the MAC CE.

11. The UE of claim 8, wherein the controller is configured to control capability information indicating whether a fast activation is supported with regard to a specific SCell to be transmitted to the base station through the transceiver.

12. A base station in a wireless communication system, the base station comprising:
a transceiver; and
a controller configured to receive capability information indicating whether a fast activation is supported with regard to a specific SCell from a UE through the transceiver, transmit, based on the capability information, configuration information of a TRS for a fast activation with regard to a first SCell to the UE, and control a MAC CE for indicating activation or deactivation of at least one secondary cell (SCell) to be transmitted to the UE,
wherein the first SCell is activated without using the TRS in case of identifying that an activation of the first SCell is indicated, based on the MAC CE, by the UE, and in case that the first SCell is in a deactivated state before receiving the MAC CE.

13. The base station of claim 12, wherein, in case of identifying that a deactivation of a second SCell is indicated, based on the MAC CE, by the UE, the second SCell is deactivated, based on the MAC CE.

14. The base station of claim 12, wherein, in case of identifying that an activation of a third SCell is indicated, based on the MAC CE, by the UE, the third SCell not being configured the TRS, the third SCell is activated regardless of the TRS in case that the third SCell is in a deactivated state before receiving the MAC CE.
